# EUROPEAN PATENT SPECIFICATION

(11) **EP 1 864 819 B1**
(45) Date of publication and mention of the grant of the patent: **21.10.2015**
(21) Application number: 07011141.4
(22) Date of filing: 06.06.2007
(51) Int. Cl.: B41J 3/407, B41J 11/66, B41J 11/70, B41J 3/50, G06K 1/12

(54) **Tag-label producing apparatus**
Vorrichtung zum Erzeugen von Etikettenbeschriftungen
Appareil de production d'étiquettes

(30) Priority: 07.06.2006 JP 2006158994; 12.06.2006 JP 2006162724; 12.06.2006 JP 2006162725
(43) Date of publication of application: 12.12.2007
(73) Proprietor: Brother Kogyo Kabushiki Kaisha, Nagoya-shi, Aichi-ken 467-8561 (JP)
(72) Inventor: Ito, Akira, Mizuho-ku Nagoya shi Aichi 467-8561 (JP); Ohta, Kiyoichi, Mizuho-ku Nagoya shi Aichi 467-8561 (JP); Nagae, Tsuyoshi, Mizuho-ku Nagoya shi Aichi 467-8561 (JP); Yamada, Shiro, Mizuho-ku Nagoya shi Aichi 467-8561 (JP)
(74) Representative: Hofer, Dorothea

(56) References cited:
- WO-A1-2005/102717
- JP-A- 2005 141 407

## Description

### TECHNICAL FIELD

The present invention relates to a tag-label producing apparatus according to the preamble of claim 1, claim 16 and claim 28. Such an apparatus is known from the document JP 2005 141 407.

### BACKGROUND ART

A label producing apparatus is known in which a label medium roll around which a print-receiving tape is wound is stored in a cartridge, desired characters are printed while the print-receiving tape is being fed out of the label medium roll so as to be discharged in the label state. In this label producing apparatus, predetermined print is carried out on the print-receiving tape while the print-receiving tape is being fed out of the label medium roll and the printed print-receiving tape and a tape to be bonded thereto are bonded together so as to produce a label.

On the other hand, RFID (Radio Frequency Identification) systems for transmitting/receiving information contactlessly (an electromagnetic coupling method using a coil, an electromagnetic induction method, an electric wave method or the like) with an RFID circuit element for storing information are known.

A tag-label producing apparatus for producing an RFID label in which the RFID circuit element is inserted in the label has been already proposed. Such a tag-label producing apparatus as described in JP,A,2005-141407 or JP,A,2006-99502 is known.

In the prior art described in JP,A,2005-141407, while a band-state tag tape (base tape) on which RFID circuit elements provided with an IC circuit part and a tag antenna (antenna portion) are disposed with a predetermined interval is fed out of a tag tape roll (first roll), tag print (print information) corresponding to information transmission/reception contents, which will be described later, is printed by a printing portion (thermal head) on the print-receiving tape (cover film) fed out of a print-receiving tape roll (second roll). Then, after the printed print-receiving tape and the tag tape are bonded together to form a tag-label tape, transmission/reception of predetermined information (RFID tag information) corresponding to the tag print is performed with the IC circuit part by an apparatus antenna. After that, the tag-label tape for which printing and information transmission/reception have been finished is cut off (at the label rear end) to a predetermined length by a cutting means (cutter), and the RFID label is completed.

In the prior art described in JP,A,2006-99502, while a band-state tag tape (base tape) on which RFID circuit elements provided with an IC circuit part and an antenna are disposed with a predetermined interval is fed out of a tag tape roll (first roll), print corresponding to information transmission/reception contents, which will be described later, is printed by a printing portion (thermal head) on the print-receiving tape (cover film) fed out of a print-receiving tape roll (second roll). Then, after the printed print-receiving tape and the tag tape are bonded together to form a tag-label tape, transmission/reception of predetermined information (RFID tag information) corresponding to the tag print is performed with the IC circuit part by a communicating portion. After that, the tag-label tape for which printing and information transmission/reception have been finished is cut off (at the label rear end) to a predetermined length by a cutting means (cutter), and the RFID label is completed.

### DISCLOSURE OF THE INVENTION

### Problem to be Solved by the Invention

In the prior art described in JP,A,2005-141407, since operation is performed in the order of tag printing by a printing portion, information transmission/reception by an apparatus antenna, and cutting of a tag-label tape by a cutter at a label rear end, arrangement is made in the order of the printing portion -> a cutting means -> the apparatus antenna along the tape feeding direction. Therefore, when the production of the precedent RFID label is completed and the rear end thereof is cut off by the cutter, the tip end of the subsequent RFID label located at the cutting portion has already passed the position of the printing portion. Thus, even if the subsequent production of the RFID label is started and the tag print corresponding to the transmission/reception contents is started, at least a section from the cutting portion to the print start position becomes a non-print section (margin area), which is not effectively utilized as a print area but wasted.

On the other hand, diversified applications are in demand with recent expansion of use of the RFID label, and there is an emerging need that labels should be produced while changing the printing states in many ways. However, with the prior art described in JP,A,2006-99502, since the RFID circuit elements are arranged with a predetermined equal interval on the tag tape, the length of the produced RFID label is fixedly determined. Therefore, if the number of characters to be printed is small, a margin portion other than the print-receiving portion gets larger than the label length, and this margin is not utilized as a surplus portion, which is wasteful.

As mentioned above, in any of the above prior arts, the margin portion is not effectively utilized but wasted.

A first object of the present invention is to provide a tag-label producing apparatus which can effectively utilize a margin portion on which print is not carried out.

A second object of the present invention is to provide a tag-label producing apparatus which can effectively utilize a portion other than an area for tag print corresponding to transmission/reception contents without wasting it as a margin.

A third object of the present invention is to provide a tag-label producing apparatus which can effectively utilize a surplus portion of a tag tape without wasting it.

### Means for Solving the Problem.

In order to achieve the above first object, a first invention is a tag-label producing apparatus according to claim 1.

By which, the margin portion can be effectively utilized at the time of tag-label production.

An alternative solution is defined in claim 16.

At a result, the portion other than the first print area on which the tag print corresponding to the transmission/reception contents can be effectively utilized without wasting it as a margin and can be utilized for various applications.

In order to achieve the first and third objects, a third alternative solution is defined in claim 28.

Label production is not immediately started by each operation input by an operator but the label is produced after the label length information of the producing operation signal is allocated according to the allocated state. As a result, if a surplus portion is generated in the tag tape after the label length information of the RFID label is allocated for producing the RFID label, at least one piece of label length information of the ordinary label can be allocated to the surplus length portion. As a result, the surplus portion other than the portion to be used for producing the RFID label in the tag tape is not wasted but can be effectively utilized for producing the ordinary label.

Preferred embodiments are defined in the dependent claims.

### BRIEF DESCRIPTION OF THE DRAWING

Fig. 1 is a system block diagram illustrating an RFID tag manufacturing system having the tag-label producing apparatus of a first embodiment of the present invention.
Fig. 2 is a perspective view illustrating the entire structure of the tag-label producing apparatus shown in Fig. 1.
Fig. 3 is a perspective view illustrating a structure of an internal unit inside the tag-label producing apparatus.
Fig. 4 is a plan view illustrating the structure of the internal unit shown in Fig. 3.
Fig. 5 is an enlarged plan view schematically illustrating a detailed structure of a cartridge.
Fig. 6 is a functional block diagram illustrating a control system of the tag-label producing apparatus.
Fig. 7 is a functional block diagram illustrating a functional configuration of an RFID circuit element.
Figs. 8A and 8B are views illustrating an example of an appearance of an RFID label T.
Figs. 9A and 9B are diagrams obtained by rotating cross sectional diagrams of the IXA-IXA' section and IXB-IXB' section in Fig. 8A counterclockwise by 90 degrees.
Figs. 10A to 10N are explanatory views illustrating a positional relation among a tag-label tape, a loop antenna, a mark sensor, a half cut unit, a cutting mechanism, and a print head.
Fig. 11 is a view illustrating an example of the RFID label.
Fig. 12 is a view illustrating an example of the RFID label without rear print area.
Figs. 13A to 13N are explanatory views illustrating a positional relation among a tag-label tape, a loop antenna, a mark sensor, a half cut unit, a cutting mechanism, and a print head.
Fig. 14 is a view illustrating an example of the RFID label.
Fig. 15 is a flowchart illustrating a control procedure performed by a control circuit.
Fig. 16 is a flowchart illustrating a detailed procedure of Step S2100.
Fig. 17 is a flowchart illustrating a detailed procedure of Step S2200.
Fig. 18 is a flowchart illustrating a detailed procedure of Step S2300.
Fig. 19 is a flowchart illustrating a detailed procedure of Step S2400.
Fig. 20 is a flowchart illustrating a detailed procedure of Step S2500.
Fig. 21 is a plan view illustrating a detailed structure of a cartridge of a variation in which tape bonding is not carried out.
Fig. 22 is a plan view illustrating a detailed structure of a cartridge of another variation in which tape bonding is not carried out.
Fig. 23 is a system block diagram illustrating an RFID tag manufacturing system to which the tag-label producing apparatus of the second embodiment of the present invention is applied.
Fig. 24 is a conceptual block diagram illustrating a detailed structure of the tag-label producing apparatus.
Fig. 25 is an explanatory view for illustrating the detailed structure of the cartridge.
Fig. 26 is a functional block diagram illustrating a detailed function of a radio frequency circuit.
Fig. 27 is a top view illustrating an appearance of the RFID label and an ordinary label.
Figs. 28A and 28B are cross sectional views by the XXVIIIA-XXVIIIA' section and the XXVIIIB-XXVIIIB' section in Fig. 27.
Figs. 29A to 29C are explanatory views of production of an ordinary label using a surplus portion after production of the RFID label.
Figs. 30A to 30C are views illustrating an example of display contents in JOB allocation displayed on a display of a terminal.
Figs. 31A and 31B are views illustrating an example of display contents in JOB allocation displayed on a display of the terminal.
Fig. 32 is a view illustrating an example of display contents for notifying completion of printing displayed on a display of the terminal.
Fig. 33 is a view illustrating an example of display contents for selection of forced printing displayed on a display of the terminal.
Fig. 34 is a flowchart illustrating a control procedure performed by a CPU of the terminal.
Fig. 35 is a flowchart illustrating a control procedure executed by the CPU of the terminal.
Fig. 36 is a flowchart illustrating a control procedure executed by a control circuit of the tag-label producing apparatus.
Fig. 37 is a flowchart illustrating a detailed procedure of Step S2230 shown in Fig. 36.
Fig. 38 is a flowchart illustrating a detailed procedure of Step S2230 shown in Fig. 36.
Fig. 39 is a flowchart illustrating a detailed procedure of Step S2230 shown in Fig. 36.
Fig. 40 is a flowchart illustrating a detailed procedure of Step S2500 shown in Figs. 37, 38, and 39.
Fig. 41 is a flowchart illustrating a detailed procedure of Step S2270 shown in Fig. 40.
Fig. 42 is a conceptual block diagram illustrating a detailed structure of a tag-label producing apparatus of a standalone type of a variation.
Figs. 43A to 43C are views illustrating an example of display contents displayed on a display of the terminal in the mode by JOB in a third embodiment of the present invention.
Fig. 44 is a view illustrating an example of display contents displayed on a display of the terminal in the mode by JOB.
Fig. 45 is a flowchart illustrating a control procedure executed by a CPU of the terminal.
Fig. 46 is a flowchart illustrating a detailed procedure of Step S2230 shown in Fig. 36 executed by a control circuit of the tag-label producing apparatus according to the third embodiment of the present invention.

### BEST MODE FOR CARRYING OUT THE INVENTION

Embodiments of the present invention will be described referring to the attached drawings.

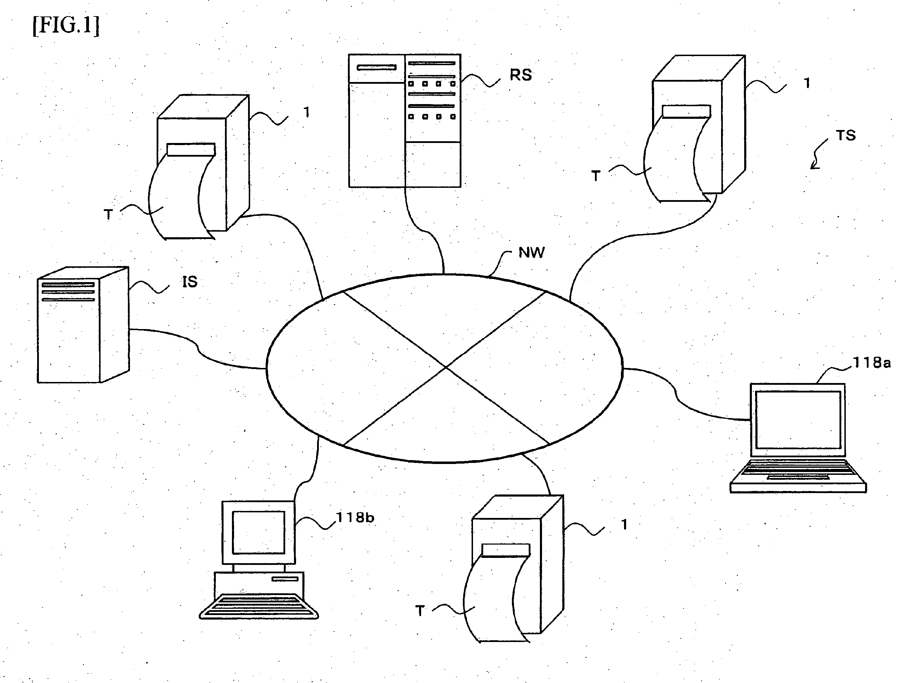

A first embodiment of the present invention will be described referring to Figs. 1 to 22. The present embodiment is an embodiment for effective utilization by carrying out pattern print on a margin portion.

Fig. 1 is a system block diagram illustrating an RFID tag manufacturing system having the tag-label producing apparatus of the first embodiment.

In an RFID tag manufacturing system TS shown in Fig. 1, a tag-label producing apparatus 1 is connected to a route server RS, a plurality of information servers IS, a terminal 118a, and a general-purpose computer 118b through a wired or wireless communication line NW. The terminal 118a and the general-purpose computer 118b are collectively referred to simply as "PC118" below as appropriate.

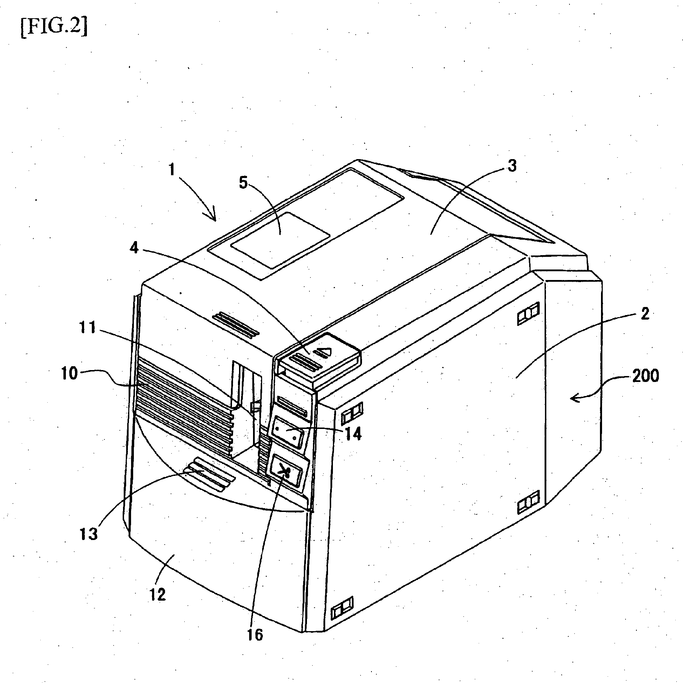

Fig. 2 is a perspective view illustrating the entire structure of the tag-label producing apparatus 1. In Fig. 2, the tag-label producing apparatus 1 produces an RFID label with print based on operation from the PC 118 in the apparatus. The tag-label producing apparatus 1 includes an apparatus body 2 having a housing 200 in a substantially regular hexahedron (substantially cubic) shape on the outline and an opening/closing lid 3 provided capable of being opened/closed (or may be detachable) on the top face of the apparatus body 2.

The housing 200 of the apparatus body 2 includes a front wall 10 located at the apparatus front side (left front side in Fig.2) and provided with a label carry-out exit 11 for discharging an RFID label T (which will be described later) produced inside the apparatus body 2 to the outside and a front lid 12 provided below the label carry-out exit 11 in the front wall 10 and having its lower end rotatably supported.

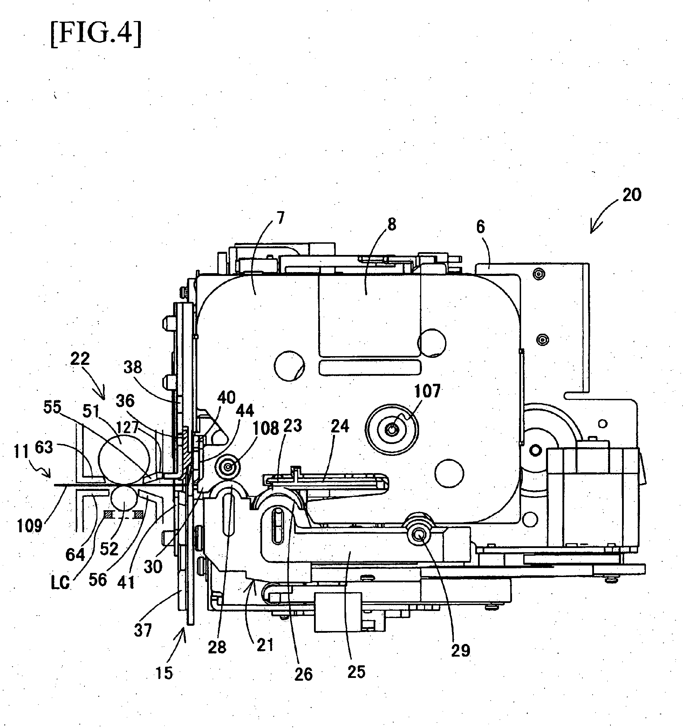

The front lid 12 is provided with a pusher portion 13, and the front lid 12 is opened frontward by pushing in this pusher portion 13 from above. Also, below a opening/closing button 4 in the front wall 10, a power button 14 that powers on/off of the tag-label producing apparatus 1 is provided. Below this power button 14, a cutter driving button 16 is provided for driving a cutting mechanism 15 disposed in the apparatus body 2 through manual operation by a user, and a tag label tape 109 with print (See Fig. 4, which will be described later) is cut to a desired length so as to produce the RFID label T by pushing this button 16.

The opening/closing lid 3 is pivotally supported rotatably at the end on the right depth side in Fig. 2 of the apparatus body 2 and urged in the opening direction all the time through an urging member such as a spring. When the opening/closing button 4 arranged adjacently to the opening/closing lid 3 on the top face of the apparatus body 2 is pushed, lock between the opening/closing lid 3 and the apparatus body 2 is released and opened by action of the urging member. A see-through window 5 covered by a transparent cover is provided at the center side of the opening/closing lid 3.

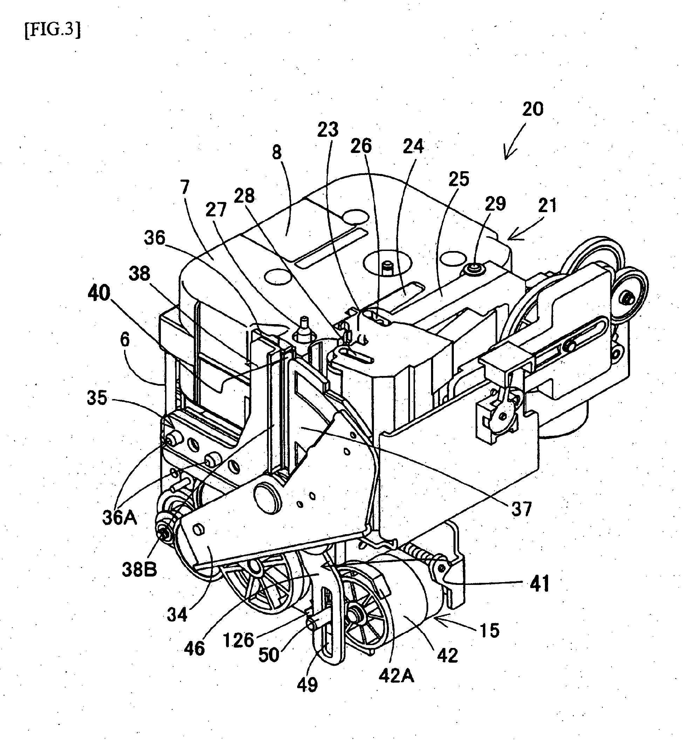

Fig. 3 is a perspective view illustrating a structure of an internal unit 20 inside the tag-label producing apparatus 1 (however, a loop antenna LC, which will be described later, is omitted). In Fig. 3,' the internal unit 20 includes a cartridge holder 6 that stores a cartridge 7, a printing mechanism 21 provided with a print head, which is a so-called thermal head 23, the cutting mechanism 15 provided with a fixed blade 40 and a movable blade 41, a half cut unit 35 provided with a half cutter 34 and located on the downstream side in the tape feeding direction of the fixed blade 40 and the movable blade 41.

On the top face of the cartridge 7, a tape identification display portion 8 displaying the tape width, tape color and the like of the base tape 101 incorporated in the cartridge 7, for example, is provided. Also, in the cartridge holder 6, a roller holder 25 is pivotally supported rotatably by a support shaft 29 so that switching can be made between a printing position (see Fig. 4, which will be described later) and a release position by a switching mechanism. At this roller holder 25, a platen roller 26 and a tape pressure roller 28 are rotatably disposed, and when the roller holder 25 is switched to the printing position, the platen roller 26 and the tape pressure roller 28 are pressed onto the print head 23 and a tape feed roller 27.

The print head 23 is provided with a large number of heating elements and mounted to a head mounting portion 24 erected at the cartridge holder 6.

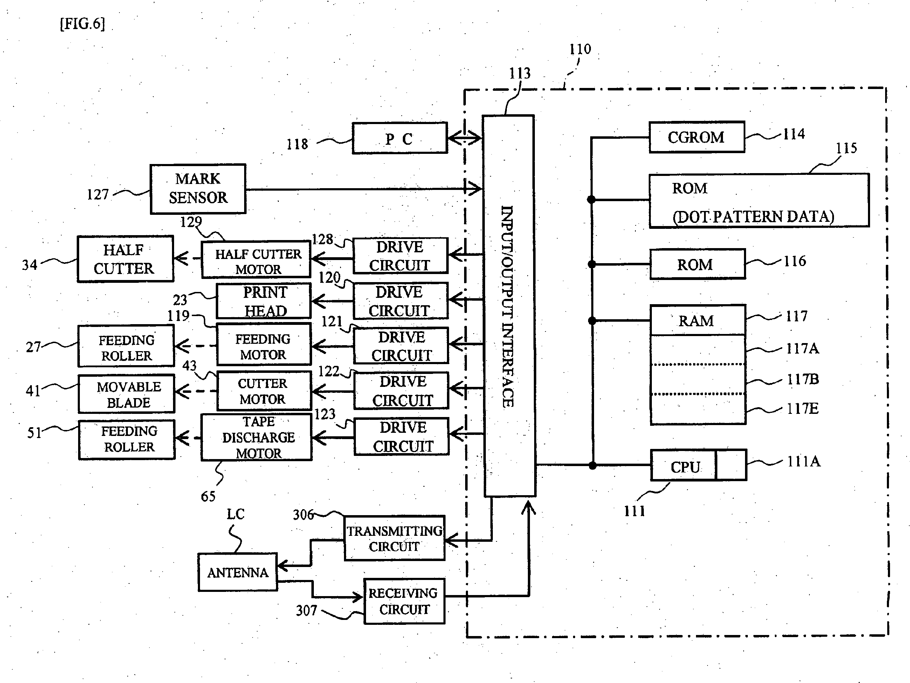

The cutting mechanism 15 is provided with the fixed blade 40 and the movable blade 41 composed of metal members. A driving force of a cutter motor 43 (See Fig. 6, which will be described later) is transmitted to a shank portion 46 of the movable blade 41 through a cutter helical gear 42, a boss 50, and a long hole 49 and the movable blade is rotated, and cutting operation is performed with the fixed blade 40. This cut state is detected by a micro switch 126 switched by operation of a cam 42A for cutter helical gear.

In the half cut unit 35, a cradle 38 and a half cutter 34 are arranged opposite to each other, and a first guide portion 36 and a second guide portion 37 are mounted to a side plate 44 (See Fig. 4, which will be described later) by a guide fixing portion 36A. The half cutter 34 is rotated by a driving force of a half cutter motor 129 (See Fig. 6, which will be described later) around a predetermined rotating fulcrum (not shown). At the end of the cradle 38, a receiving face 38B is formed.

Fig. 4 is a plan view illustrating the structure of the internal unit 20 shown in Fig. 3. In Fig. 4, the cartridge holder 6 stores the cartridge 7 so that the direction of the tag label tape 109 with print in the width direction discharged from a tape discharge portion 30 of the cartridge 7 and further discharged from the label carry-out exit 11 should be perpendicular in the vertical direction.

Also, in the internal unit 20, a label discharge mechanism 22 and the loop antenna LC are provided.

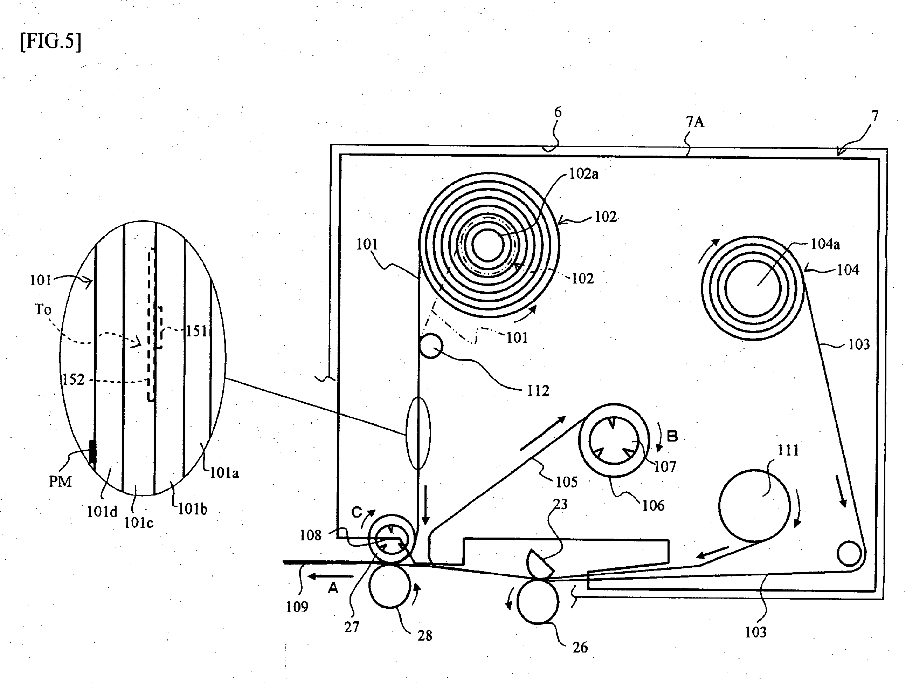

The label discharge mechanism 22 discharges the tag label tape 109 with print after being cut by the cutting mechanism (in other words, the RFID label T. The same applies to the following). That is, the label discharge mechanism 22 includes a feeding roller 51 rotated by the driving force of a tape discharge motor 123 (See Fig. 6, which will be described later), a pressure roller 52 opposed to the feeding roller 51 by sandwiching the tag label tape 109 with print therebetween, and a mark sensor 127 that detects an identifier PM (See Fig. 5, which will be described later) provided at the tag label tape 109 with print. At this time, first guide walls 55, 56 and second guide walls 63, 64 that guide the tag label tape 109 with print to the label carry-out exit 11 are provided inside the label carry-out exit 11. The first guide walls 55, 56 and the second guide walls 63, 64 are integrally formed, respectively, and arranged at the discharge position of the tag label tape 109 with print (RFID label T) cut by the fixed blade 40 and the movable blade 41 so that they are separated from each other with a predetermined interval.

The loop antenna LC is arranged in the vicinity of the pressure roller 52 so that the pressure roller 52 is located at the center in the radial direction, and an access (information reading or information writing) is made through a wireless communication to the RFID circuit element To provided at the base tape 101 (the tag label tape 109 with print after bonding. The same applies to the following) by magnetic induction (including electromagnetic induction, magnetic coupling and other non-contact contact methods through a magnetic field).

At the above reading or writing, correspondence between the tag ID of the RFID circuit element To of the produced RFID label T and the information read out of its IC circuit part 151 (or information written in the IC circuit part 151) is stored in the above-mentioned route server RS and can be referred to as needed.

Also, the tape-feed-roller drive shaft 108 and a driving shaft 107 give a feeding drive force of the tag label tape 109 with print and an ink ribbon 105 (which will be described later), respectively, and are rotated/driven in conjunction with each other.

Fig. 5 is an enlarged plan view schematically illustrating a detailed structure of the cartridge 7. The cartridge 7 has a housing 7A, a first roll 102 (actually, it is wound in a swirl state but shown concentrically in the figure for simplification) arranged inside the housing 7A and around which the base tape 101 in the band state is wound, a second roll 104 (actually, it is wound in a swirl state but shown concentrically in the figure for simplification) around which a transparent cover film 103 having substantially the same width as that of the base tape 101 is wound, a ribbon-supply-side roll 111 that feeds out the ink ribbon 105 (thermal transfer ribbon, however, it is not needed when the print-receiving tape is a thermal tape), the ribbon take-up roller 106 that winds up the ribbon 105 after printing, the tape feed roller 27 rotatably supported in the vicinity of the tape discharge portion 30 of the cartridge 7, and a guide roller 112 functioning as a feeding position regulating means.

The tape feed roller 27 presses and bonds the base tape 101 and the cover film 103 together so as to form the tag label tape 109 with print and feeds the tape in a direction shown by an arrow A in Fig. 5 (also functioning as a pressure roller).

In the first roll 102, the base tape 101 in which a plurality of RFID circuit elements To are sequentially arranged in the longitudinal direction with a predetermined equal interval is wound around a reel member 102a. The base tape 101 has a four-layered structure (See the partially enlarged view in Fig. 5) in this example and is constructed in lamination in the order of an adhesive layer 101a made of an appropriate adhesive, a colored base film 101b made of polyethylene terephthalate (PET) and the like, an adhesive layer 101c made of an appropriate adhesive, and a separation sheet 101d from the side wound inside (right side in Fig. 5) toward the opposite side (left side in Fig. 5).

On the back side of the base film 101b (left side in Fig. 5), the loop antenna 152 constructed in the loop-coil shape that transmits/receives information is provided integrally in this embodiment, the IC circuit part 151 connected to it and storing information is formed, and the RFID circuit element To is comprised by them.

On the front side of the base film 101b (right side in Fig. 5), the adhesive layer 101a that bonds the cover film 103 later is formed, while on the back side of the base film 101b (left side in Fig. 5), the separation sheet 101d is bonded to the base film 101b by the adhesive layer 101c provided so as to include the RFID circuit element To.

Note that, when the RFID label T finally completed in the label state is to be affixed to a predetermined article or the like, the separation sheet 101d enables adhesion to the article by the adhesive layer 101c through separation of the separation sheet. Also, on the surface of the separation sheet 101d, at a predetermined position (in this embodiment, a position on the further front than the tip end of the loop antenna 152 at the front side in the feeding direction) corresponding to each RFID circuit element To (and also corresponding to a tag print area PE1, which will be described later), a predetermined identifier for feeding control (an identifier painted in black in this embodiment. Alternatively, it may be a drilled hole penetrating the base tape 101 by laser machining or the like. Alternatively, it may be a Thomson type machined hole or the like. See Fig. 9C, which will be described later) PM is provided.

The second roll 104 has the cover film 103 wound around a reel member 104a. In the cover film 103 fed out of the second roll 104, the ribbon 105 arranged on its back face side (that is, the side to be bonded to the base tape 101) and driven by the ribbon-supply-side roll 211 and the ribbon take-up roller 106 is brought into contact with the back face of the cover film 103 by being pressed by the print head 23.

The ribbon take-up roller 106 and the tape feed roller 27 are rotated/driven in conjunction by a driving force of a feeding motor 119 (See Fig. 3 and Fig. 6, which will be described later), which is a pulse motor, for example, provided outside the cartridge 7, transmitted to the driving shaft 107 and the tape-feed-roller drive shaft 108 through a gear mechanism, not shown. The print head 23 is arranged on the upstream side in the feeding direction of the cover film 103 than the tape feed roller 27.

In the above construction, the base tape 101 fed out of the first roll 102 is supplied to the tape feed roller 27. On the other hand, as for the cover film 103 fed out of the second roll 104, the ink ribbon 105 arranged on its back face side (that is, the side bonded to the base tape 101) and driven by the ribbon-supply-side roll 211 and the ribbon take-up roller 106 is pressed by the print head 23 and brought into contact with the back face of the cover film 103.

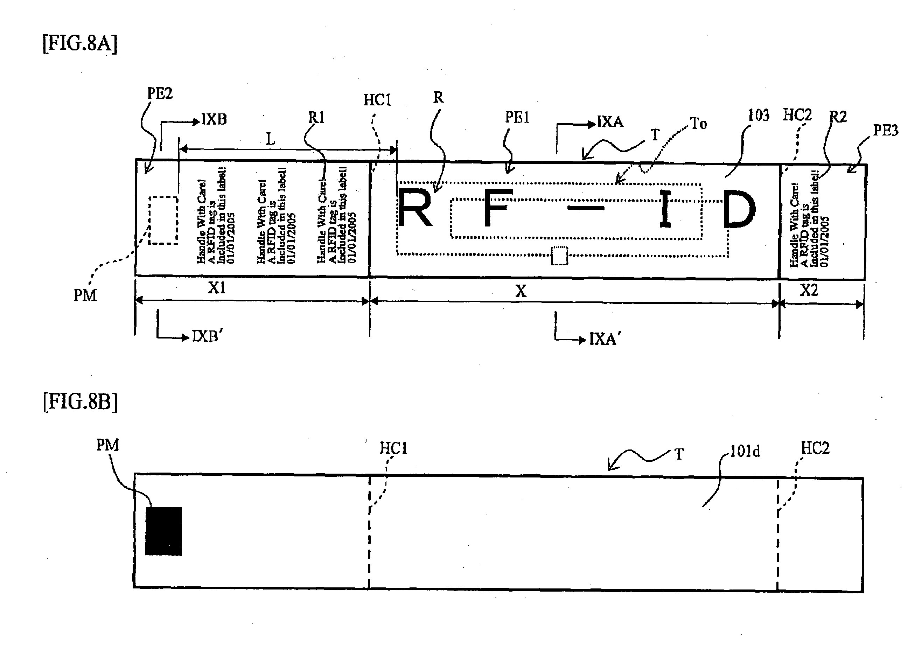

When the cartridge 7 is mounted to the cartridge holder 6 and the roll holder 25 is moved from the release position to the printing position, the cover film 103 and the ink ribbon 105 are held between the print head 23 and the platen roller 26, and the base tape 101 and the cover film 103 are held between the tape feed roller 27 and the pressure roller 28. Then, the ribbon take-up roller 106 and the tape feed roller 27 are rotated/driven by the driving force of the feeding motor 119 in a direction shown by an arrow B and an arrow C in Fig. 5, respectively, in synchronization with each other. At this time, the tape-feed-roller drive shaft 108, the pressure roller 28 and the platen roller 26 are connected through the gear mechanism (not shown), and with the driving of the tape-feed-roller drive shaft 108, the tape feed roller 27, the pressure roller 28, and the platen roller 26 are rotated, and the base tape 101 is fed out of the first roll 102 and supplied to the tape feed roller 27 as mentioned above. On the other hand, the cover film 103 is fed out of the second roll 104, and the plurality of heater elements of the print head 23 are electrified by a print-head drive circuit 120 (See Fig. 6, which will be described later). As a result, print R (See Fig. 8, which will be described later) corresponding to the RFID circuit element To on the base tape 101 to be the bonding target is printed on the back face of the cover film 103. Then, the base tape 101 and the cover film 103 on which the printing has been finished are bonded together by the tape feed roller 27 and the pressure roller 28 to be integrated and formed as the tag label tape 109 with print and fed out of the cartridge 7 through the tape discharge portion 30 (See Fig. 4). The ink ribbon 105 finished with printing on the cover film 103 is wound up by the ribbon take-up roller 106 by driving of the driving shaft 107.

Then, after information writing/reading is carried out to/from the RFID circuit element To by the loop antenna LC in the tag label tape 109 with print produced by bonding as above, the tag label tape 109 with print is cut by the cutting mechanism 15 automatically or by operating the cutter driving button 16 (See Fig. 2) and the RFID label T is produced. This RFID label T is further discharged from the label carry-out exit 11 (See Figs. 2 and 4) by the label discharge mechanism 22 after that.

Fig. 6 is a functional block diagram illustrating a control system of the tag-label producing apparatus 1 of the first embodiment. In Fig. 6, on a control board (not shown) of the tag-label producing apparatus 1, a control circuit 110 is arranged.

In the control circuit 110, a CPU 111 provided with a timer 111A inside and controlling each apparatus, an input/output interface 113 connected to this CPU 111 through a data bus, a CGROM 114, ROMs 115, 116, and a RAM 117 are provided.

In the ROM 116, a print driving control program for driving the print head 23, the feeding motor 119, and the tape discharge motor 65 by reading out data of a printing buffer in correspondence with an operation input signal from the PC 118, a cutting driving control program for feeding the tag label tape 109 with print to the cut position by driving the feeding motor 119 when printing is finished and cutting the tag label tape 109 with print by driving the cutter motor 43, and a tape discharge program for forcedly discharging the tag label tape 109 with print which has been cut (= RFID label T) from the label carry-out,exit 11 by driving the tape discharge motor 65, a transmitting program for generating access information such as an inquiry signal and a writing signal to the RFID circuit element To and outputting it to a transmitting circuit 306, a receiving program for processing a response signal input from a reception circuit 307, and other various programs required for control of the tag-label producing apparatus 1 are stored. The CPU 111 executes various calculations based on the various programs stored in the ROM 116.

In the RAM 117, a text memory 117A, a print buffer 117B, a parameter storage area 117E and the like are provided. In the text memory 117A, document data input from the PC 118 is stored. In the print buffer 117B, dot patterns for printing such as a plurality of characters and symbols and applied pulse number, which is a forming energy of each dot, are stored as dot pattern data, and the print head 23 carries out dot printing according to the dot pattern data stored in this print buffer 117B. In the parameter storage area 117E, various calculation data, tag identification information (tag ID) of the RFID circuit element To (above-mentioned) from which information is read (obtained) and the like are stored.

The PC 118, the print-head drive circuit 120 that drives the print head 23, a feeding motor drive circuit 121 that drives the feeding motor 119, a cutter motor drive circuit 122 that drives the cutter motor 43, a half-cutter motor drive circuit 128 that drives the half-cutter motor 129, a tape discharge motor drive circuit 123 that drives the tape discharge motor 65, the transmitting circuit 306 that generates a carrier wave for making an access (reading/writing) to the RFID circuit element To through the loop antenna LC and outputs an interrogating wave (transmission signal) obtained by modulating the carrier wave based on an input control signal, the reception circuit 307 that demodulates a response signal received through the loop antenna LC from the RFID circuit element To and outputting it, and the mark sensor 127 that detects the identifier PM are connected to the input/output interface 113.

In a control system with the control circuit 110 as its core, when character data and the like are input through the PC 118, the text (document data) is sequentially stored in the text memory 117A, the print head 23 is driven through the drive circuit 120, and each of the heater elements is selectively heated/driven in correspondence with printing dots for one line for printing the dot pattern data stored in the print buffer 117B, and in synchronization with that, the feeding motor 119 performs feeding control of the tape through the drive circuit 121. Also, the transmitting circuit 306 performs modulation control of the carrier wave based on the control signal from the control circuit 110 and outputs the interrogating wave, and the reception circuit 307 performs processing of the demodulated signal based on the control signal from the control circuit 110.

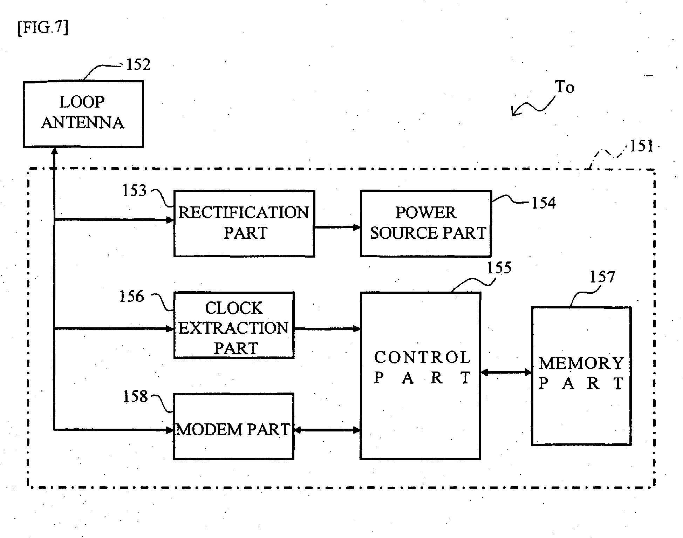

Fig. 7 is a functional block diagram illustrating a functional configuration of the RFID circuit element To. In Fig. 7, the RFID circuit element To has the loop antenna 152 that transmits/receives a signal contactlessly with the loop antenna LC on the tag-label producing apparatus 1 by magnetic induction and the IC circuit part 151 connected to the loop antenna 152.

The IC circuit part 151 includes a rectification part 153 that rectifies the interrogating wave received by the loop antenna 152, a power source part 154 that accumulates energy of the interrogating wave rectified by the rectification part 153 so as to make it a driving power supply, a clock extraction part 156 that extracts a clock signal from the interrogating wave received by the loop antenna 152 so as to supply it to a control part 155, a memory part 157 which can store a predetermined information signal, a modem part 158 connected to the loop antenna 152, and the control part 155 that controls operation of the RFID circuit element To through the rectification part 153, the clock extraction part 156, the modem part 158 and the like.

The modem part 158 demodulates a communication signal from the loop antenna LC of the tag-label producing apparatus 1 received by the loop antenna 152 and modulates the interrogating wave received at the loop antenna 152 and resend it as a response wave from the loop antenna 152 based on the reply signal from the control part 155.

The control part 155 interprets a received signal demodulated by the modem part 158, generates a reply signal based on the information signal stored in the memory part 157, and executes basic control such as control of reply by the modem part 158.

The clock extraction part 156 extracts a clock component from the received signal so as to extract a clock to the control part 155 and supplies the clock corresponding to the frequency of the clock component of the received signal to the control part 155.

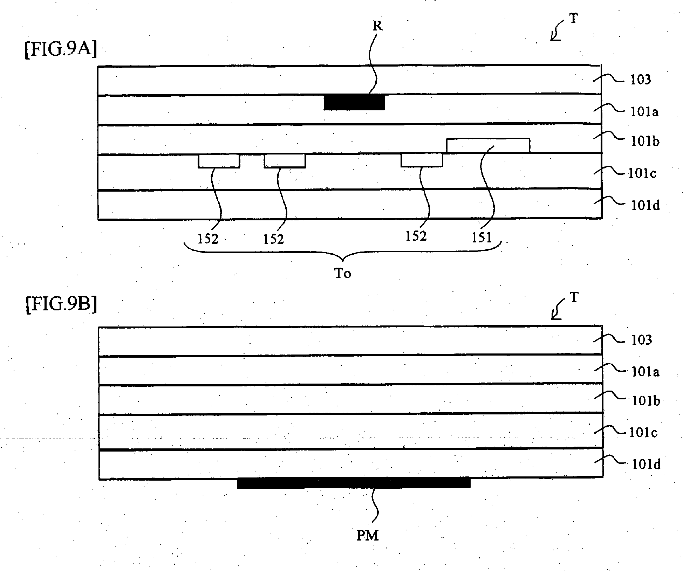

Figs. 8A and 8B are views illustrating an example of the appearance of the RFID label T formed after information writing (or reading) of the RFID circuit element To and cutting of the tag label tape 109 with print by the tag-label producing apparatus 1 constructed as above have been finished, in which Fig. 8A is a top view and Fig. 8B is a bottom view. Fig. 9A is a diagram obtained by rotating a cross sectional diagram of the IXA-IXA' section in Fig. 8 counterclockwise by 90 degrees, and Fig. 9B is a diagram obtained by rotating a cross sectional diagram of the IXB-IXB' section in Fig. 8 counterclockwise by 90 degrees.

In Figs. 8A, 8B, 9A, and 9B, the RFID label T is in the five-layered structure in which the cover film 103 is added to the four-layered structure shown in Fig. 5 as mentioned above made of five layers of the cover'film 103, the adhesive layer 101a, the base film 101b, the adhesive layer 101c, and the separation sheet 101d from the cover film 103 side (upper side in Fig. 9) to the opposite side (lower side in Fig. 9). The RFID circuit element To including the loop antenna 152 provided on the back side of the base film 101b as mentioned above is provided in the base film 101b and the adhesive layer 101c, and the label print R (characters of "RF-ID", representing the type of the RFID label T in this embodiment) corresponding to the stored information or the like of the RFID circuit element To is printed on the back face of the cover film 103.

Also, in the cover film 103, the adhesive layer 101a, the base film 101b, and the adhesive layer 101c, a half-cut line HC (Two lines of a front half-cut line HC1 and a rear half-cut line HC2, which will be described later, in this embodiment) are formed by the half cutter 34 substantially along the tape width direction as mentioned above. In the cover film 103, a portion held between the half-cut lines HC1, HC2 becomes a tag print area PE1 on which the label print R is printed, while the both sides in the tape longitudinal direction from the tag print area PE1 with the half-cut lines HC1, HC2 between them are a front print area PE2 and a rear print area PE3, respectively.

Also, in the tag-label producing apparatus 1, using a pair of the base tape 101 and the cover film 103, a plurality of RFID labels T is sequentially produced by the tag label tape 109 with print into which they are bonded as mentioned above. In this embodiment, when they are sequentially produced, predetermined pattern prints R1, R2 are printed respectively on the front print area PE2 and the rear print area PE3 of the cover film 103 of each of the RFID labels T.

The pattern prints R1, R2 are sentences, images and the like which can be edited by users in advance, and the contents are various additional information relating to production of the RFID label T. The specific examples are, for example, (a) contents which indicate that an arbitrary type of tag is contained (= one of information at use such as "this label incorporates RF-ID tag!". See the pattern prints R1, R2 of Fig. 8A.), (b) contents relating to handling (cautions as information at use such as "Do not bend or fold ", "For internal use only!", and "Special label. Handle with care!". See the pattern prints R1, R2 of Fig. 8A.), (c) contents relating to location where affixing targets are stored (= one of information at use such as "Storage room, 10F, First plant", (d) contents relating to an organization owning/managing the affixing targets (= one of information at use such as "For sales division"), (e) contents relating to usage such as affixing method, affixing location, designation of affixing targets and the like (= one of information at use such as "Affix at upper right on the front of the file"), (f) contents relating to care to be taken during affixing work (= caution information as one of information at use such as "Clean the affixing portion before affixing", "Do not affix on metal portion ! ") , (g) contents relating to handling of the front print area PE2 and the rear print area PE3 after use such as designation of return destination, check of use at return-destination, designation of place/method for disposal (= one of information at use such as "Return the remaining tape to the administration division after affixing!",' " Return the remaining tape to the exclusive collection box after affixing!", (h) contents relating to producing time and date (= one of information at use such as "January 1, 2005", "13:00, Saturday, January 1, 2005"), (i)contents relating to use expiration date (effective date) (= one of information at use such as "Affix by January 1, 2005"), (j) contents relating to producer's name, ID (= one of information at use such as "Produced by Suzuki A21111"),' and (k) contents relating to the name of producing organization (company, division) (= one of information at use such as "Produced by Sales division").

The sentences in the pattern prints R1, R2 may be in English as shown in Fig. 8, Japanese or any other language. Also, the pattern prints R1, R2 may have the same contents or different contents. If the pattern prints R1, R2 have different contents from each other, an information amount relating to the RFID label T is increased by that amount, which further widens effective utilization and improves convenience. Moreover, in order to make additional information inscribed on the pattern prints R1, R2 more distinctive, print with decoration including addition or change of at least predetermined lines; colors, figures and images (such as icons, marks, symbols and the like) may be given to the pattern prints R1, R2 or their peripheral areas.

On the other hand, in Fig. 8A, a dimension (distance from the half-cut line HC1 to the half-cut line HC2) X in the tape longitudinal direction of the tag print area PE1 is variably set according to the contents and aspect of the label print R (number of characters, fonts and the like). Also, a dimension (distance from the tape tip end to the half-cut line HC1) X1 in the tape longitudinal direction of the front print area PE2 and a dimension (distance from the half-cut line HC2 to the tape rear end) X2 in the tape longitudinal direction of the rear print area PE3 are set (fixedly in this embodiment) to predetermined values in advance (however, the rear half-cut line HC2 is not provided in some cases, as will be described later). Also, on the separation sheet 101d, the above-mentioned identifier PM remains, and a distance from the tip end of this identifier PM in the tape feeding direction and the tip end of the RFID circuit element To in the tape feeding direction offset by that is a predetermined value L. As mentioned above, instead of providing marking painted in black as shown Figs. 9A and 9B as the identifier PM, a hole substantially penetrating the base tape 101 by laser machining or the like may be drilled as the identifier PM, though not shown.

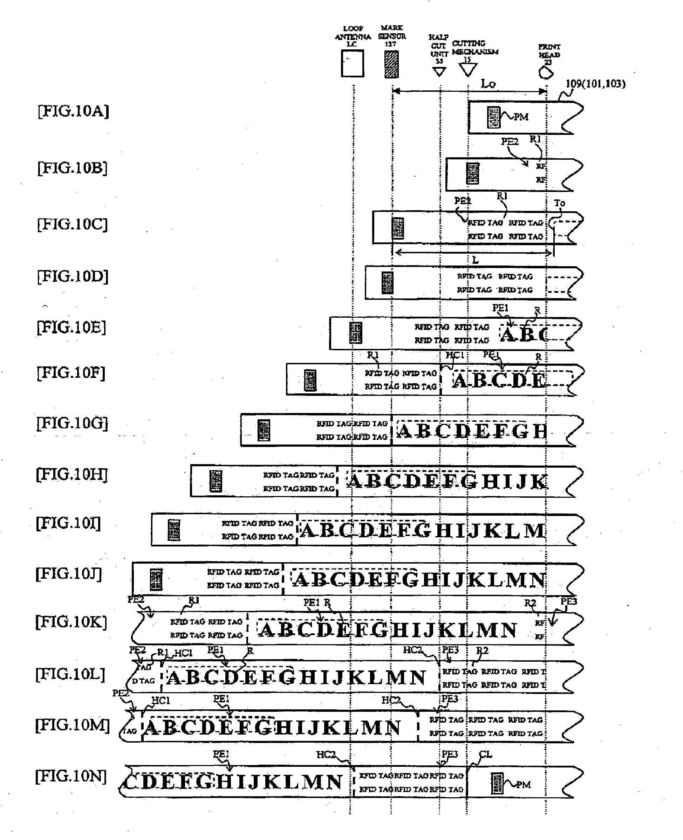

In the tag-label producing apparatus 1 with the above basic construction, behavior of control of the print head 23 and the loop antenna LC according to the feeding position of the tag label tape 109 with print will be described using Figs. 10 to 14.

### (A) When the print length is relatively long:

Figs. 10A to 10N are explanatory diagrams illustrating positional relations among the identifier PM, the RFID circuit element To, the tag print area PE1 of the label print R, the front print area PE2 of the pattern print R1, and the rear print area PE3 of the pattern print R2 of the tag label tape 109 with print and the loop antenna LC, the mark sensor 127, the half cut unit 35, the cutting mechanism 15, and the print head 23. As shown in the figures, in the base tape 101 in this embodiment, the distance L in tape feeding direction between the identifier PM and the RFID circuit element To is set in advance so that it is slightly larger than a distance Lo in the tape feeding direction between the mark sensor 127 and the print head 23.

First, Fig. 10A shows a state before the feeding of the tag label tape 109 with print is started out of the cartridge 7. In the state shown in the figure, the identifier PM is not detected by the mark sensor 127 yet.

When the tag label tape 109 with print is started to be fed out and feeding of the tag label tape 109 with print is started, printing of the pattern print R1 on the front print area PE2 of the cover film 103 is started (Fig. 10B). In this embodiment, as shown in Figs. 10C to 10K, which will be described later, a case where the tag type (presence) (characters in English "RFID TAG") is repeatedly printed is exemplified.

As feeding of the tag label tape 109 with print further progresses from this state (in other words, feeding of the base tape 101 and the cover film 103. The same applies to the following), the vicinity of the tip end of the RFID circuit element To in the tape feeding direction gets closer to the position of the print head 23 (Fig. 10C). Here, since it is L > Lo as mentioned above, when the tip end of the identifier PM in the tape feeding direction reaches the position of the mark sensor 127 by movement of the tag label tape 109 with print, the position of the cover film 103 corresponding to the RFID circuit element To (position to be bonded to the position of the RFID circuit element To of the base tape 101) does not reach the position of print head 23 but it is located slightly before that. By completing the printing of the pattern print R1 on the front print area PE2 in this state (= when the identifier PM is detected by the mark sensor 127), a small margin area is generated between it and the print area PE1 for full-scale printing, which will be described later. If this margin is not needed, setting may be L = Lo.

As the feeding of the tag label tape 109 with print slightly progresses from this state, the position corresponding to the RFID circuit element To of the cover film 103 reaches the print head 23 (Fig. 10D). Then, printing of the label print R is started on the tag print area PE1 of the cover film 103 (Fig. 10E). In this embodiment, as shown in Figs. 10K to 10N, which will be described later, a case where relatively long characters (alphabetical characters "ABCDEFGHIJKLMN") are printed is exemplified.

As the feeding of the tag label tape 109 with print further progresses from this state, the position of the front half-cut line HC1 set in advance (position of the distance X1 from the tape tip end as mentioned above. See Fig. 8) reaches the position of the half cut unit 35 (Fig. 10F). Since the identifier PM has been already detected by the mark sensor 127 in this state, the detection of arrival at this position is made by detecting progress of the tag label tape 109 with print from the state in the above mentioned Fig. 10C (identifier PM detection started state) by a predetermined distance. In correspondence with this detection, feeding of the tag label tape 109 with print is stopped, and the front half-cut line HC1 is formed by the half cut unit 35 (Fig. 10F).

After that, feeding of the tag label tape 109 with print is resumed, and when the feeding of the tag label tape 109 with print further progresses (Fig. 10G) from the state in Fig. 10F, the RFID circuit element To reaches the position of the loop antenna LC (Fig. 10H). At this time, since relatively long characters ("ABCDEFGHIJKLMN") are being printed as the label print R in this embodiment as mentioned above, printing in the tag print area PE1 is not completely finished at this time. Therefore, feeding and printing of the tag label tape 109 with print are stopped once (interrupted) and wireless communication is performed through the loop antenna LC with the RFID circuit element To in this feeding stopped state and then, feeding and printing are resumed (Fig. 10I) so that all ("ABCDEFGHIJKLMN") the printing is completed in the end (Fig. 10J).

As the feeding of the tag label tape 109 with print further progresses from the state in (Fig. 10J), the position of the rear print area PE3 of the cover film 103 reaches the print head 23. The detection of arrival at this position is made by detecting progress of the tag label tape 109 with print from the state of Fig. 10C by a predetermined distance as mentioned above. In correspondence with the detection, printing of the pattern print R2 is started on the rear print area PE3 (Fig. 10K). In this example, the same contents as that of the pattern print R1 are printed. In this case, also, a small margin may be or may not be provided between the tag print area PE1 and the rear print area PE3 similarly to that between the front print area PE2 and the tag print area PE1.

As the feeding of the tag label tape 109 with print further progresses from the state in (Fig. 10K), the position of the rear half-cut line HC2 set in advance (the position at the distance X2 from the tape rear end as mentioned above. See Fig. 8) reaches the position of the half cut unit 35. The detection of arrival at this position is made by detecting progress of the tag label tape 109 with print from the state of Fig. 10C by a predetermined distance as in the position detection of the front half-cut line HC2. In correspondence with the detection, feeding of tag label tape 109 with print is stopped and the rear half-cut line HC2. is formed by the half cut unit 35 (Fig. 10L).

As the feeding of the tag label tape 109 with print further progresses from the state in (Fig. 10L), the printing of the pattern print R2 on the rear print area PE3 is finished (Fig. 10M). Note that, depending on the size setting of the rear print area PE3, the printing of the pattern print R2 may be finished earlier than formation of the rear half-cut line HC2.

After that, as the feeding of the tag label tape 109 with print further progresses, the position of the cut line CL corresponding to the dimension X of the tag print area PE1 in the tape longitudinal direction of each RFID label T set variably according to the length of the label print R reaches the position of the cutting mechanism 15. The detection of arrival at this position is also made by detecting progress of the tag label tape 109 with print from the state of Fig. 10C by a predetermined distance as above. In correspondence with the detection, feeding of the tag label tape 109 with print is stopped, cutting is carried out at the cut line CL by the cutting mechanism 15 (Fig. 10N), and the tip end side of the tag label tape 109 with print is cut off to form the RFID label T.

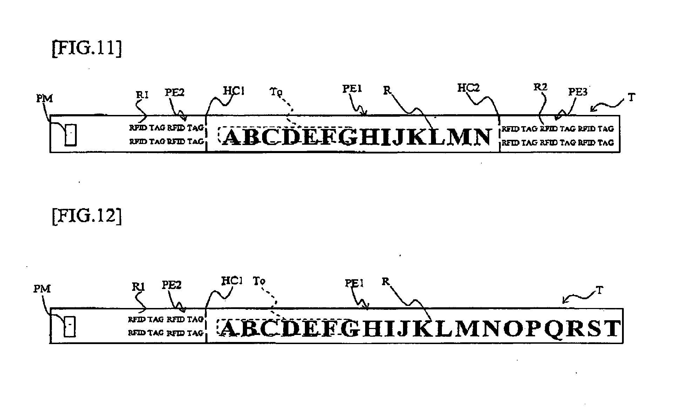

Fig. 11 is a diagram illustrating an example of the RFID label T completed as above and substantially corresponds to Fig. 8A mentioned above. On the RFID label T, the RFID circuit element To is arranged at the center side in the tape longitudinal direction and the label print R is printed on the corresponding tag print area PE1, and the front print area PE2 with the identifier PM and the rear print area PE3 are provided with the front/rear half-cut lines HC1, HC2 between them, respectively. Then, on the front print area PE2, the pattern print R1 is printed, while on the rear print area PE3, the pattern print R2 is printed.

In Fig. 11, since the length of the front print area PE2 is larger, by repeatedly printing the pattern print R1 on the front print area PE2 in the tape feeding direction, there is little margin generated in the front print area PE2 (between the patterns), but if the length of the rear print area PE3 is larger, the pattern print R2 may be repeatedly printed on the rear print area PE3. By repeatedly printing the pattern prints R1, R2 for a plurality of times, additional information inscribed on the pattern prints R1, R2 can be surely notified to the label user.

Also, the length of the tag print area PE1 changes according to an aspect of the label print R as mentioned above, but when the length of the tag print area PE1 is larger than a certain degree due to the large number of characters in the label print R and the like, the rear half-cut line HC2 is omitted (that is, the rear print area PE3 is not set), but the tag print area PE1 is formed on which the label print R is carried out up to the rear end of the tag label tape 109 with print.

Fig. 12 is a diagram illustrating an example of the RFID label T without the rear print area PE3 and corresponds to Fig. 11. On the RFID label T, the RFID circuit element To is arranged at the center side in the tape longitudinal direction, the label print R is carried out on the tag print area PE1, and only the front print area PE2 with the identifier PM is provided with the front half cut line HC1 between them. Then, the pattern print R1 is printed on the front print area PE2.

### (B) When the print length is relatively short:

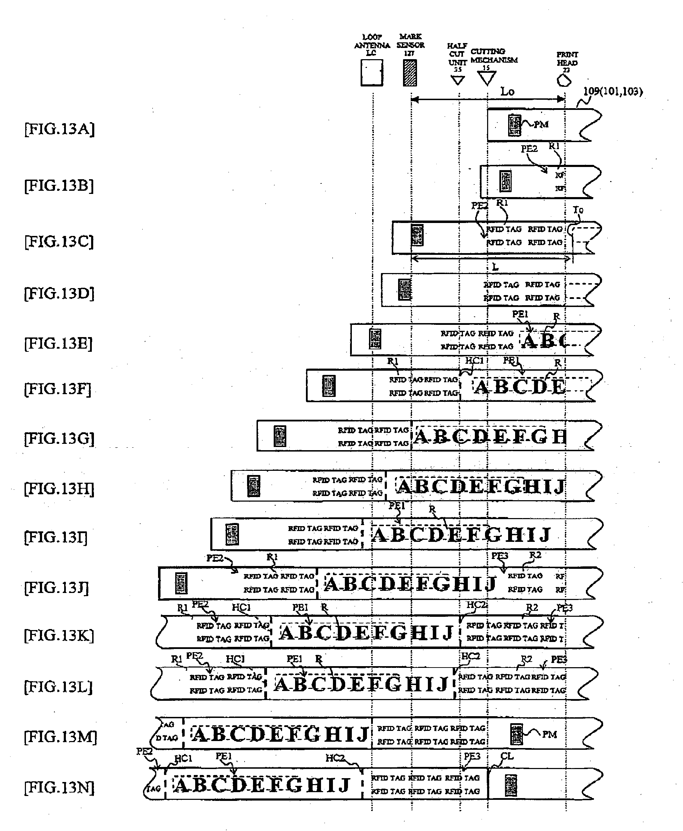

Figs. 13A to 13N are explanatory diagrams illustrating positional relations among the identifier PM, the RFID circuit element To, the tag print area PE1 of the label print R, the front print area PE2 of the pattern print R1, and the rear print area PE3 of the pattern print R2 of the tag label tape 109 with print and the loop antenna LC, the mark sensor 127, the half cut unit 34, the cutting mechanism 15, and the print head 23 as in Figs. 10A to 10N. In this example, a case where relatively short characters (alphabet characters, "ABCDEFGHIJ") are printed is used as shown in Figs. 13H to 13N, which will be described later.

First, Figs. 13A to 13G are the same as the above-mentioned Figs. 10A to 10G. That is, when feeding of the tag label tape 109 with print out of the cartridge 7 is started from the state shown in Fig. 13A, printing of the pattern print R1 on the front print area PE2 of the cover film 103 is started (Fig. 13B), and when the tip end of the identifier PM reaches the position of the mark sensor 127, printing of the pattern print R1 on the front print area PE2 is completed (Fig. 13D), and feeding is further progressed (Fig. 13C) after that, printing of the label print R on the tag print area PE1 of the cover film 103 is started (Fig. 13E). When the feeding is further progressed and the position of the front half-cut line HC1 reaches the position of the half-cut unit 35, the front half-cut line HC1 is formed by the half cut unit 35 (Fig. 13F). Then, the feeding of the tag label tape 109 with print is resumed, and the feeding of the tag label tape 109 with print is further progressed (Fig. 13G).

Then, since the number of characters of the label print R is relatively small in this example, printing of the label print R ("ABCDEFGHIJ") is completed earlier before the RFID circuit element To reaches the position of the loop antenna LC (See Fig. 13I, which will be described later) (Fig. 13H).

After that, the feeding progresses and the RFID circuit element To reaches the position of the loop antenna LC (Fig. 13I), but unlike the above case of (A), all the printing on the tag print area PE1 has been finished at this point. Thus, the feeding of the tag label tape 109 with print is stopped (interrupted), and in the feeding stopped state, wireless communication through the loop antenna LC with the RFID circuit element To is performed. After that, the feeding of the tag label tape 109 with print is resumed (Fig. 13J). In this example, the position of the rear print area PE3 of the cover film 103 has reached the print head 23 at this time, and printing of the pattern print R2 on the rear print area PE3 is started. Also, the same contents are printed as those of the pattern print R1.

The subsequent Figs. 13K to 13N have substantially the same flow as that of the Figs. 10L to 10N. That is, the feeding of the tag label tape 109 with print is further progressed from the state in Fig. 13J, and when the position of the half-cut line HC2 reaches the position of the half cut unit 35, the feeding of tag label tape 109 with print is stopped, and the rear half-cut line HC2 is formed by the half cut unit 35 (Fig. 13K). When the feeding further progresses, printing of the pattern print R2 on the rear print area PE3 is finished (Fig. 13L), the feeding further progresses (Fig. 13M) and when the position of the cut line CL reaches the position of the cutting mechanism 15, the feeding is stopped and cutting is carried out at the cutting line CL by the cutting mechanism 15 (Fig. 13N), and the tip end side of the tag label tape 109 with print is cut off so as to form the RFID label T.

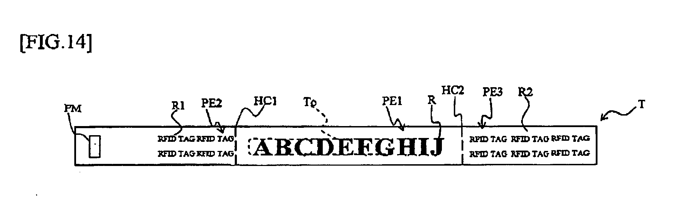

Fig. 14 is a diagram illustrating an example of the RFID label T completed as above and substantially corresponds to Fig. 11 mentioned in the above (A). Similarly to the above, the pattern print R1 is printed on the front print area PE2 and the pattern print R2 is printed on the rear print area PE3.

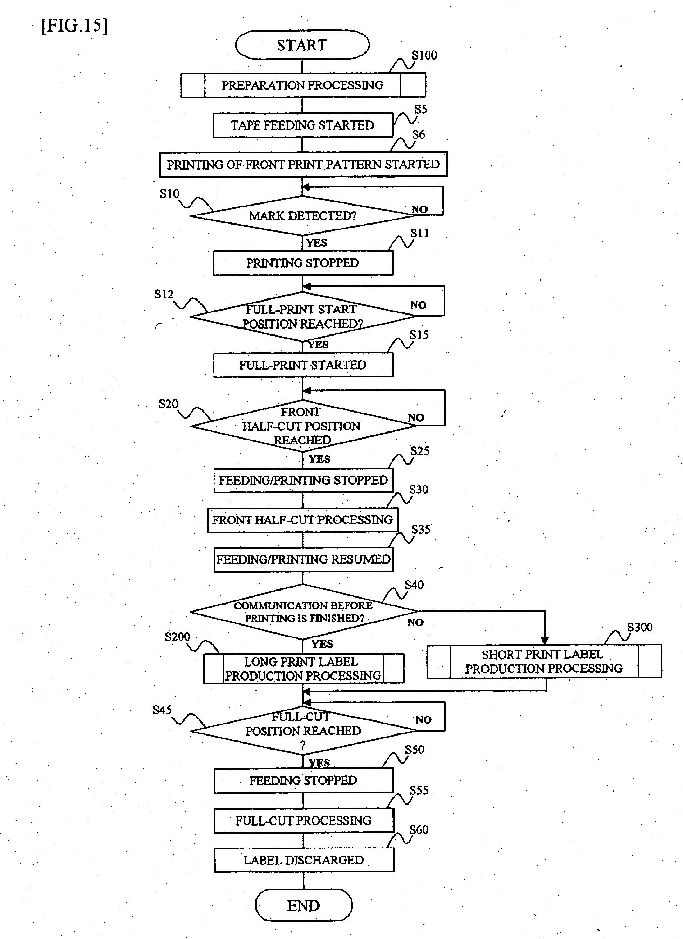

Fig. 15 is a flowchart illustrating a control procedure executed by the control circuit 110 that performs the above control.

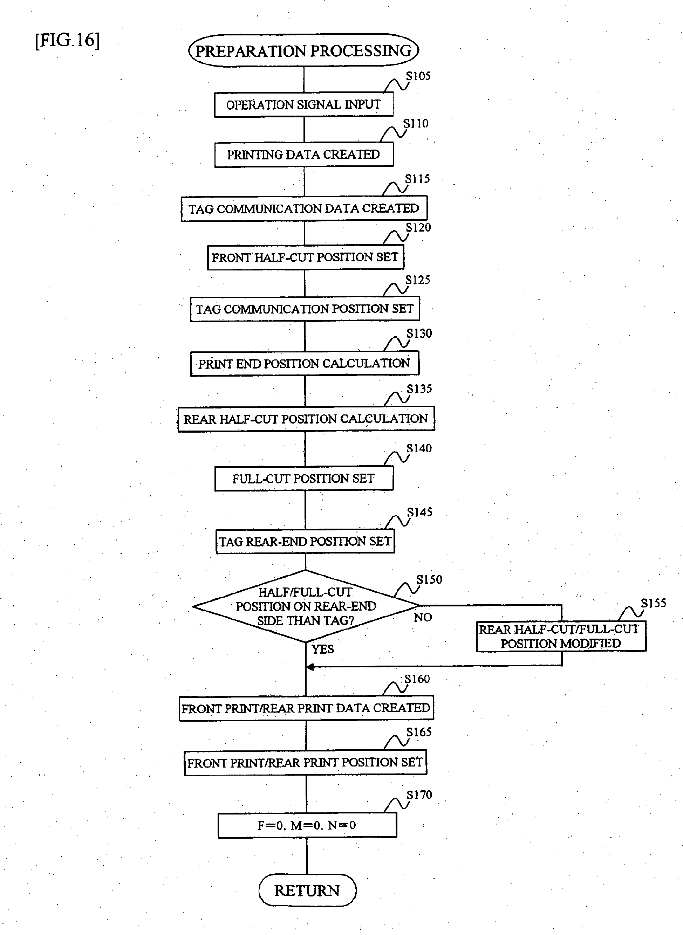

In Fig. 15, this flow is started when a predetermined RFID label production operation is made by the tag-label producing apparatus 1 through the PC 118. First, at Step S100, an operation signal from the PC 118 is input (through the communication line NW and the input/output interface 113), and preparation processing (for detail, see Fig. 16, which will be described later) is performed for setting printing data or communication data with the RFID circuit element To and the like based on the operation signal.

After that, the routine goes on to Step S5, a control signal is output to the feeding motor drive circuit 121 through the input/output interface 113, and the tape feed roller 27 and the ribbon take-up roller 106 are rotated/driven by the driving force of the feeding motor 121. Moreover, a control signal is output to the tape discharge motor 65 through the tape discharge motor drive circuit 123, and the feeding roller 51 is rotated/driven. By them, the base tape 101 is fed out of the first roll 102 and supplied to the tape feed roller 27, while the cover film 103 is fed out of the second roll 104 and the base tape 101 and the cover film 103 are bonded by the tape feed roller 27 and the pressure roller 28 to be integrated and formed as the printed tag label tape 109 with print, and further fed in the direction outside the tag-label producing apparatus 1 from the direction outside the cartridge 7. When the feeding of the printed tag label tape 109 with print is started in this way, the routine goes on to the subsequent Step S6.

At Step S6, a control signal is output to the print-head drive circuit 120 through the input/output interface 113, the print head 23 is electrified, and printing of the pattern print R1 (front print pattern printing) such as characters and symbols corresponding to the printing data generated at Step S100 is started on the front print area PE2 located at the tape tip end side than the above-mentioned tag print area PE1 in the cover film 103 (See Fig. 10B).

After that, at Step S10, based on a detection signal of the mark detection sensor 127 input through the input/output interface 113, it is determined if the identifier PM of the printed tag label tape 109 with print is detected or not. This procedure is repeated till the identifier PM is detected and the determination is satisfied, and when being detected, the determination is satisfied and the routine goes on to the subsequent Step S11.

At Step S11, a control signal is output to the print-head drive circuit 120 through the input/output interface 113, power feeding to the print head 23 is stopped, and printing of the pattern print R1 on the front print area PE2 is stopped.

After that, at Step S12, it is determined if the tag label tape 109 with print has been fed to the full-print start position (tip end position of the tag print area PE1) where the label print R should be printed. The determination at this time can be made by detecting a feeding distance after the identifier PM of the base tape 101 is detected at Step S10 by a predetermined known method (such as counting the number of pulses output by the feeding motor drive circuit 121 driving the feeding motor 119, which is a pulse motor). This procedure is repeated till the full-print start position is reached and the determination is satisfied, and when being reached, the determination is satisfied and the routine goes on to the subsequent Step S15.

At Step S15, a control signal is output to the print-head drive circuit 120 through the input/output interface 113, the print head 23 is electrified, and printing of the label print R (full-printing) such as characters, symbols, barcodes and the like corresponding to the printing data generated at Step S100 is started in the above-mentioned tag print area PE1 (= area to be substantially bonded on the back face of the RFID circuit elements To arranged with a predetermined pitch and an equal interval on the base tape 101) (See Figs. 10D and E).

After that, at Step S20, it is determined if the printed tag label tape 109 with print has been fed to the above-mentioned front half-cut position (in other words, if the tag label tape 109 with print has reached the position where the half cutter 34 of the half cut mechanism 35 is opposed to the front half-cut line HC1 set at step S100). The determination at this time can be made by detecting a feeding distance after the identifier PM of the base tape 101 is detected at the Step S10 by a predetermined known method, for example, as mentioned above. This procedure is repeated till the front half-cut position is reached and the determination is satisfied, and when being reached, the determination is satisfied and the routine goes on to the subsequent Step S25.

At Step S25, a control signal is output to the feeding motor drive circuit 121 and the tape discharge motor drive circuit 123 through the input/output interface 113, driving of the feeding motor 119 and the tape discharge motor 65 is stopped, and rotation of the tape feed roller 27, the ribbon take-up roller 106 and the feeding roller 51 is stopped. At a result, during the course in which the printed tag label tape 109 with print fed out of the cartridge 7 is moved in the discharge direction, in the state where the half cutter 34 of the half cut mechanism 35 is opposed to the front half-cut line HC1 set at Step S100, feeding-out of the base tape 101 from the first roll 102, feeding-out-of the cover film 103 from the second roll 104, and feeding of the tag label tape 109 with print are stopped. Also, at this time, a control signal is output to the print-head drive circuit 120 through the input/output interface 113, power feeding to the print head 23 is stopped, and printing of the label print R (full-printing) is stopped (printing interrupted).

After that, at Step S30, the front half-cut processing is performed that a control signal is output to the half cutter motor drive circuit 128 through the input/output interface 113 so as to drive the half cutter motor 129 and rotate the half cutter 34, and the cover film 103, the adhesive layer 101a, the base film 101b and the adhesive layer 101c of the printed tag label tape 109 with print are cut so as to form the front half-cut line HC1 (See Fig. 10F).

Then, the routine goes on to Step S35, where the tape feed roller 27, the ribbon take-up roller 106, and the feeding roller 51 are rotated/driven similarly to Step S5 so as to resume feeding of the printed tag label tape 109 with print, and the print head 23 is electrified as in Step S15 so as to resume printing of the label print R.

After that, at Step S40, it is determined according to a print end position (See Step S130, which will be described later) set variably according to the print contents (number of print characters, font and the like) at Step S100 and the tag rear-end position (See Step S145, which will be described later) set according to type information of the cartridge 7 included in the operation signal input by an operator at Step S100, if the tag label tape 109 with print comes to the communication position (position where the RFID circuit element To is opposed to the loop antenna LC) of the RFID circuit element To before printing of all the label print R on the tag print area PE1 is finished (state in the above-mentioned Fig. 10H), or printing of all the label print R on the tag print area PE1 is finished (state in the above-mentioned Fig. 13I) before it comes to the communication position of the RFID circuit element To (position where the RFID circuit element To is opposed to the loop antenna LC).

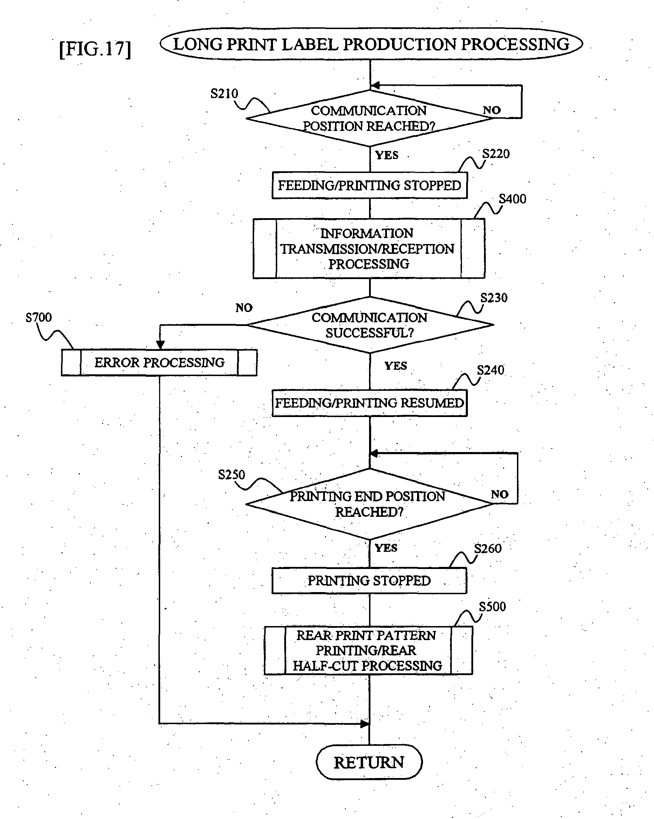

If the length of the label print R to be printed is relatively long and has a positional relation as shown in Fig. 10H, for example, the determination at the above Step S40 is satisfied, the routine goes on to step S200, and the long print label production processing is performed. That is, when feeding is made to the communication position of the RFID circuit element To (position where the RFID circuit element To is opposed to the loop antenna LC), feeding and printing are stopped and information is transmitted/received. Then, the feeding and printing are resumed to finish printing, feeding is further made and printing of the pattern print R2 (rear print pattern printing) is carried out on the rear print area PE3 located at the tape rear-end side of the tag print area PE1, and then, the feeding is stopped at the rear half-cut position to form the rear half-cut line HC2 (See Fig. 17, which will be described later).

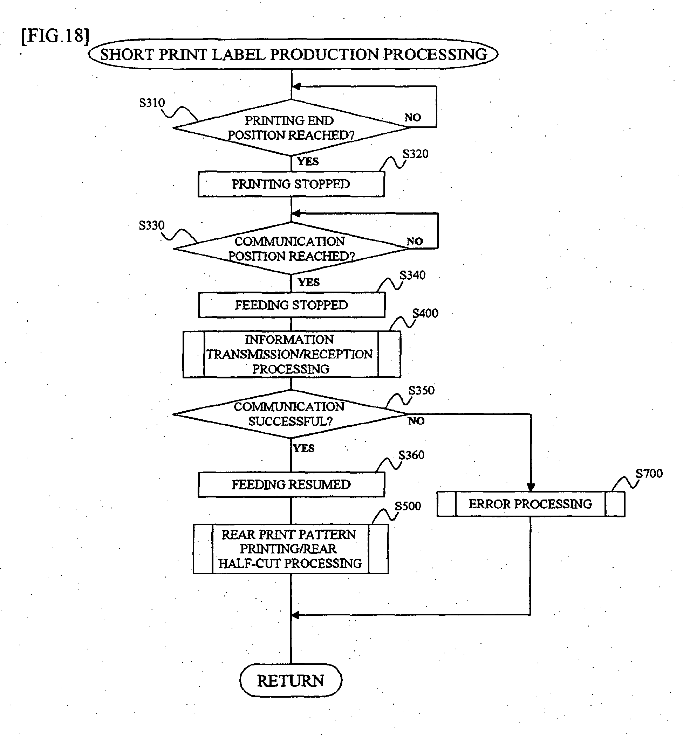

On the other hand, if the length of the label print R to be printed is relatively short and has a positional relation as shown in Fig. 13I, for example, the determination at the above Step S40 is not satisfied, the routine goes on to Step S300, where short print label production processing is performed. That is, the feeding and printing are continued so as to complete the printing firstly, and then, the feeding is further made to reach the communication position of the RFID circuit element To (position where the RFID circuit element To is opposed to the loop antenna LC), where the feeding is stopped and information is transmitted/received, and after printing of the pattern print R2 (rear print pattern printing) is carried out on the rear print area PE3 located at the tape rear-end side than the tag print area PE1, the feeding is stopped at the rear half-cut position to form the rear half-cut line HC2 (See Fig. 18, which will be described later).

When Step S200 or Step S300 is finished as mentioned above, the routine goes on to Step S45 (At this time, the feeding of the tag label tape 109 with print has been resumed at Step S200 or Step S300) At Step S45, it is first determined if the printed tag label tape 109 with print has been fed to the above-mentioned full-cut position or not (in other words, if the tag label tape 109 with print has reached the position where the movable blade 41 of the cutting mechanism 15 is opposed to the cut line CL set at Step S100). The determination at this time can be made by detecting a feeding distance after the identifier PM of the base tape 101 is detected at the Step S10 by a predetermined known method, for example, as in the above. This procedure is repeated till the full-cut position is reached and the determination is satisfied, and when being reached, the determination is satisfied and the routine goes on to the subsequent Step S50.

At Step S50, similarly to the Step S25, rotation of the tape feed roller 27, the ribbon take-up roller 106 and the feeding roller 51 is stopped, and the feeding of the printed tag label tape 109 with print is stopped. At a result, in the state where the movable blade 41 of the cutting mechanism 15 is opposed to the cut line CL set at Step S100, feeding-out of the base tape 101 from the first roll 102, feeding-out of the cover film 103 from the second roll 104, and feeding of the tag label tape 109 with print are stopped.

After that, at Step S55, the full-cut processing is performed that a control signal is output to the cutter motor drive circuit 122 so as to drive the cutter motor 43, the movable blade 41 of the cutting mechanism 15 is rotated, and the cover film 103, the adhesive layer 101a, the base film 101b, the adhesive layer 101c, and the separation sheet 101d of the printed tag label tape 109 with print are all cut off (separated) so as to form the cut line CL (See Fig. 10N). The RFID label T is cut off from the tag label tape 109 with print by the separation by the cutting mechanism 15, the RFID tag information of the RFID circuit element To is read out and predetermined print corresponding to it is carried out, thereby producing the RFID label T in the label state.

After that, the routine goes on to Step S60, where a control signal is output to the tape discharge motor drive circuit 123 through the input/output interface 113 so as to resume the driving of the tape discharge motor 65 and rotate the feeding roller 51. At a result, the feeding by the feeding roller 51 is resumed, the RFID label T produced in the label state at the Step S55 is fed toward the label carry-out exit 11 and discharged out of the label carry-out exit 11 to outside the tag-label producing apparatus 1, and this flow is finished.

The cutting processing at the Step S55 and the label discharge processing at Step S60 may be performed in conjunction as described below.

First, at the cutting operation by the cutting mechanism 15, for example, the cutter motor 43 is driven through the input/output interface 113 and the cutter motor drive circuit 122, the tag label tape 109 with print is pressed by the feeding roller 51 against the pressure roller 52 immediately before the tag label tape 109 with print is started to be cut by the fixed blade 40 and the movable blade 41, and the tag label tape 109 with print is held till the tape is cut.

After that, depending on whether the cutting of the tag label tape 109 with print is completed or not, a detection signal of the micro switch 126 is switched from the off state to the on state, and if it is determined that the cutting has been completed, rotation of the cutter motor 43 is temporarily stopped through the input/output interface 113 and the cutter motor drive circuit 122. On the other hand, if the cutting has not been completed, driving of the cutter motor 43 is continued till the micro switch 126 is switched from the off state to the on state.

When the cutting is completed and the cutter motor 43 is stopped, the tape discharge motor 65 is rotated through the input/output interface 113 and the tape discharge motor drive circuit 123, the feeding roller 51 is rotated through a gear train 66, and the held tape (RFID label T) is discharged. Then, depending on whether a predetermined time has elapsed since the tape discharge is started, determination on whether the RFID label T has been discharged or not is made at the control circuit 110, and if determined as it has been discharged, the rotation of the tape discharge motor 65 is stopped through the input/output interface 113 and the tape discharge motor drive circuit 123, while if not, the rotation is continued till it is discharged.

After the rotation of the tape discharge motor 65 is stopped, the cutter motor 43 is rotated again through the input/output interface 113 and the cutter motor drive circuit 122. By that, the moveable blade 41 is rotated and returned to the release position, while the pressure roller 52 is rotated in a separating direction and held with a given interval. After that, detection is made at the control circuit 110 on whether the cut-release operation has been completed or not. If the micro switch 126 has not been switched from the on state to the off state and the cut-release operation is not completed, the rotation of the cutter motor 43 is continued till completed. And if the micro switch 126 is switched from the on state to the off state and the cut-release operation is completed, the rotation of the cutter motor 43 is stopped, and the full-cut processing and the label discharge processing are finished.

Fig. 16 is a flowchart illustrating a detailed procedure of the above-mentioned Step S100. In the flow shown in Fig. 16, first, at Step S105, an operation signal input-operated from the PC 118 is input (identified) through the input/output interface 113. This operation signal includes printing information such as characters, designs, drawing patterns and the like of the label print R and the pattern prints R1, R2,' and their fonts (character style, size, thickness and the like), or code data of characters such as letters, numerals and the like. When information is written in the RFID circuit element To, the writing information (RFID tag information including at least tag ID as identification information) is included. The operation signal of the label print R and the pattern prints R1, R2 is preferably a selection signal obtained by making selection from among a plurality of types of patterns determined in advance because the input operation of the operator is facilitated. The input signal at this time also includes information relating to the type of the cartridge 7 mounted to the cartridge holder 6 (in other words, tag attribute information such as arrangement interval between the RFID circuit elements in the base tape 101, tape width of the base tape 101 and the like).

As for the cartridge information, a detected portion (an identifier in the irregular shape or the like) provided separately at the cartridge 7 may be detected by an appropriate cartridge detecting means (those for mechanical detection such as a mechanical switch, sensors for optical detection, sensors for magnetic detection and the like) so that the type of the cartridge 7 can be automatically detected/searched based on this detection signal.

After that, the routine goes on to Step S110, where based on the operation signal input at the Step S105, printing data corresponding to the above printing information (full-printing data for label print R) is created.

Then, at step s115, based on the operation signal input at the step S105, communication data corresponding to the writing information is created. As mentioned above, when the RFID label T is to be created by writing information in the RFID circuit element To, this procedure is executed, but when the RFID label T is to be created by reading information stored in the RFID circuit element To in advance, this procedure may be omitted.

After that, the routine goes on to Step S120, where the position of the front half-cut line HC1 is set as mentioned above. Based on the operation signal input at the step S105, the position of the front half-cut line HC1 on the tape corresponding to the cartridge information is set. That is, depending'on the type of the cartridge 7, the arrangement interval of the RFID circuit elements in the base tape 101 (in other words, the distance between the cut line CL and the cut line CL, the length of a single RFID label T) is uniquely determined as mentioned above, and depending on the length of the RFID label T, the position of the front half-cut line HC1 is (unlike the rear half-cut line HC) is determined at a given position from the tip end of the tag label tape 109 with print in advance regardless of the contents of the label print R (for example, stored in an appropriate point of the control circuit 110 in a table form). In this procedure, based on this premise, the position of the front half-cut line HC1 is (fixedly) set at a position determined in advance for each cartridge 7.

Then, at Step S125, the above-mentioned communication position on the tape by the RFID circuit element To is set. In this setting, similarly to the above Step S120, the arrangement position of the RFID circuit element To in the tag label tape 109 with print is also (fixedly) set at a position determined in advance for each cartridge 7 based on the operation signal input at the Step S105 on the premise that the type (size) and the arrangement position of the RFID circuit element To are determined in advance, according to the type of cartridge 7, at a given position from the tip end of the tag label tape 109 with print.

After that, the routine goes on to Step S130, based on the printing data created at the Step S110, the position on the tape where the printing of the label print R (full printing) is finished is calculated. That is, when it is changed according to the contents of the label print R and the print length would become longer, the print end position gets (relatively) closer to the label rear-end side, while if the print length is short, the print end position gets (relatively) closer to the label front-end side.

Then, at Step S135, the position of the above-mentioned rear half-cut line HC2 is set. This setting is made based on the operation signal input at the Step S105 and the print end position calculated at the Step S130, and a position on the tape of the rear half-cut line HC2 is set corresponding to the cartridge information. That is, the position of the rear half-cut line HC2 is calculated based on the operation signal input at the Step S105 and on the premise that the distance from the print end position to the rear half-cut line HC2 is determined according to the type of cartridge 7, in the form that the determined distance is added (interposed therebetween) to the print end position calculated at the Step S130.

After that, the routine goes on to Step S140, where the position of the cut line CL of the tag label tape 109 with print is set. In this setting, similarly to the above Step S120, the cutting position of the tag label tape 109 with print is also (fixedly) set at a position determined in advance for each cartridge 7 based on the operation signal input at Step S105 and on the premise that the label size is determined in advance according to the type of the cartridge 7.

And at Step S145, the above-mentioned rear-end position on the tape of the RFID circuit element To is set. In this setting, the rear-end position of the tag label tape 109 with print is also (fixedly) set at a position determined in advance for each cartridge 7 based on the operation signal input at the Step S105 and on the premise that the type (size) and the arrangement position of the RFID circuit element To are determined in advance according to the type of the cartridge 7.

Then, the routine goes on to Step S150, and it is determined if the position of the rear half-cut line HC2 set at Step S135 and the position of the cut line CL set at Step S140 are on the label rear-end side rather than the rear-end position of the RFID circuit element To at Step 145. If the position of the rear half-cut line HC2 and the position of the cut line CL are on the label rear-end side, the determination is satisfied, and the routine goes on to Step S160.

If the position of the rear half-cut line HC2 or the position of the cut line CL are set on the label front-end side rather than the rear-end position of the RFID circuit element To, the determination is not satisfied, and the routine goes on to Step S155. At Step S155, since there is a possibility that a part of the RFID circuit element To could be cut off, positions are modified so that both the position of the rear half-cut line HC2 and the position of the cut line CL are located on the label rear-end side rather than the rear-end position of the RFID circuit element To (resetting), and the routine goes on to Step S160.

After that, the routine goes on to Step S160, and based on the operation signal input at the Step S105, the front/rear print data (printing data for carrying out pattern prints R1, R2) corresponding to the printing information is created fixedly (or variably). At this time, setting may be made with limitation on the data contents so that the print data is contained in a range of the front print area PE2 and the rear print area PE3.

After that, the routine goes on to Step S165, and the printing positions of the front/rear print data created at the Step S160 are set. In this setting, the positions of the front print area PE2 and the rear print area PE3 are set (fixedly) at positions predetermined for each cartridge 7 based on the operation signal input at the Step S105 and on the premise that the label size is determined constant in advance according to the type of the cartridge 7 similarly to the above, on the basis of the position of the cut line CL of the tag label tape 109 with print, for example.

After that, at Step S170, when communicating through the loop antenna LC with the RFID circuit element To, which will be described later, variables M, N for counting the number of times (access retry times) of communication retried when there is no response from the RFID circuit element To and a flag F indicating if the communication was successful or not are initialized, and this routine is finished.

Fig. 17 is a flowchart illustrating a detailed procedure of the above-mentioned Step S200. In the flow shown in Fig. 17, first, at Step S210, it is determined if the printed tag label tape 109 with print has been fed to the above-mentioned communication position with the loop antenna (in other words, if the tag label tape 109 with print has reached a position where the loop antenna LC set at the Step S125 is substantially opposed to the RFID circuit element To position or not). The determination at this time can be also made by detecting a feeding distance after the identifier PM of the base tape 101 is detected at the Step S10 by a predetermined known method as in Step S20 in the above-mentioned Fig. 15. This procedure is repeated till the communication position is reached and the determination is satisfied, and when reached, the determination is satisfied and the routine goes on to the subsequent Step S220.

At Step S220, similarly to Step S25, rotation of the tape feed roller 27, the ribbon take-up roller 106 and the feeding roller 51 is stopped, and the feeding-out of the printed tag label tape 109 with print is stopped in the state where the loop antenna LC is substantially opposed to the RFID circuit element To. Also, power feeding to the print head 23 is stopped, and the printing (full printing) of the label print R is stopped (interrupted) (See Fig. 10H).

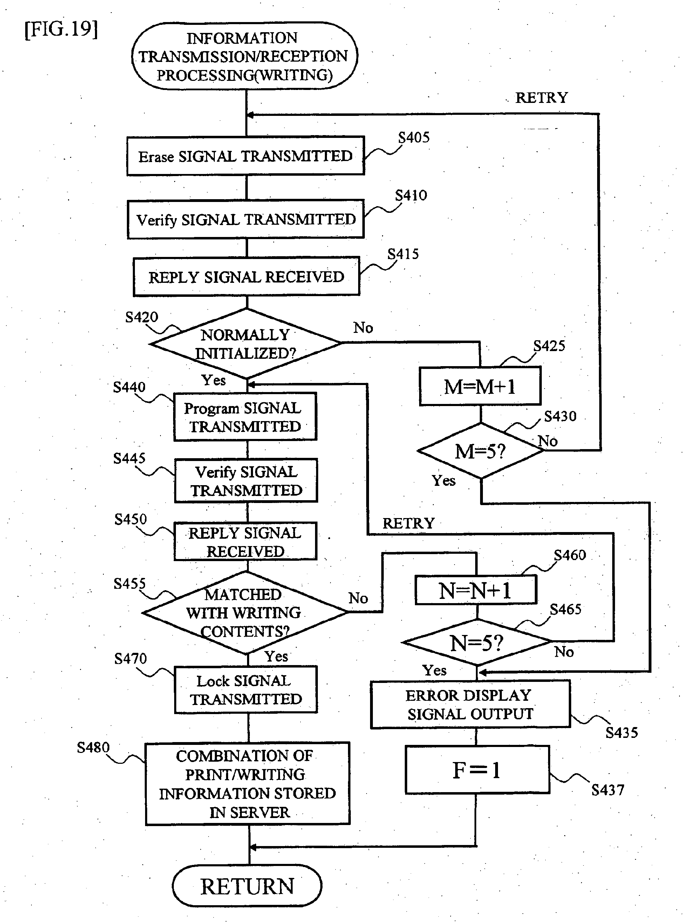

After that, the routine goes on to Step S400, where information is transmitted/received by wireless communication between the antenna LC and the RFID circuit element To, and information transmission/reception processing is performed to write information created at the Step S115 in Fig. 16 in the IC circuit part 151 of the RFID circuit element To (or reading out information stored in the IC circuit part in advance) (for detail, see Fig. 19, which will be described later).

After that, the routine goes on to Step S230 and it is determined if information transmission/ reception at the Step S400 was successful or not. Specifically, at Step S400, it is determined if F = 0 or not, since it should be such that the flag F = 1 in the case of communication failure at Step S400 (See Step S437 in Fig. 19, which will be described later).

In the case of F = 1, the determination is not satisfied, the communication with the RFID circuit element To is considered to be failed, the routine goes on to Step S700, and predetermined error processing for notifying the communication failure on the label to the operator is performed.

On the other hand, in the case of F = 0, the determination is satisfied, the communication with the RFID circuit element To is considered to be successful, and the routine goes on to Step S240.

At Step S240, similarly to Step S35 in Fig. 15, the tape feed roller 27, the ribbon take-up roller 106, and the feeding roller 51 are rotated/driven to resume feeding of the printed tag label tape 109 with print, and printing of the label print R is resumed by electrifying the print head 23.

At this time, if the power feeding stopped period of the print head 23 becomes long to some degree after Step S220 because the number of communication retry times (retry times) at the Step S400 is large or the like, there is a possibility that the temperature of the print head 23 is lowered. Thus, in order to cope with this, at resumption of the printing at the Step S240, power feeding to the print head 23 (energy amount per unit time) may be made larger than usual.

After the Step S240, the routine goes on to Step S250, and it is determined if the printed tag label tape 109 with print has been fed to the above-mentioned printing end position (calculated at Step S130 in the Fig. 16). The determination at this time can be also made by detecting a feeding distance after the identifier PM of the base tape 101 is detected at the Step S10 by a predetermined known method, for example, as in the above. This procedure is repeated till the printing end position is reached and the determination is satisfied, and when reached, the determination is satisfied and the routine goes on to the subsequent Step S260.

At Step S260, similarly to Step S25 in the Fig. 15, power feeding to the print head 23 is stopped, and the printing (full printing) of the label print R is stopped. At a result, the printing of the label print R to the tag print area PE1 is completed (See Fig. 10J).

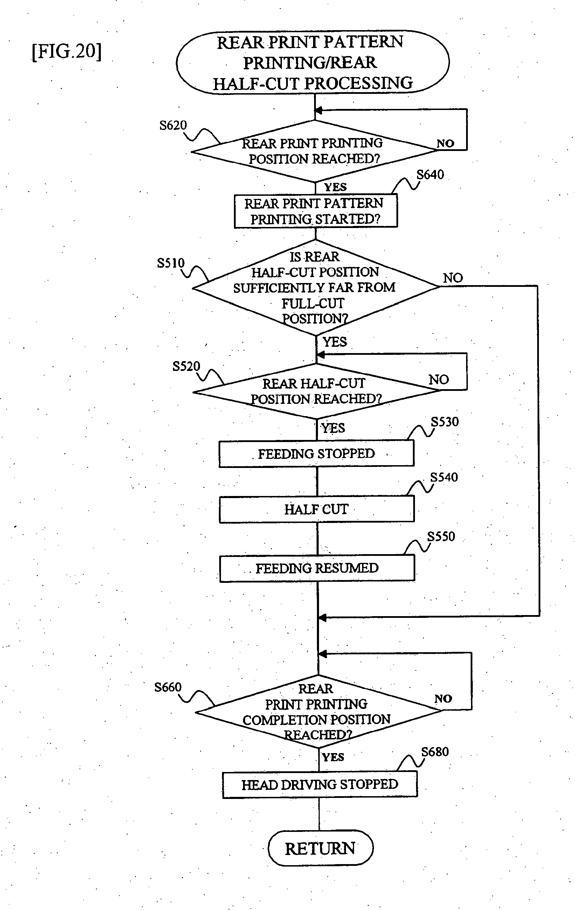

After that, the routine goes on to Step S500, where the rear print printing/rear half-cut processing is performed in which printing of the above-mentioned rear pattern print R2 is carried out on the rear print area PE3 located on the tape rear-end side than the tag print area PE1 and after it is fed to the predetermined rear half-cut position, the rear half-cut line HC2 is formed by the half cutter 34 of the half cut unit 35 (for detail, see Fig. 20, which will be described later).

When the above Step S500 or Step S700 is finished, this routine is finished.

Fig. 18 is a flowchart showing a detailed procedure of the above-mentioned Step S300. In the flow shown in Fig. 18, first at Step S310, it is determined if the printed tag label tape 109 with print has been fed to the above-mentioned printing end position (calculated at Step S130 in the Fig. 16) similarly to Step S250 in Fig. 17. The determination at this time can be also made by the same method as in Step S250. This procedure is repeated till the printing end position is reached and the determination is satisfied, and when reached, the determination is satisfied and the routine goes on to the subsequent Step S320.

At Step S320, similarly to Step S260 in the Fig. 17, power feeding to the print head 23 is stopped, and the printing of the label print R is stopped. At a result, the printing of the label print R to the tag print area PE1 is completed (See Fig. 13H).

After that, the routine goes on to Step S330, where it is determined if the printed tag label tape 109 with print has been fed to the above-mentioned communication position with the loop antenna LC similarly to Step S210 in Fig. 17. The determination at this time can be also made by the same method as in Step S210. This procedure is repeated till the communication position is reached and the determination is satisfied, and when reached, the determination is satisfied and the routine goes on to the subsequent Step S340.

At Step S340, similarly to the Step S220, rotation of the tape feed roller 27, the ribbon take-up roller 106 and the feeding roller 51 is stopped, and the feeding of the tag label tape 109 with print is stopped in the state where the loop antenna LC is substantially opposed to the RFID circuit element To (See Fig. 13I).

Step S400 after that is the same as Fig. 17, and the information transmission/reception processing for transmitting/receiving information by wireless communication between the antenna LC and the RFID circuit element To is performed (for detail, see Fig. 19, which will be described later).

Then, the routine goes on to Step S350, and it is determined if the information transmission/ reception was successful at Step S400 based on whether F = 0 is established or not.

In the case of F = 1, the determination is not satisfied and the routine goes on to Step S700, where predetermined error processing is performed as in Fig. 17. In the case of F = 0, the determination is satisfied, the communication with the RFID circuit element To is considered to be successful and the routine goes on to Step S360.

At Step S360, similarly to Step S240 in Fig. 17, the tape feed roller 27, the ribbon take-up roller 106, and the feeding roller 51 are rotated/driven and feeding of the printed tag label tape 109 with print is resumed (See Fig. 13J).

Since Step S500 and Step S600 after that are the same as in Fig. 17, the description will be omitted.

Fig. 19 is a flowchart illustrating a detailed procedure of Step S400 mentioned above in Fig. 17 and Fig. 18. In this example, information writing in the above information writing and information reading is used as an example in description.

First, at Step S405 in the flow shown in Fig. 19, a control signal is output to the above-mentioned transmitting circuit 306 (See Fig. 6 and the like) through the input/output interface 113, and a carrier wave given predetermined modulation is sent as the "Erase" signal for initializing information stored in the memory portion 157 of the RFID circuit element To to the RFID circuit element To as a writing target through the loop antenna LC. At a result, the memory portion 157 of the RFID circuit element To is initialized.

Next, at Step S410, a control signal is output to the transmitting circuit 306 through the input/output interface 113, and a carrier wave given predetermined modulation is sent as the "Verify" signal for verifying contents of the memory portion 157 to the RFID circuit element To as an information writing target through the loop antenna LC, and a reply is prompted.

After that, at Step S415, a reply signal sent from the RFID circuit element To as the writing target in correspondence with the "Verify" signal is received through the loop antenna LC and taken in through the reception circuit 307 (See Fig. 6 and the like) and the input/output interface 113.

Next, at Step S420, on the basis of the received reply signal, information in the memory portion 157 of the RFID circuit element To is verified so as to determine if the memory portion 157 is normally initialized.

If the determination is not satisfied, the routine goes on to Step S425, where one is added to M, and it is determined if M = 5 or not at Step S430. In the case of M ≤4, the determination is not satisfied but the routine returns to Step S405 and the same procedure is repeated. In the case of M = 5, the routine goes on to Step S435, where an error display signal is output to the PC 118 through the input/output interface 113 and the communication line NW so that corresponding writing failure (error) display is performed and moreover, the above mentioned flag F = 1 is set at step S437 and this routine is finished. In this way, even if initialization is not successful, retry is made up to five times.

If the determination at Step S420 is satisfied, the routine goes on to step S440, where a control signal is output to the transmitting circuit 306, and the carrier wave given predetermined modulation is sent to the RFID circuit element To as information writing target through the loop antenna LC as a "Program" signal for writing desired data in the memory portion 157 and the information is written.

After that, a control signal is output to the transmitting circuit 306, the carrier wave given predetermined modulation as the "Verify" signal is sent to the RFID circuit element To as writing target through the loop antenna LC, and a reply is prompted. After that, at Step S450, the reply signal sent from the RFID circuit element To as writing target in correspondence with the "Verify" signal is received through the loop antenna LC and taken in through the reception circuit 307 and the input/output interface 113.

Next, at Step S455, on the basis of the received reply signal, the information stored in the memory portion 157 of the RFID circuit element To is verified and it is determined if the above-mentioned sent predetermined information is normally stored in the memory portion 157 or not using a known error detection code (CRC code: Cyclic Redundancy Check or the like).

If the determination is not satisfied, the routine goes on to Step S460, where one is added to N, and it is further determined at Step S465 if it is N = 5 or not. In the case of N ≤ 4, the determination is not satisfied and the routine returns to Step S440, where the same procedure is repeated. In the case of N = 5, the routine goes on to Step S435, where the PC 118 is similarly caused to display the corresponding writing failure (error), the above-mentioned flag F = 1 is set at step S437, and this routine is finished. In this way, even if information writing is not successful, retry is made up to five times.

If the determination at Step S455 is satisfied, the routine goes on to step S470, where a control signal is output to the transmitting circuit 306, and the carrier wave given predetermined modulation as a "Lock" command is sent to the RFID circuit element To as writing target through the loop antenna LC so as to prohibit new information writing in the RFID circuit element To. At a result, writing of the RFID tag information in the RFID circuit element To as writing target is finished.

After that, the routine goes on to Step S480, combination of the information written in the RFID circuit element To at the Step S440 and the print information of the label print R already printed on the tag print area PE1 by the print head 23 in correspondence with that is output through the input/output interface 113 and the communication line NW and stored in the information server IS and the route server RS. This stored data is stored/held in the database of each of the servers IS, RS so that it can be referred to by the PC 118 as needed, for example. At a result, this routine is finished.

Fig. 20 is a flowchart illustrating a detailed procedure of the above-mentioned Step S500 in Fig. 17 or Fig 18. In the flow shown in Fig. 20, first, at Step S620, it is determined if the printed tag label tape 109 with print has been fed to the above-mentioned rear print printing start position (calculated at Step S165 in the Fig. 16) or not. The determination at this time can be also made by detecting a feeding distance after the identifier PM of the base tape 101 is detected at the Step S10 by a predetermined known method, for example, as in the above. This procedure is repeated till the print printing start position is reached and the determination is satisfied, and when reached, the determination is satisfied and the routine goes on to the subsequent Step S640.

At Step S640, similarly to the above, the print head 23 is electrified so as to start printing of the pattern print R2 to the rear print area PE3 (See Figs. 10K and 13J).

After that, at Step S510, it is determined if a distance between the position of the rear half-cut line HC2 set at the above-mentioned Step S135 and the position of the cut line CL set at the above-mentioned Step S140 are separated by more than a predetermined distance set in advance. If the position of the rear half-cut line HC2 and the position of the cut line CL are too close to each other, the determination is not satisfied, it is determined that providing of the rear half-cut line HC2 separately from the cut ling CL is not appropriate, and the routine is finished. On the other hand, if the position of the rear half-cut line HC2 and the position of the cut line CL are sufficiently far from each other, the determination is satisfied, and the routine goes on to Step S520. The above Step S510 is a procedure to prevent such a state that the cut line CL and the rear half-cut line HC2 are too close to each other and the label is peeled off at the full-cut by the cutting mechanism 15 or the separated tape adheres to the movable blade or the like of the cutting mechanism 15, which might cause nonconformity in apparatus operation.

At Step S520, similarly to Step S20, it is determined if the printed tag label tape 109 with print has been fed to the above-mentioned rear half-cut position (in other words, if the tag label tape 109 with print has reached a position where the half cutter 34 of the half cut mechanism 35 is opposed to the rear half-cut line HC2 calculated at Step S135). The determination at this time can be also made by detecting a feeding distance after the identifier PM of the base tape 101 is detected at Step S10 by a predetermined known method as in the above. This procedure is repeated till the rear half-cut position is reached and the determination is satisfied, and when reached, the determination is satisfied and the routine goes on to the subsequent Step S530.

At Step S530, similarly to the above-mentioned Step S50 and the like, a control signal is output to the feeding motor drive circuit 121 and the tape discharge motor drive circuit 123 through the input/output interface 113, driving of the feeding motor 119 and the tape discharge motor 65 is stopped, and rotation of the tape feed roller 27, the ribbon take-up roller 106 and the feeding roller 51 is stopped. At a result, in the state where the half cutter 34 of the half cut mechanism 35 is opposed to the rear half-cut line HC2 calculated at Step S135, feeding-out of the base tape 101 from the first roll 102, feeding-out of the cover film 103 from the second roll 104, and feeding of the tag label tape 109 with print are stopped.

After that, the routine goes on to Step S540, where a control signal is output to the half cutter motor drive circuit 128 as in the Step S30 so as to rotate the half cutter 34, and the rear half-cut processing is performed that the cover film 103, the adhesive layer 101a, the base film 101b, and the adhesive layer 101c of the printed tag label tape 109 with print are cut off and the rear half-cut line HC is formed (See Fig. 10L and Fig. 13K).

Then, the routine goes on to Step S550, where the tape feed roller 27, the ribbon take-up roller 106, and the feeding roller 51 are rotated/driven similarly to the Step S35 so as to resume feeding of the printed tag label tape 109 with print.

After that, the routine goes on to Step S660, and it is determined if the printed tag label tape 109 with print has been fed to the above-mentioned rear print printing end position (substantially set at Step S160 and Step S165 in the Fig. 16). The determination at this time can be also made by detecting a feeding distance after the identifier PM of the base tape 101 is detected at the Step S10 by a predetermined known method, for example, as in the above. This procedure is repeated till the rear print printing end position is reached and the determination is satisfied, and when reached, the determination is satisfied and the routine goes on to the subsequent Step S680.

At Step S680, similarly to the above-mentioned Step S260, power feeding to the print head 23 is stopped, and printing of the pattern print R2 is stopped. At a result, printing of the pattern print R2 on the rear print area PE3 is completed (See Fig. 10M and Fig. 13M) and this routine is finished.

In the label producing apparatus of the first embodiment constructed as above, the predetermined label print R is carried out by the print head 23 on the tag print area PE1 of the cover film 103, the tag label tape 109 with print in the lamination structure including three layers of the cover film 103, the adhesive layer 101c and the separation sheet 101d is fed, and the tag label tape 109 with print is cut off by the cutting mechanism 15 to a predetermined length so as to produce the RFID label T.

At this time, the predetermined pattern print R1 is carried out by the print head 23 on the front print area PE2 located at the tape tip end side than the tag print area PE1 in the cover film 103, and the predetermined pattern print R2 is carried out by the print head 23 on the rear print area PE3 located at the tape rear end side than the tag print area PE1 in the cover film 103. Since the pattern prints R1, R2 are various additional information notified to the label users in relation to the production of the RFID label T, the portion other than the tag print area PE1 for the label print R corresponding to the transmission/reception contents can be effectively utilized without wasting it as a margin and can be used for various applications. Therefore, convenience for the label users can be improved.

Also, particularly in this embodiment, by cutting the layers other than the separation sheet 101d, which is left uncut, by the.half cut unit 35 and forming the front/rear half-cut lines HC1, HC2, when a user is to separate the other layers (label body 103, 101a to 101c) from the separation sheet 101d in order to affix the produced RFID label T to an affixing target, they can be easily separated by fingertips. Also, since the tag print area PE1 is located on the side of the label body 103, 101a to 101c but the front print area PE2 and the rear print area PE3 remain on the tape side by this separation upon use of the label, non-indispensable additional information or the like not particularly required to be printed on the label body 103, 101a to 101c for affixing can be used by printing the pattern prints R1, R2 on the front print area PE2 and the rear print area PE3.

Note that, in the above, a case where the half cut unit 35 cuts those other than the separation sheet 101d in the tag label tape 109 with print is described as an example, but not limited to this, only the separation sheet 101d may be cut off on the contrary.

The first embodiment is not limited to the above, but various variations are possible. The variations will be described below in order.

### (1-1) When the tape is not to be bonded:

That is, instead of the case where print is made on the cover film 103 different from the base tape 101 provided with the RFID circuit element To and they are bonded to each other as in the first embodiment, the present invention is applied to a cartridge for the tag-label producing apparatus for direct print on the cover film provided at the tag tape.

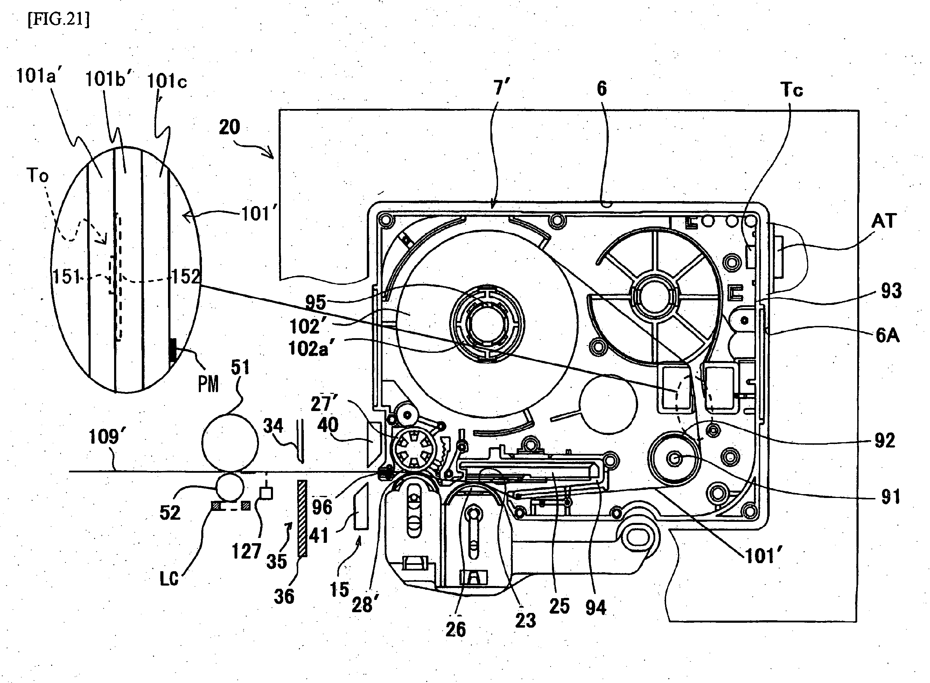

Fig. 21 is a plan view illustrating a detailed structure of a cartridge 7' of this variation and corresponds to the above-mentioned Fig. 4. The same reference numerals are given to the portions equivalent to those in Fig. 4 and the like and the description will be omitted as appropriate.

In Fig. 21, the cartridge 7' has a first roll 102' around which a thermal tape 101' is wound and a tape feed roller 27' that feeds the thermal tape 101' in the direction outside the cartridge 7'.

The first roll 102' has the band-state transparent thermal tape 101' on which a plurality of the RFID circuit elements To is sequentially formed in the longitudinal direction wound around a reel member 102a'. The reel member 102a' is rotatably fitted and stored in a boss 95 erected on the bottom surface of the cartridge 7'.

The thermal tape 101' wound around the first roll 102' is in the three-layered structure in this example (See a partially enlarged view in Fig. 21) in which a cover film 101a' made of polyethylene terephthalate (PET) and the like, an adhesive layer 101b' made of an appropriate adhesive, and a separation sheet 101c' are laminated in this order from the side wound inside toward the opposite side.

On the back side of the cover film 101a', the loop antenna 152 configured in the loop-coil shape for transmission/reception of information is provided integrally in this example, and the IC circuit part 151 is formed so as to be connected to that, which constitute the RFID circuit element To. On the back side of the cover film 101a', the separation sheet 101d' is bonded to the cover film 101a' through the adhesive layer 101b'. Further on the surface of the separation sheet 101c', a predetermined identifier for feeding control (an identifier painted in black in this example. Alternatively, it may be a drilled hole substantially penetrating the thermal tape 101' by laser machining or the like.) PM is provided at a predetermined position corresponding to each RFID circuit element To (the position on the front side than the tip end of the antenna 152 on the front side in the feeding direction in this example) as with the above-mentioned separation sheet 101d.

When the cartridge 7' is mounted to the cartridge holder 6 and the roller holder 25 is moved from the separated position to the contact position, the thermal tape 101' is held between the print head 23 and the platen roller 26 and between the tape feed roller 27' and a sub roller 28'. Then, the tape feed roller 27', the sub roller 28' and the platen roller 26 are rotated in synchronization, and the thermal tape 101' is fed out of the first roll 102'.

The fed-out thermal tape 101' is supplied from an opening portion 94 to the print head 23 on the downstream side in the feeding direction while it is guided by a substantially cylindrical reel 92 rotatably fitted by insertion into a reel boss 91 erected on the cartridge bottom surface. The print head 23 has its plurality of heating elements electrified by the above-mentioned print-head drive circuit 120 (See Fig. 6), by which the label print R is printed on the surface of the cover film 101a' of the thermal tape 101' and formed as the printed tag label tape 109 with print' and then, fed out of the cartridge 7' from a carry-out exit 96.

After feeding out of the cartridge 7', an access (information reading/writing) of the IC circuit part 151 is made through the above-mentioned loop antenna LC. After that, it is only necessary to perform the feeding by the feeding roller 51, cutting by the cutting mechanism 15 and the like similarly to the first embodiment, and the description thereof will be omitted.

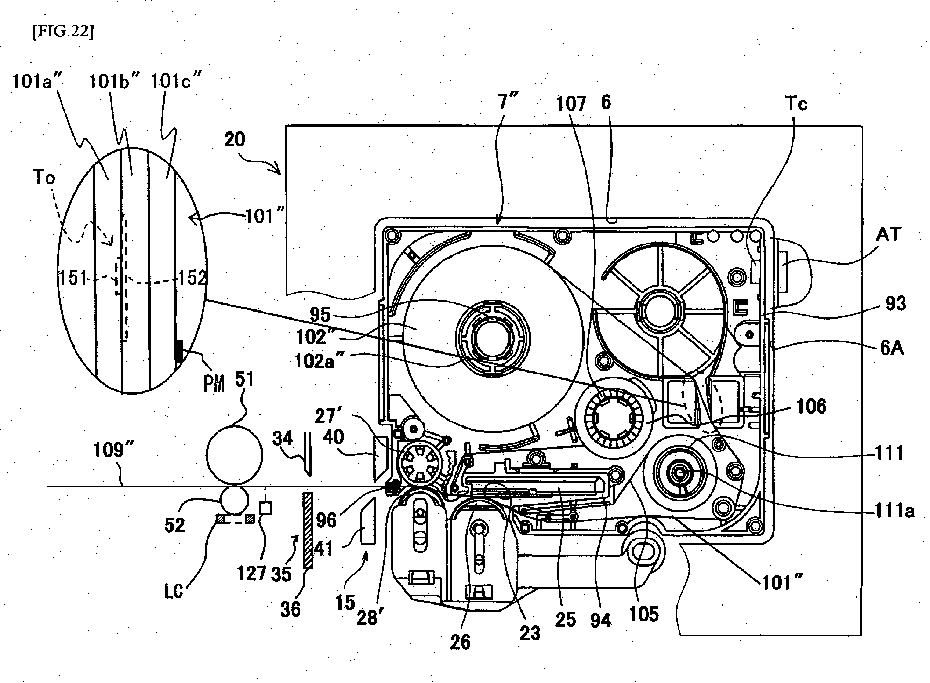

The half cut unit 35 is different from those corresponding to the so-called laminate type described in Fig. 3 and the like. That is, in the construction described in Fig. 3 and the like, the cradle 36 is located on the print head 23 side, while the half cutter 34 is on the platen roller 26 side. This is the construction for performing half-cut from the surface opposite to the separation sheet of the produced tape. However, when the thermal tape is used as in this variation (also when the ink ribbon is used in the type not using the laminate, which will be described later using Fig. 22), the separation sheet is located on the side opposite to that of the laminate type. Therefore, in order to apply the half-cut to a portion other than the separation sheet, arrangement of the cradle 36 and the half cutter 34 is made opposite. That is, the half cutter 34 is located on the print head 23 side, while the cradle 36 on the platen roller 26 side.

In this example, in order to enable automatic detection on the apparatus side of cartridge type information and the like relating to the cartridge 7', an RFID circuit element Tc for cartridge storing the information on the cartridge 7' in advance is disposed on an outer peripheral wall surface 93 of the cartridge 7'. Also, on a side wall portion 6A opposite to the RFID circuit element Tc in the cartridge holder 6, an antenna AT is provided for transmission/reception of a signal through non-contact wireless communication with the RFID circuit element Tc.

In this variation, also, though not shown in detail, the distance L from the tip end position in the tape feeding direction of the identifier PM to the tip end in the tape feeding direction of the RFID circuit element To in the thermal tape 101' is set in advance slightly larger than the distance Lo in the tape feeding direction between the mark sensor 127 and the print head 23 similarly to the first embodiment. As a result, by the same method as that described in the first embodiment using Figs. 10 to 14, in printing by the print head 23 and feeding of the printed tag label tape 109 with print' , by carrying out the pattern prints R1, R2 on the front/rear print areas PE2, PE3, the portion other than the tag print area PE1 on which the label print R is printed corresponding to the transmission/reception contents can be effectively utilized without wasting it as a margin, by which it can be made useful in various applications and convenience of label users is improved.

In the configuration of the above variation, the thermal tape is used as a tag tape to carry out the print only by heating of the print head 23, not particularly using an ink ribbon or the like, but not limited to this, a normal ink ribbon can be used for the print as in the first embodiment.

Fig. 22 is a plan view illustrating a detailed structure of a cartridge 7 " of such a variation and corresponds to the above-mentioned Fig. 21 and Fig. 4. The same reference numerals are given to the equivalent portions as those in Fig. 21 and Fig. 4 and the description will be omitted as appropriate.

In Fig. 22, the cartridge 7' ' of this variation has a first roll 102" around which a base tape 101 " is wound.

The first roll 102" has the band-state transparent base tape 101' ' on which a plurality the RFID circuit elements To is sequentially formed in the longitudinal direction wound around a reel member 102a".

The base tape 101" wound around the first roll 102" is in the three-layered structure in this example (See a partially enlarged view in Fig. 22) in which a colored base film 101a" made of polyethylene terephthalate (PET) and the like, an adhesive layer 101b" made of an appropriate adhesive, and a separation sheet 101c" are laminated in this order from the side wound inside toward the opposite side.

On the back side of the base film 101a", the loop antenna 152 constructed in the loop-coil shape for transmission/reception of information is integrally provided in this example and the IC circuit part 151 is formed so as to be connected to it, by which the RFID circuit element To is configured. On the back side of the base film 101a'', the separation sheet 101c'' is bonded to the base film 101a'' by the adhesive layer 101b". Also, on the surface of the separation sheet 101c'', similarly to the above, a predetermined identifier (an identifier painted in black in this embodiment. Alternatively, it may be a drilled hole penetrating the base tape 101" by laser machining or the like.) PM is provided at a predetermined position corresponding to each RFID circuit element To (the position on the front side from the tip end of the antenna 152 on the front side in the feeding direction in this example).

When the cartridge 7'' is mounted to the cartridge holder 6 and the roller holder 25 is moved from the separated position to the contact position, the base tape 101'' and the ink ribbon 105 are held between the print head 23 and the platen roller 26 and between the tape feed roller 27' and the sub roller 28'. Then, the tape feed roller 27', the sub roller 28' and the platen roller 26 are rotated in synchronization, and the base tape 101" is fed out of the first roll 102''.

On the other hand, the plurality of heating elements of the print head 23 is electrified by the print-head drive circuit 120 (See Fig. 6), the label print R corresponding to the stored information of the RFID circuit element To is printed on the surface of the base film 101a" of the base tape 101' ' and formed as the printed tag label tape 109 with print and then, fed out of the cartridge 7".

After feeding out of the cartridge 7", an access (information reading/writing) of the IC circuit part 151 through the above-mentioned loop antenna LC is made. After that, it is only necessary to execute the feeding by the feeding roller 51, cutting by the cutting mechanism 15 and the like similarly to the first embodiment, and the description thereof will be omitted.

In this variation, also, the distance L from the tip end position in the tape feeding direction of the identifier PM to the tip end in the tape feeding direction of the RFID circuit element To in the base tape 101'' is set in advance slightly larger than the distance Lo in the tape feeding direction between the mark sensor 127 and the print head 23 similarly to the variation in the Fig. 21. As a result, by the same method as that described in the first embodiment using Figs. 10 to 14, in printing by the print head 23 and feeding of the printed tag label tape 109 with print ", by carrying out the pattern prints R1, R2 on the front/rear print areas PE2, PE3, the portion other than the tag print area PE1 on which the label print R is printed corresponding to the transmission/reception contents can be effectively utilized without wasting it as a margin, by which it can be made useful in various applications and convenience of label users is improved.

### (1-2) Others

In the above, a pressure roller as the feeding portion is provided by which the tag label tape 109 with print, which is a tag medium, and the cover film 103, which is the print-receiving medium, are driven and relative movement is given between the tag-label tape or the cover film and the fixedly installed print head 23 or the loop antenna LC, but not limited to this. That is, on the contrary, the print head 23 may be driven by a predetermined moving mechanism (together with the loop antenna LC) so that the relative movement is given between the print head and the tag medium in the sheet-state or the like or the print-receiving medium. In this case, also, by executing the similar control in the relative positional relation similar to the above, the effects similar to the above-mentioned ones can be obtained.

Also, in the above, the half cut unit 35 is provided separately from the cutting mechanism 15, but not limited to this. That is, the half cut may be made by controlling a rotating angle of the movable blade 41 of the cutting mechanism 15 so as to make it smaller than that at the full-cut so that the cutting mechanism and the half cut unit can be used singularly. In this case, too, the same effect can be obtained. Alternatively, a half cut unit that forms the half-cut line HC1 and a half cut unit that forms the half-cut line HC2 may be provided.

A label producing apparatus that produces an ordinary print label not provided with the RFID circuit element To is not covered by the claims; in this case, in the label producing apparatus 1, the loop antenna LC, the transmitting circuit 306, and the reception circuit 307 can be omitted, and the RFID circuit element To is not needed, either, on the label side.

Also, in the first embodiment, the loop antenna is used as the apparatus antenna LC and the antenna 152 on the RFID circuit element To side, and information is transmitted/received by magnetic induction (including electromagnetic induction, magnetic coupling and other non-contact contact methods through a magnetic field), but not limited to this, a dipole antenna, a patch antenna or the like may be used as the above two antennas so as to perform information transmission/reception by wave communication .

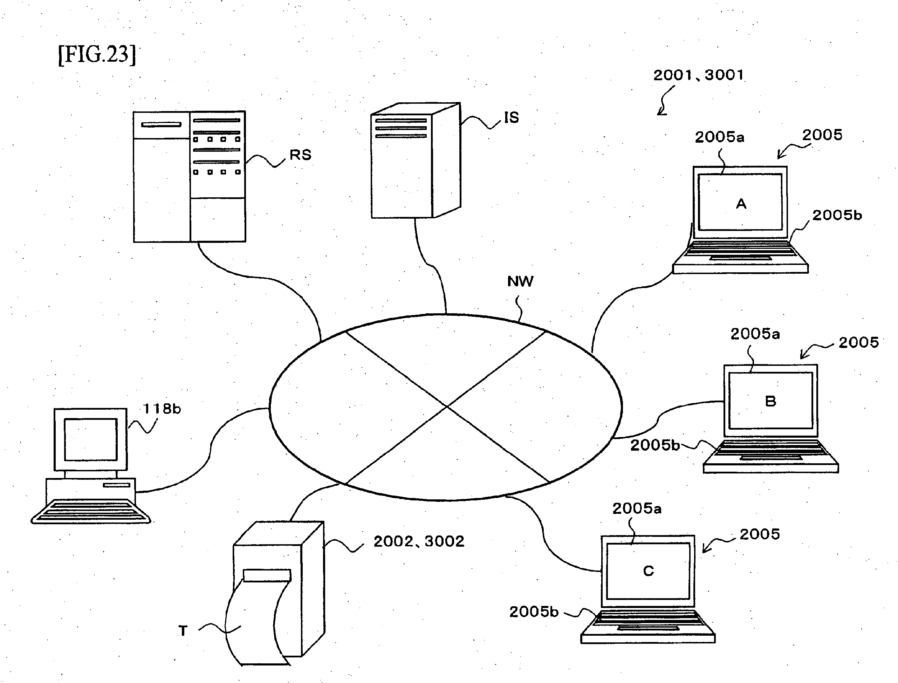

A second embodiment of the present invention will be described below using Figs. 23 to 42. In this embodiment, effective utilization of a margin is promoted by executing allocation for producing an ordinary label (without RFID tag) in a margin after the RFID label is produced. The equivalent portions to those in the first embodiment are given the same reference numerals and the description will be omitted or simplified as appropriate.

Fig. 23 is a system block diagram illustrating an RFID tag manufacturing system to which a tag-label producing apparatus of the second embodiment is applied and corresponds to Fig. 1 of the first embodiment.

In an RFID tag manufacturing system 2001 (tag-label manufacturing system) shown in Fig. 23, the tag-label producing apparatus (RFID tag information communication apparatus) 2002 is, similarly to the tag-label producing apparatus 1 of the first embodiment, connected to the route server RS, a plurality of terminals 2005 (in this example, arrangement of three terminals of "a terminal A", "a terminal B", and "a terminal C") for operating the tag-label producing apparatus 2002, the general-purpose computer 118b, and the information server IS through the communication line NW and constitutes a (wide area, for example) network.

The above terminal 2005 is a so-called personal computer (PC) terminal provided with a display 2005a, an operating portion 2005b such as a keyboard (may be a mouse or the like), and has a CPU 2005c (not shown), which is a central processing unit, a ROM (not shown) and a RAM (not shown), which are memory portion and the like. The CPU 2005c receives an input of various information and an input of execution commands of various processing through the operating portion 2005b and outputs the input information, commands and the like to other equipment as appropriate through the communication line NW. Also, the display 2005a makes predetermined display such as information received through the communication line NW (the detail will be described later).

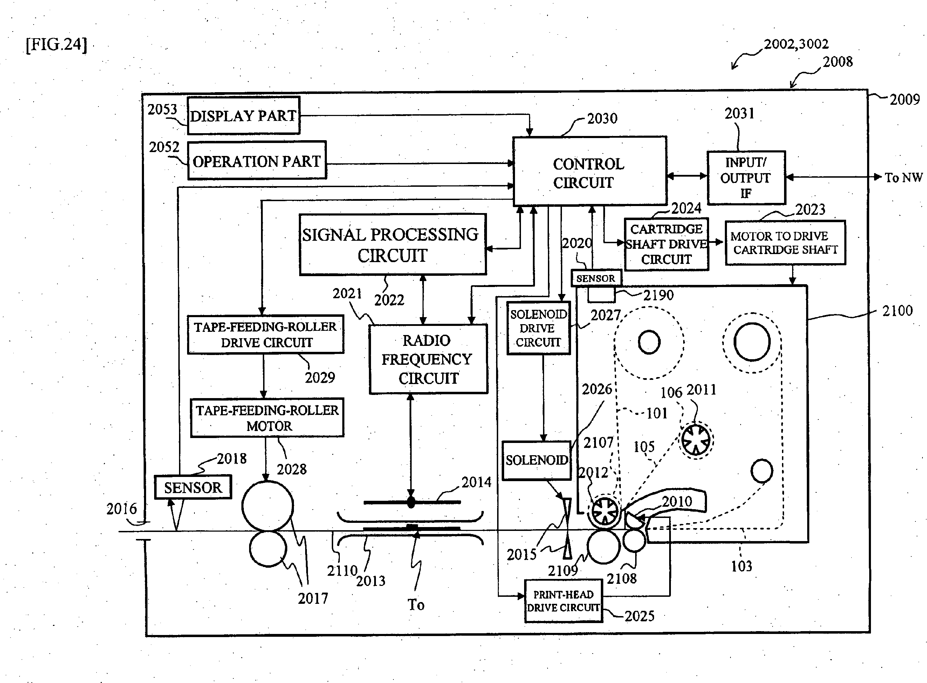

Fig. 24 is a conceptual block diagram illustrating a detailed structure of the tag-label producing apparatus 2002.

In Fig. 24, a main body 2008 of the tag-label producing apparatus 2002 is provided with a cartridge holder portion (not shown) formed in the shape of a recess, and a cartridge 2100 for producing an RFID label Tt provided with the RFID circuit element To (or an ordinary label Tu not provided with an RFID circuit element To. Both details will be described later) is detachably mounted to the holder portion.

The main body 2008 has a housing 2009 provided with the cartridge holder portion to which a cartridge 2100 is fit and also constituting the outline, a print head (thermal head in this case) 2010 that carries out predetermined print on the cover film 103, a driving shaft 2011 that drives the ink ribbon 105 after the printing on the cover film 103, a pressure roller drive shaft 2012 for bonding the cover film 103 and the base tape 101 and for feeding it out from the cartridge 2100 as a tag-label tape with print 2110, an antenna 2014 that transmits/receives signals with an RFID circuit element To provided in the tag-label tape with print 2110 (the details will be described later) via wireless communication using a high frequency band such as a UHF band (in this example), a cutter 2015 that cuts the tag-label tape with print 2110 at a predetermined timing and to a predetermined length, thereby forming the RFID label Tt or the ordinary label Tu, a pair of feeding guides 2013 that sets and holding the RFID circuit element To at a predetermined access area facing the antenna 2014 at the time of receiving/transmitting signals by the wireless communication described above and guiding the tape 2110 (= RFID label Tt or the ordinary label Tu) after the cutting, a tape-feed roller 2017 that feeds and outputting the guided RFID label Tt or the ordinary label Tu to a carry-out exit 2016, and a tape-end sensor 2018 that detects presence of the RFID label T at the carry-out exit 2016.

Also, the main body 2008 has a radio frequency circuit 2021 for accessing (for writing or reading) the RFID tag circuit element To via the antenna 2014, a signal processing circuit 2022 that processes signals read out from the RFID circuit element To, a motor to drive cartridge shaft 2023 that drives the driving shaft 2011 and the tape-feed-roller drive shaft 2012, a cartridge shaft drive circuit 2024 that controls the driving of the motor to drive cartridge shaft 2023, a print-head drive circuit 2025 that controls power feeding to the print head 2010, a solenoid 2026 that drives the cutter 2015 for the cutting operation, a solenoid drive circuit 2027 that controls the solenoid 2026, a tape-feeding-roller motor 2028 that drives the feeding roller 2017, a tape-feeding-roller drive circuit 2029 that controls the tape-feeding-roller motor 2028, a sensor 2020 that detects an irregular shape of each of the plurality of identifiers provided at a detected portion 2190 provided at the cartridge 2100 by a known method (mechanically or optically, for example), an operation portion 2052 made of a plurality of character input keys and various function keys into which character data and instruction data relating to print can be input by an operator, a display portion 2053 which can display the character data and instruction data input from the operation portion 2052 or a notification signal (the detail will be described later) to the operator, and a control circuit 2030 that controls the entire operation of the tag-label producing apparatus 2002 via the radio frequency circuit 2021, the signal processing circuit 2022, the cartridge shaft drive circuit 2024, the print-head drive circuit 2025, the solenoid drive circuit 2027, the tape-feeding-roller drive circuit 2029 and the like.

The control circuit 2030 is a so-called microcomputer. Though detailed description will be omitted, the control circuit 2030 includes a CPU, which is a central processing unit, ROM, RAM, non-volatile memory and the like, and executes signal processing according to a program stored in the ROM in advance using the temporary storage function provided by the RAM. Furthermore, the control circuit 2030 is connected to the communication line NW via the input/output interface 2031, for example, so that information can be exchanged among the route server RS, the other terminals 2005, the general-purpose computer 118b, the information server IS and the like connected to the communication line NW.

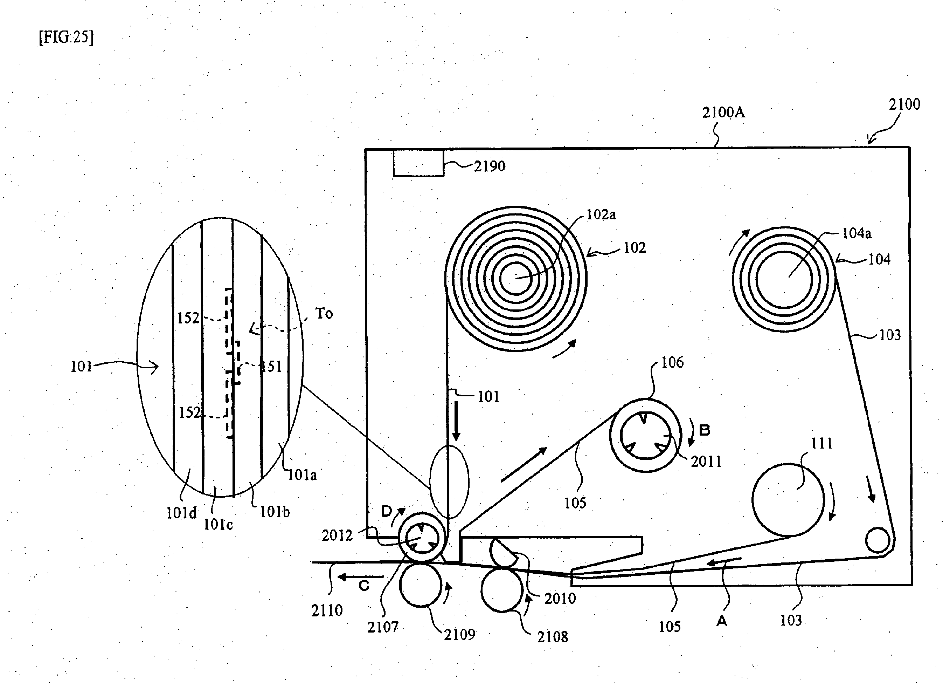

Fig. 25 is an explanatory diagram for illustrating the detailed structure of the cartridge 2100.

In Fig. 25, the cartridge 2100 includes a housing 2100A, the first roll 102 disposed within the housing 2100A, the second roll 104, around which the cover film 103 is wound, a ribbon-supply-side roll 111 that feeds out the ink ribbon 105, the ribbon take-up roller 106, and a pressure roller 2107 that presses and bonds the base tape 101 and the cover film 103 to each other so as to form the tag-label tape with print 2110 while feeding it in the direction of the arrow A.

The base tape 101 has a four-layered structure (in this example) including the adhesive layer 101a, the base film 101b, the adhesive layer 101c, and the separation sheet 101d laminated in this order as in the first embodiment.

The functional configuration of the RFID circuit element To provided at the base film 101b is the same as that shown in Fig. 5 in the first embodiment. That is, the RFID circuit element To includes the antenna 152 (however, constructed by a dipole antenna or the like different from the first embodiment) that transmits/receives a signal contactlessly using a high frequency such as the UHF band or the microwave band with the antenna 2014 on the tag-label producing apparatus 2002 side and the IC circuit part 151 connected to this antenna 152.

The separation sheet 101d is used when the RFID label Tt finally completed in the label state (or the ordinary label Tu) is affixed to a predetermined article or the like, and it is affixed to the article or the like by the adhesive layer 101c by peeling off the separation sheet. In this embodiment, the identifier (identifying mark) may be provided for feeding control on the separation sheet 101d or the like as in the first embodiment.

The second roll 104 has the cover film 103 wound around as in the first embodiment, and the ink ribbon 105 is brought into contact with the back face of the cover film 103 by being pressed by the print head 2010.

The ribbon take-up roller 106 and the pressure roller 2107 are rotated/driven by a driving force of a motor 2023 to drive cartridge shaft (See the above-mentioned Fig. 24) which is a pulse motor, provided outside the cartridge 2100, respectively, for example, transmitted to the driving shaft 2011 and the tape-feed-roller drive shaft 2012.

At the detected portion 2190, information relating to presence of the RFID circuit element To in the cartridge 2100 (cartridge information) is stored/held (that is, information on whether the base tape 101 provided with the RFID circuit element To is provided or, in case of an embodiment not covered by the claims, an ordinary tape not provided with the RFID circuit element To is provided, and the former information is stored in this example). Other than the above information on presence of a tag, tag attribute parameters (tape width, arrangement interval of RFID circuit elements To, communication sensitivity of IC circuit part 151 and the antenna 152, memory capacity of the IC circuit part 151, communication protocol used for communication, electric wave transmission output, frequency, communicable distance and the like) may be recorded. In this specification, various information including the above tag presence information and the tag attribute parameters is collectively called as "tape attribute parameter information". Before making an access from the antenna 2014 to the RFID tag information of the IC circuit part 151 of each of the RFID circuit elements To provided at the base tape 101, the information is read out and a corresponding signal is input to the control circuit 2030. It may be so configured that correspondence information between the type of the cartridge 2100 and the various parameter data (the detail will be described later) relating to the RFID circuit element To is stored/held in advance, the type information of the cartridge 2100 stored in the detected portion 2190 is read out by the sensor 2020 and an access is made to the information server IS on the basis of that so as to obtain various tape attribute parameter information and the like.

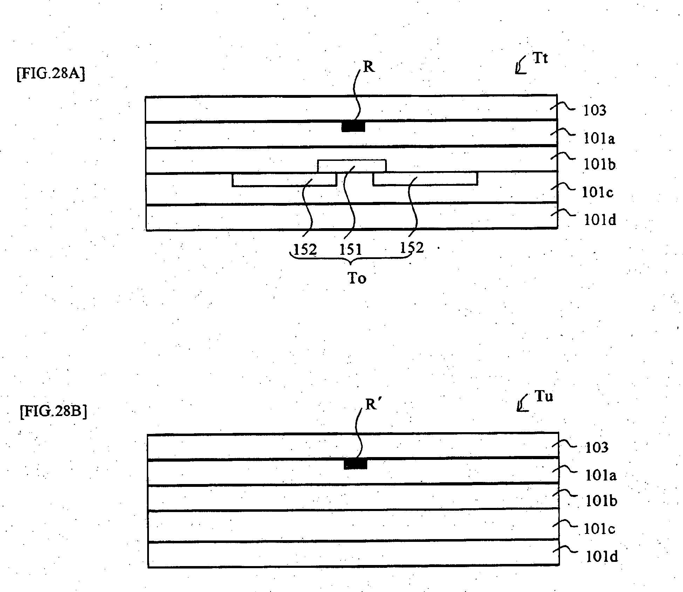

The behavior of the base tape 101 and the cover film 103 in the cartridge 2100 configured as above is substantially the same as that of the first embodiment. That is, the base tape 101 fed out of the first roll 102 is supplied to the pressure roller 2107. On the other hand, the cover film 103 is fed out of the second roll 104, and the plurality of heating elements of the print head 2010 are electrified by the print-head drive circuit 2025. As a result, the print R (See Fig. 28, which will be described later) is printed on the back face of the cover film 103. Then, the base tape 101 and the cover film 103 on which printing is finished are bonded and integrated by the pressure roller 2107 and the sub roller 2109, formed as the tag-label tape with print 2110 and fed out of the cartridge 2100.

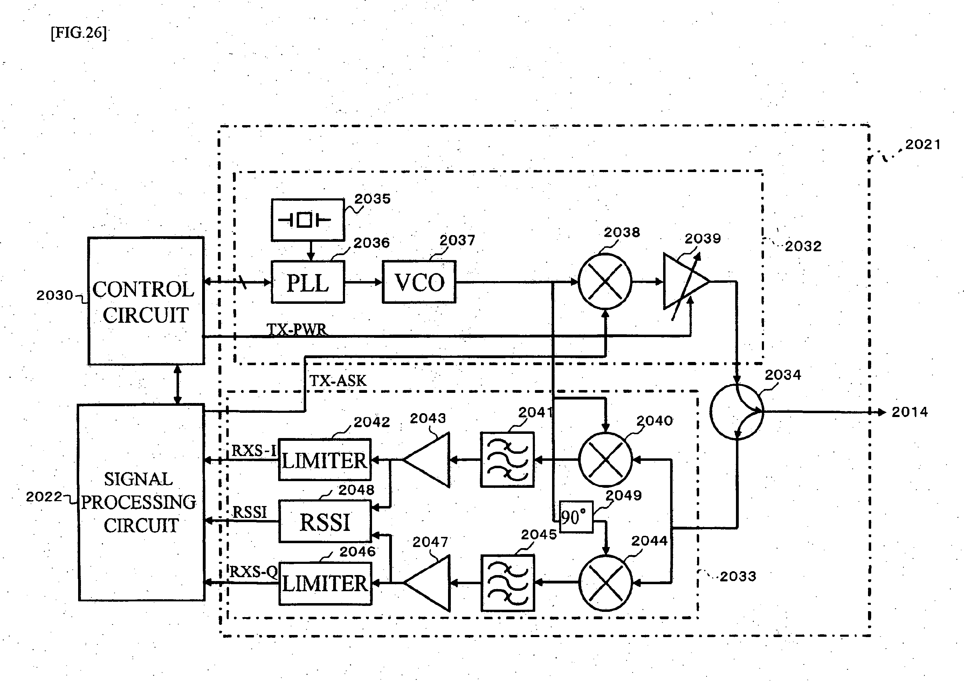

Fig. 26 is a functional block diagram illustrating functions of the radio frequency circuit 2021 in detail. In Fig. 26, the radio frequency circuit 2021 includes a transmitting portion 2032 that transmits a signal to the RFID circuit element To through the antenna 2014, a receiving portion 2033 that inputs the reflected waves from the RFID circuit element To through the antenna 2014, and a transmit-receive splitter 2034.

The transmitting portion 2032 includes a crystal oscillator 2035 that generates a carrier wave for accessing (reading or writing) the RFID tag information stored in the IC circuit part 151 of the RFID circuit element To according to a control signal from the control circuit 2030, a PLL (Phase Locked Loop) 2036, a VC0 (Voltage Controlled Oscillator) 2037, a transmission multiplying circuit 2038 (however, it may be replaced by an amplitude factor variable amplifier or the like in the case of amplitude modulation) that modulates (in this case, amplitude modulation according to the "TX_ASK" signal supplied from the signal processing circuit 2022) the carrier wave generated as described above according to a signal supplied from the signal processing circuit 2022, and a variable transmission amplifier 2039 that amplifies the modulated waves (RFID tag information) modulated by the transmission multiplying circuit 2038 with an amplification factor determined according to a "TX_PWR" signal supplied from the control circuit 2030. The UHF frequency band and the microwave band are preferably used for the carrier wave generated as described above and the output from the transmission amplifier 2039 is transmitted to the antenna 2014 through the transmit-receive splitter 2034 and is supplied to the IC circuit part 151 of the RFID circuit element To. Incidentally, the RFID tag information is not limited to the signals thus modulated but it may be only a plain carrier wave.

The receiving portion 2033 includes a first receiving signal multiplying circuit 2040 that multiplies the reflected wave received from the RFID circuit element To through the antenna 2014 by the carrier wave generated as described above for demodulation, a first bandpass filter 2041 that extracts only the signals within the necessary frequency band from the output of the first receiving signal multiplying circuit 2040, a first receiving signal amplifier 2043 that amplifies the output of the first bandpass filter 2041, a first limiter 2042 that further amplifies the output of the first receiving signal amplifier 2043 and converting the output thus amplified into a digital signal, a second receiving signal multiplying circuit 2044 that multiplies the reflected wave received from the RFID circuit element To through the antenna 2014 by the carrier wave that have been delayed by a phase shifter 2049 by 90° after having been generated as described above for demodulation, a second bandpass filter 2045 that extracts only the signals within the necessary frequency band from the output of the second receiving signal multiplying circuit 2044, a second receiving signal amplifier 2047 that amplifies the output of the second bandpass filter 2045, and a second limiter 2046 that further amplifies the output of the second receiving signal amplifier 2047 and converting the output thus amplified into a digital signal. Then, the signal "RXS-I" output from the first limiter 2042 and the signal "RXS-Q" output from the second limiter 2046 are input to the signal processing circuit 2022 for processing.

Furthermore, the outputs of the first receiving signal amplifier 2043 and the second receiving signal amplifier 2047 are also input to an RSSI (Received Signal Strength Indicator) circuit 2048. The signal "RSSI" indicating the intensity of these signals is input to the signal processing circuit 2022. As described above, the tag-label producing apparatus 2002 of this embodiment performs demodulation of the reflected wave from the RFID circuit element To by I-Q quadrature demodulation.

As described above, the tag-label producing apparatus 2002 of this embodiment can accept a label production operation signal from the plurality of terminals 2005 (hereinafter referred to as "JOB" as appropriate. The detail will be described.later) (See Fig. 23) and is provided with a function which can produce an RFID label Tt or an ordinary label Tu according to the label production operation signal. An essential part of this embodiment is that after a predetermined length of the base tape 101 has been consumed (or consumption is scheduled) for producing the RFID label Tt by the label production operation signal from one of the plurality of terminals 2005, when there remains a surplus portion of the base tape 101, the label production operation signal corresponding to the surplus length can be newly accepted from any of the plurality of terminals 2005 (including the terminal 2005 concerned) so that the surplus portion can be effectively utilized for production of the ordinary label Tu. The detail and principle methods will be described below.

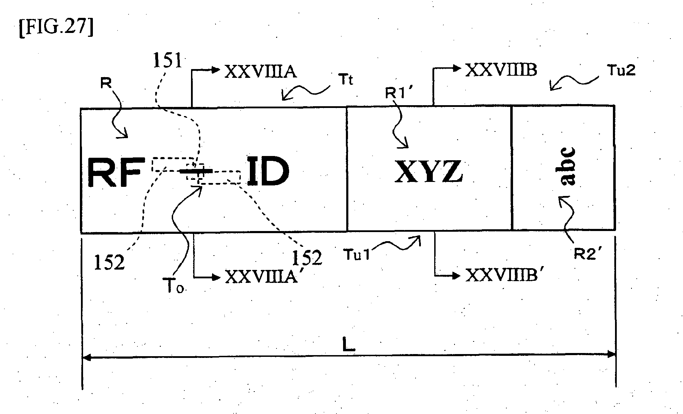

Fig. 27 is a top view illustrating an example of an appearance of the RFID label Tt and the ordinary label Tu formed by completing the information writing of the RFID circuit element To and cutting of the tag-label tape with print 2110 as mentioned above. Also, Fig. 28A is a cross sectional view by the XXVIIIA-XXVIIIA' section in Fig. 27 and Fig. 28B is a cross sectional view by the XXVIIIB-XXVIIIB' section in Fig. 27.

In Figs. 27, 28A and 28B, an example is illustrated that a single RFID label Tt and two ordinary labels Tu1, Tu2, totaling in three labels, are produced using a tape of a fixed length L corresponding to the arrangement pitch of the RFID circuit elements To in the base tape 101.

In Figs. 27 and 28A, the RFID label Tt is in the five-layered structure in which the cover film 103 is added to the four-layered structure shown in Fig. 25 made of four layers of the cover film 103, the adhesive layer 101a, the base film 101b, the adhesive layer 101c, and the separation sheet 101d from the cover film 103 side (upper side in Fig. 28A) to the opposite side (lower side in Fig. 28A). The RFID circuit element To including the antenna 152 provided on the back side of the base film 101b as mentioned above is provided in the adhesive layer 101c, and the print R (characters of "RF-ID" representing the type of the RFID label Tt in this embodiment) is printed on the back face of the cover film 103.

In Figs. 27 and 28B, the ordinary label Tu1 is constructed in five layers of the cover film 103, the adhesive layer 101a, the base film 101b, the adhesive layer 101c, and the separation sheet 101d as in the RFID label Tt. On the back face of the cover film 103, a print R'1 (alphabets of "XYZ" in this example) is printed in the label longitudinal direction. Note that, the sectional structure of the ordinary label Tu2 has also the five layers as in Fig. 28B, and a print R2' (alphabets of "abc" in this example) is printed in the label width direction on the back face of the cover film 103.

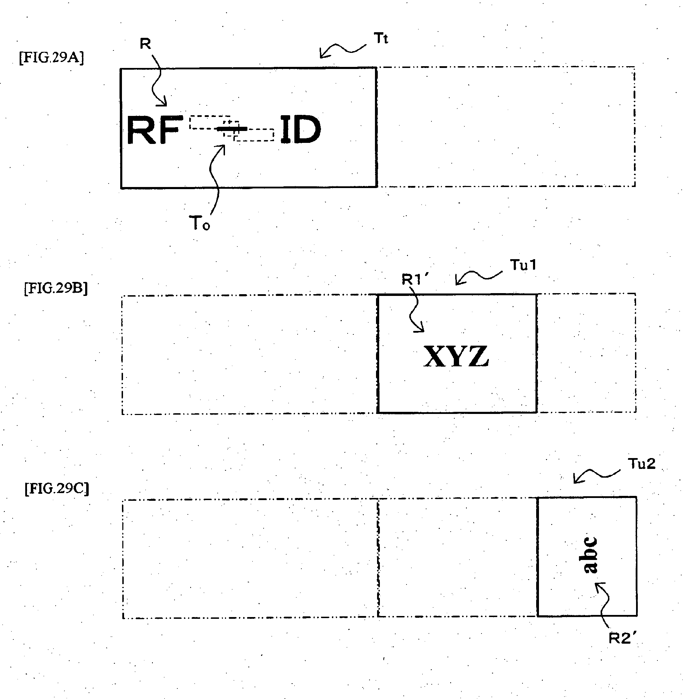

As above, the tag-label producing apparatus 2002 further produces the ordinary label Tu (two ordinary labels Tu1, Tu2 in this example. See Figs. 29B and 29C) using the surplus portion generated in the tape (a portion by two-dot chain line in Fig. 29A) after a portion is consumed (or consumption is scheduled) for producing the RFID label Tt. At a result, the surplus portion can be effectively utilized without waste.

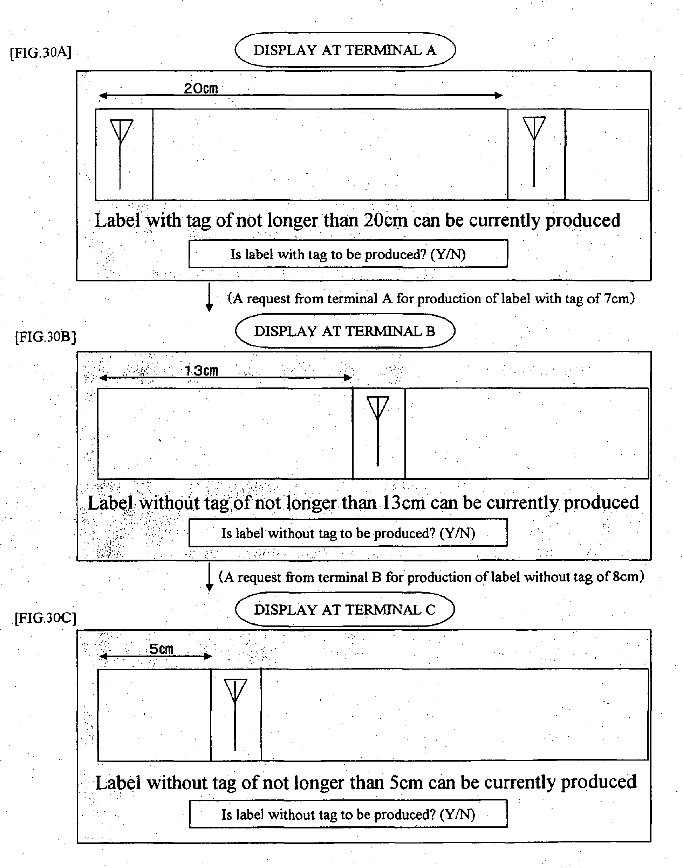

Fig. 30 shows an example of information of a label which can be currently produced and is displayed on the display 2005a of the terminal 2005 when an operation for producing the RFID label Tt and the ordinary label Tu is accepted from the plurality of terminals 2005 in the tag-label producing apparatus 2002. In this example, a case is shown that when a JOB is accepted by the terminal A, the terminal B and the terminal C in this order, it is displayed on the display 2005a of each terminal.

First, Fig. 30A shows an example of an accepting situation displayed on the display 2005a of the terminal A. At a result display, the operator of the terminal A can verify the information of the label which can be currently produced. Here, a state where the RFID label of not longer than 20 cm (= substantially equivalent to the fixed length L corresponding to the arrangement pitch of the above-mentioned RFID circuit element To) (hereinafter, referred to as a label with tag, as appropriate) can be produced, and a label with tag with the length up to 20 cm can be produced from the terminal A.

Fig. 30B shows an example of the accepting situation displayed on the display 2005a of any of the terminals (the terminal B in this example) when a JOB of a label with tag of 7 cm was transmitted (a label production operation signal is output) from the terminal A in the state of Fig. 30A. At a result display, the operator of the terminal B can verify the information of the label which can be currently produced. Here, such a situation is shown that the ordinary label (hereinafter referred to as label without tag as appropriate) Tu with 13 cm or less obtained from 20 cm - 7 cm can be currently produced since the JOB of the label with tag of 7 cm was accepted at the terminal A earlier. Therefore, the label without tag with the length up to 13 cm can be produced from the terminal B at this time.

Fig. 30C shows an example of the accepting situation displayed on the display 2005a of any of the terminals (the terminal C in this example) when a JOB of a label without tag of 8 cm was transmitted from the terminal B in the state of Fig. 30B. By this display, the operator of the terminal C can verify the information of the label which can be currently produced. Here, such a situation is shown that the label without tag of 5 cm or less obtained from 20 cm - 7 cm - 8 cm can be currently produced since the JOB of the label with tag of 7 cm has been already accepted at the terminal A and then, the label without tag of 8 cm was accepted at the terminal B. Therefore, the label without tag with the length up to 5 cm can be produced from the terminal C at this time.

If the length of the label without tag which can be produced is short, the display content may be displayed such that the label without tag in vertical writing (label width direction) can be produced, as shown in Fig. 29C, for example.

As above, since the label information which can be currently produced is displayed as the latest information, when a surplus of a tag tape is generated, the length information on the surplus is displayed so that the operator can recognize it, and the operator can effectively utilize the surplus without wasting it.

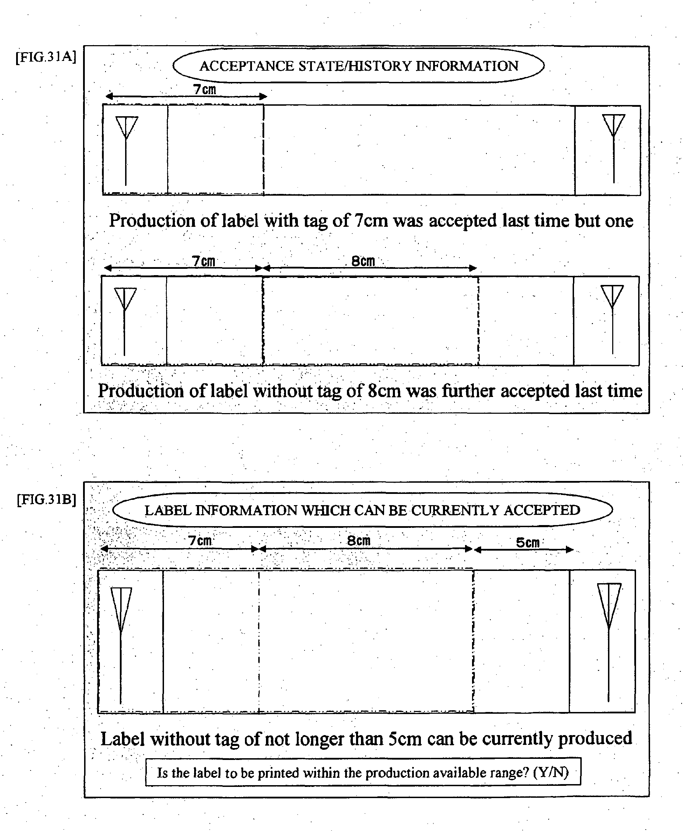

In Fig. 30, a case was described that the label information which can be currently produced is displayed, but not limited to this. For example, history information (JOB which has been already accepted) may be displayed. Fig. 31A shows such a variation. In this example, the JOB which has been already accepted is displayed as history information in the order from the above as "acceptance state/history information", and a state is shown that first, the JOB of the label with tag of 7 cm has become as having been already accepted, and then, the JOB of the label without tag of 8 cm has become as having been already accepted (corresponding to the state in the above-mentioned Fig. 30C).

In this example, a label image is displayed in a plurality of stages in a time series, but history information may be displayed on the image display of one label (by superimposing or the like). Also, in addition to the display shown in Fig. 31A (or instead of it), the label information which can be currently accepted may be displayed as shown in Fig. 31B. In this "currently acceptable label information", too, it is preferable to make the information on the currently available label identified easily by an operator through shading display or the like of the length of the label scheduled to be produced in the display of the history information as in Fig. 31A. At this time, display such as "Is label without tag to be produced? (Y/N)" may be made as in the above-mentioned Figs. 30A to 30C. But in the example in Fig. 31B, display is made so that selection can be made on whether printing is to be done or not according to the currently available label length. At this time, when printing is selected, display may be made for further selection between printing with print contents reduced (or shortened) according to the.currently available label length and printing in the vertical writing as in the above-mentioned Fig. 29C (which will be displayed as "recommended information" which can maximize effective utilization of the surplus portion).

In Figs. 31A and 31B, a unit to be displayed as history information is one cycle (the detail will be described later), but the history information of the previous cycle may be displayed.

As above, by displaying the history information, the operator can recognize previous production history information together with the changing (decreasing) label information which can be newly accepted according to the label production, and information quantity which can be referred to for effective utilization of the base tape 101 is increased and convenience can be improved.

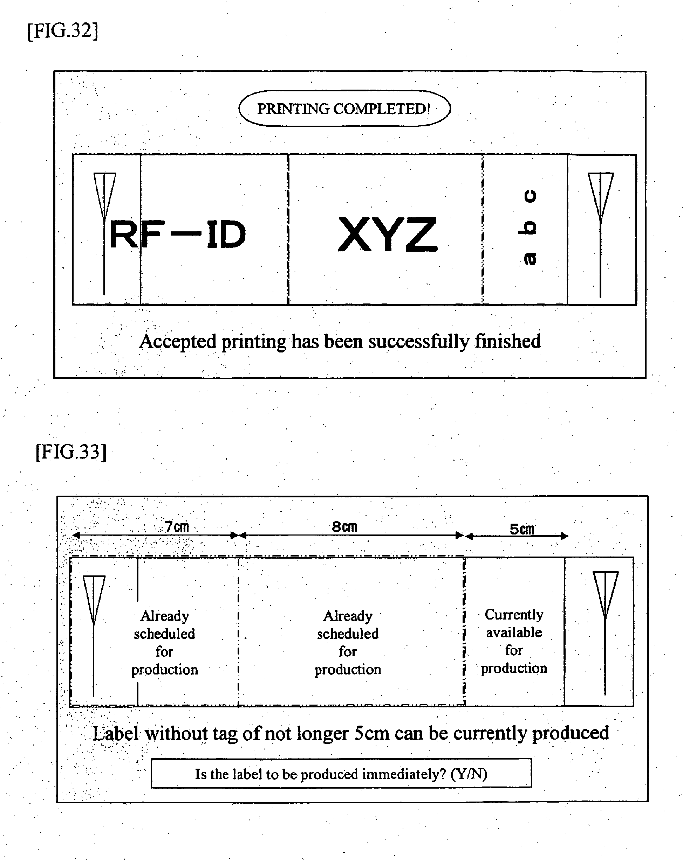

As the result of acceptance of JOB with the length of the tape for one cycle sequentially from the appropriate terminal 2005 based on the above display, a margin portion is to be used without a waste. In this state, production of each label is executed. Fig. 32 is a view illustrating an example of display on the display 2005a that the label production has been completed (completion is notified to the operator). This example shows a state where the JOB of the three labels in the above-mentioned Fig. 27 (RFID label Tt, ordinary label Tu1, ordinary label Tu2) is accepted and allocated to the portion of the length L without a waste and then, production completion of the labels Tt, Tu1, Tu2 in a lump sum without a waste is notified to the operator.

Fig. 33 shows an example displaying that if a function which can start production of a label (even though the operator accepts that a waste will be generated in the surplus portion of the tag tape) is provided (=forced printing, the detail will be described later), a question on whether the forced printing function is to be done or not is displayed on the display 2005a before the accepted JOB satisfies the tape length of one cycle.

In this example, first, the JOB of the label with tag of 7 cm becomes as having been already accepted, and then, the JOB of the label without tag of 8 cm becomes as having been already accepted, but the label length of 5 cm still remains as a surplus portion and the label without tag of this length can be produced. Thus, it is shown that the label production is not carried out yet but in the standby state (corresponding to the state in the above-mentioned Fig. 30C). In this case, "Is label to be produced now?" is displayed to ask if the above label with tag of 7 cm and the above label without tag of 8 cm are to be produced immediately even knowing that the above 5 cm will be wasted as the surplus portion. By making such a display, particularly in the case of a need that the label should be produced immediately even though it would lead to a surplus portion in the tag tape, the need is handled and the label can be produced immediately.

The processing at the terminal 2005 and the tag-label producing apparatus 2002 executed when the label production operation is performed by an operator using the operating portion 2005b of the terminal 2005 will be described below. In the above description, the case was described that a plurality of JOBs is accepted for the length of one cycle as a predetermined length unit of the base tape 101 (length substantially equal to the arrangement pitch of the RFID circuit elements To), predetermined determination is made for the tape length for one cycle, and printing is carried out by the unit of one cycle. In the following flow, the case will be described that the plurality of JOBs is accepted for the length of two cycles as the predetermined length unit (length substantially equal to twice of the arrangement pitch of the RFID circuit elements To), the predetermined determination is made for one cycle of then, and the printing is carried out.

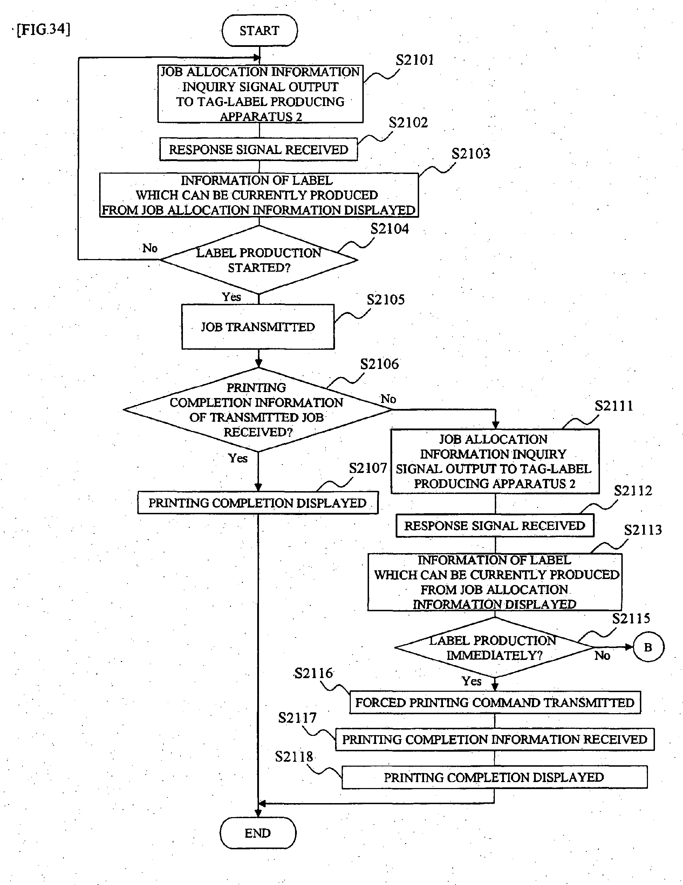

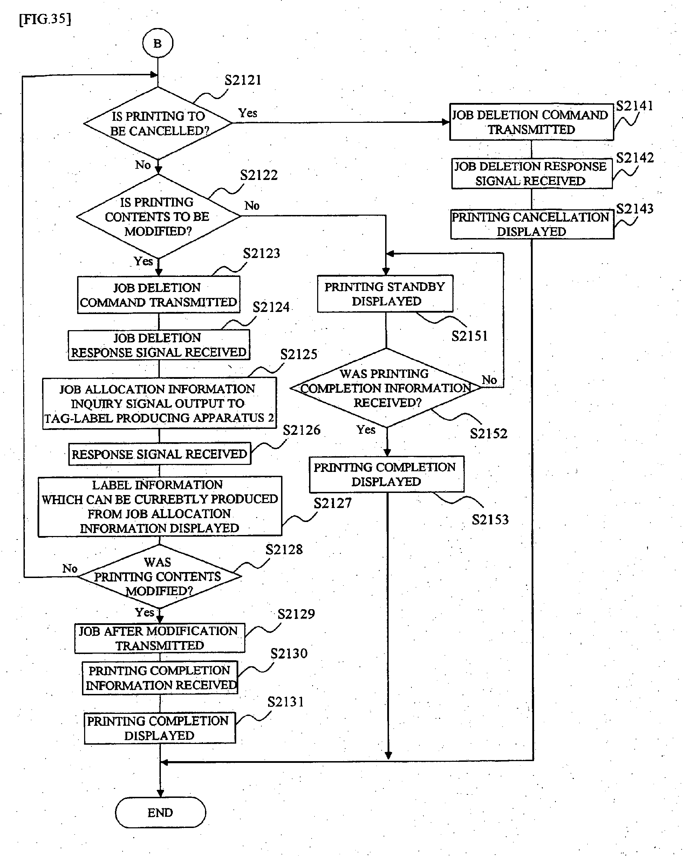

Figs. 34 and 35 are flowcharts illustrating a control procedure executed by a CPU 2005c of the terminal 2005.

In Fig. 34, when the operator performs a production operation of a tag-label through the operating portion 2005b of the appropriate terminal 2005, this flow is started.

First, at Step S2101, an inquiry signal of JOB allocation information is output to the tag-label producing apparatus 2002 through the communication line NM. The JOB allocation information includes information on whether there is any JOB already accepted at the tag-label producing apparatus 2002 or if there is an accepted JOB, on which part of the tape for two cycles it is allocated (the details of JOB allocation will be described later).

In response to the inquiry signal at the Step S2101, the tag-label producing apparatus 2002 calculates label information which can be currently produced and transmits a response signal including this information, and the routine goes on to the subsequent Step S2102, where the response signal transmitted from the tag-label producing apparatus 2002 side (including information such as type of labels which can be currently produced and label length information) is received.

Then, at Step S2103, based on the information received at the above Step S2102, a display control signal is output to the display 2005a and the label information is displayed (See the above-mentioned Figs. 30 and 31). At this time, the similar display may be made on a display portion 2053 of the tag-label producing apparatus 2002.

After that, the routine goes on to Step S2104, and it is determined if a label production start instruction signal is input or not from the operating portion 2005b by operation of an operator. When the operator performs the production start instruction through the operating portion 2005b according to the display on the display 2005a at Step S2103, the determination at Step S2104 is satisfied, and the routine goes on to Step S2105. Until the production start instruction is given, the determination at Step S2104 is not satisfied, and the routine returns to Step S2101 and the same procedure is repeated.

At Step S2105, a JOB according to the above production operation by the operator through the operating portion 2005b is generated and output to the tag-label producing apparatus 2002 through the communication line NW. The JOB includes JOB identification information for identifying each JOB, label length information (to be produced by the JOB) corresponding to the JOB, and RFID tag information identification signal indicating whether or not there is information to be written in the RFID circuit element To when the RFID label T including the RFID circuit element To is to be produced.

After that, the routine goes on to step S2106, and it is determined if printing completion information corresponding to the JOB transmitted at the above Step S2105 is received from the tag-label producing apparatus 2002. If allocation and printing execution (the detail will be described later) of the JOB transmitted at Step S2105 at the tag-label producing apparatus 2002 are completed and the printing completion information is received from the tag-label producing apparatus, the determination is satisfied, the routine goes on to Step S2107, where a display control signal corresponding to the received printing completion information is output to the display 2005a to indicate that the printing of the tag-label has been completed (see the above-mentioned Fig. 32), and this flow is finished.

On the other hand, if there is no printing completion information corresponding to the JOB transmitted at Step S2105 received, the determination is not satisfied, and the routine goes on to Step S2111. As for presence of the receiving of the printing completion signal, it may be determined as no receiving when a predetermined time has elapsed by a timer or the like.

At Step S2111, similarly to Step S2101, an inquiry signal of JOB allocation information is output to the tag-label producing apparatus 2002 through the communication line NW.

After that, the routine goes on to Step S2112, a response signal is received from the tag-label producing apparatus 2002 similarly to Step S2102, and at Step S2113, the label information is displayed similarly to Step S2103.

At this time, the JOB having been allocated at the corresponding tag-label producing apparatus 2002 has not reached one cycle (in total) and a surplus portion remains in the base tape 101, and thus, printing has not been completed yet at Step S2106 (the detail will be described later). The label information displayed on the display 2005a or the like at Step S2113 is information including such contents (label length information which can be further produced with the remaining portion in order not to waste the label). Therefore, at Step S2113, display of the "recommended information" or the like may be made which recommends label production with the above remaining portion in order that the operator can surely recognize this. By the procedure at Steps S2111 to Step S2113, the operator can recognize that the allocated JOB has not reached one cycle but a surplus portion remains in the tape.

When the above Step S2113 is finished, the routine goes on to Step S2115, and it is determined if a forced production start instruction signal is input from the operating portion 2005b by operation of the operator. When the operator gives an instruction to start label production immediately through the operating portion 2005b knowing that a wasteful portion would be generated in the tape (= forced printing start) according to the display on the display 2005a, the determination at Step S2115 is satisfied, and the routine goes onto Step S2116. If the operator does not perform the forced printing start operation at Step S2115, the routine goes on to Step S2121, which will be described later in Fig. 35.

At Step S2116, a forced printing command is transmitted (output) to the tag-label producing apparatus 2002 so as to start label printing by the tag-label producing apparatus 2002. When the tag-label producing apparatus 2002 completes the label printing and transmits the corresponding printing completion information, the transmitted printing completion information is received at Step S2117, a corresponding display control signal is output to the display 2005a at Step S2118 so as to display that the forced printing is completed, and this flow is finished.

In Fig. 35, when the forced printing is not instructed and the determination is not satisfied at Step S2115, it is determined at Step S2121 if a production cancellation instruction signal is input from the operating portion 2005b by operation of the operator. If the operator performs a label production cancellation operation (printing cancellation operation) through the operating portion 2005b, the determination at Step S2121 is satisfied and the routine goes on to Step S2141.

At Step S2141, an instruction signal to delete the JOB which has been already transmitted at Step S2105 is output (transmitted) to the tag-label producing apparatus 2002. In response to this, when the label producing apparatus 2002 completes deletion of the JOB and transmits a corresponding JOB deletion response signal, the transmitted JOB deletion response signal is received at Step S2142, a corresponding display control signal is output to the display 2005a at Step S2143 to display that the printing has been cancelled, and this flow is finished.

On the other hand, when the operator does not perform the printing cancellation operation at Step S2121, the determination is not satisfied, and the routine goes on to Step S2122. At Step S2122, a display control signal is output to the display 2005a, for example, to display that the modification of the printing contents can be accepted ("Are the printing contents to be modified? (Y/N)" or the like), and it is determined if a modification instruction signal on the printing contents is input from the operating portion 2005b.

If a modification instruction of the printing contents is not given, the determination is not satisfied, the routine goes on to Step S2151, the display control signal is output to the display 2005a and the like to indicate that the printing is currently in standby (indication of "The printing is now available for acceptance" or the like). After that, the routine goes on to Step S2152.

At Step S2152, (when a new JOB is allocated to the tag-label producing apparatus 2002 by the operation from another terminal 2005 in this printing standby state, for example, the total of the label length information by each JOB has reached one cycle and the surplus portion runs out) it is determined if the printing completion information has been received from the tag-label producing apparatus 2002 similarly to Step S2106 and Step S2117. The determination is not satisfied till the printing completion information is received, and the routine returns to Step S2151 and the above display is made. When the printing completion information is received from the tag-label producing apparatus 2002, the determination at Step S2152 is satisfied and the routine goes on to Step S2153.

At Step S2153, the display control signal is output to the display 2005a based on the received printing completion information similarly to Step S2107 and Step S2118 so as to display that the printing has been completed, and this flow is finished.

On the other hand, at Step S2122, if the modification instruction of the printing contents is given by the operator, the determination is satisfied, and the routine goes on to Step S2123.

At Step S2123, similarly to Step S2141, the instruction signal to delete the JOB which has been already transmitted at Step S2105 is output (transmitted) to the tag-label producing apparatus 2002. In response to this, when the label producing apparatus 2002 completes deletion of the JOB and transmits a corresponding JOB deletion response signal, the transmitted JOB deletion response signal is received at Step S2124 similarly to Step S2142, and the routine goes on to Step S2125.

At Step S2125, an inquiry signal on the JOB allocation information is output to the tag-label producing apparatus 2002 through the communication line NW, similarly to Step S2101 and Step S2111.

After that, the routine goes on to Step S2126, a response signal from the tag-label producing apparatus 2002 is received similarly to Step S2112 and Step 52102, and the label information is displayed at Step S2217 similarly to Step S2113 and Step 52103.

At this time, since the printing has not been completed at the corresponding tag-label producing apparatus 2002 and a single JOB has been deleted at Step S2124, a label length available for production gets longer than before. The label information displayed on the display 2005a and the like at Step S2127 includes such contents, but similarly to the above, in order to surely consume the surplus portion (in order that availability for consumption is to be recognized), display of "recommended information" to recommend label production using the remaining portion may be made.

When Step S2127 is finished, the routine goes on to Step 52128. At Step S2128, it is determined if the modification instruction signal of the printing contents is input from the operating portion 2005b by the operation of the operator. If the operator performs the printing contents modification operation through the operating portion 2005b, the determination at Step S2128 is satisfied, and the routine goes on to Step S2129. If the printing contents have not been modified, Step S2128 is not satisfied, and the routine returns to Step S2121 and the same procedure is repeated.

At Step S2129, a JOB after modification corresponding to the printing contents modification is transmitted (output) to the tag-label producing apparatus 2002 similarly to Step S2105. After that, similarly to Step S2117, the printing completion information transmitted from the tag-label producing apparatus 2002 is received at Step S2130, and then, similarly to Step S2118, the display 2005a and the like displays that the printing has been completed at Step S2131, and the flow is finished.

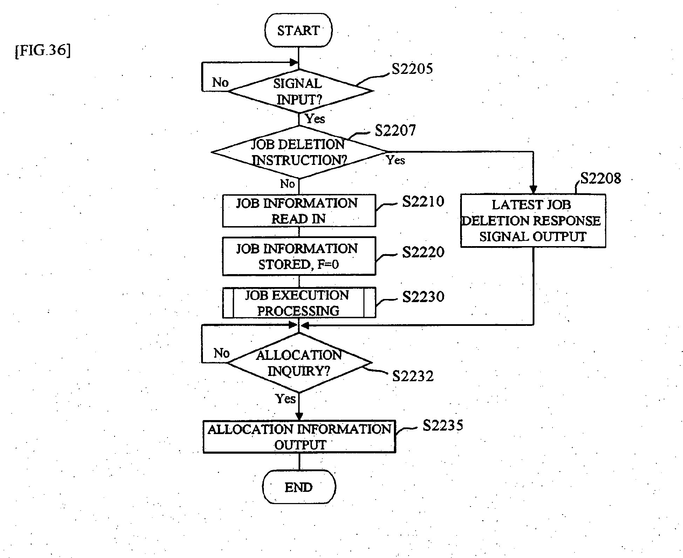

Fig. 36 is a flowchart illustrating a control procedure executed by the control circuit 2030 of the tag-label producing apparatus 2002 in response to the control of the terminal 2005 side shown in Figs. 34 and 35.

In Fig. 36, first, at Step S2205, it is determined if a signal (JOB or JOB deletion instruction signal or the like) is input from any of the terminals 2005 through the communication circuit 3 and the input/output interface 2031 at Step S2105 in Fig. 34 and Step S2129 in Fig. 35. If a signal is input, the determination is satisfied, and the routine goes on to the subsequent Step S2207.

At Step S2207, it is determined if the signal input at Step S2207 is the above-mentioned JOB deletion instruction signal or not.

When the signal is the JOB deletion instruction signal, the determination is satisfied, the routine goes on to Step S2208, and the latest JOB at this time is deleted. At the same time, a deletion completion signal is generated and output to the corresponding terminal 2005 through the communication circuit 3 and the input/output interface 2031 (See Step S2124 or Step S2142 shown in the above-mentioned Fig. 13). After that, the routine goes on to Step S2232.

On the other hand, if the input signal is a JOB and not the JOB deletion instruction signal at Step S2207, the determination is not satisfied but the routine goes on to Step S2210.

At Step S2210, detailed information of the JOB is read in (extracted, obtained) such as the printing information to be printed on the labels Tt, Tu by the print head 2010 and the RFID tag information to be written in the IC circuit part 151 of the RFID circuit element To by the antenna 2014 (only at production of the label with tag. Including at least identification information of RFID circuit element To) from the signal input from the terminal 2005 at Step S2205. At production of the label without tag, only the printing information is read in.

After that, at Step S2220, the JOB read at Step S2210 is stored in the RAM or a non-volatile memory in the control circuit 2030 once, and the flag F indicating if the communication is favorable or not and the variable N representing the number of communication retry times are initialized to zero. And the routine goes on to Step S2230, and JOB execution processing for allocating information corresponding to each JOB (in detail, the JOB identification information, label length information, RFID tag information identification signal and the like. Hereinafter referred to as JOB information as appropriate) is performed in a predetermined order (the details will be described later).

After that, at Step S2232, it is determined if a JOB allocation information inquiry signal is input from any of the terminals 2005 at Step S2101, Step S2111 in Fig. 34 and Step S2125 at Fig. 35 through the communication circuit 3 and the input/output interface 2031. If the JOB allocation information inquiry signal is input, the determination is satisfied, and the routine goes on to the subsequent Step S2235. If the JOB allocation information inquiry signal is not input, the determination is not satisfied, and this flow is finished without going through Step S2235.

At Step S2235, the JOB allocation information allocated at Step S2230 at this time is generated and output to the operating portion 2005b from which the JOB allocation information inquiry signal is output through the communication line NW. The state of the allocation information at this time may be output of the already accepted JOB information, the label information (including the above-mentioned recommended information) which can be currently produced (accepted) or history information. When Step S2235 is completed, this flow is finished.

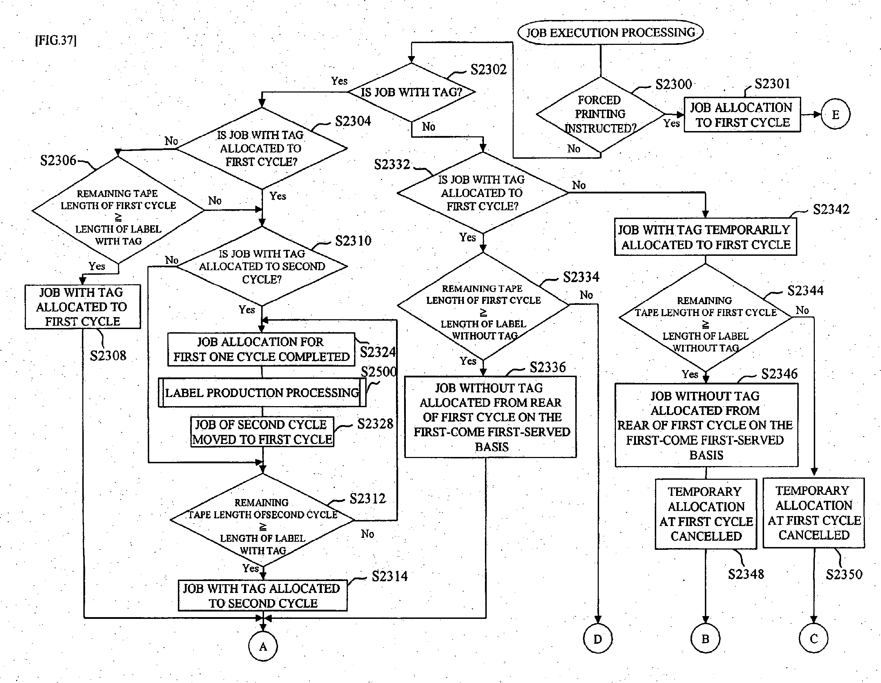

Figs. 37 to 39 show a flowchart illustrating the detail of the JOB execution processing executed at Step S2230 in the above-mentioned Fig. 36. In this JOB execution processing, the JOB accepted at the tag-label producing apparatus 2002 (in detail, including the above-mentioned JOB identification information, label length information, RFID tag information identification signal and the like. Hereinafter referred to similarly as "JOB") is accepted for the total of the label length information required for each JOB (the total length in which the plurality of JOBs are allocated) up to two cycles and allocated. Also, while the JOBs are allocated for two cycles at the maximum in this way, printing for one cycle is started every time a predetermined condition is met (if the total of the label length information by the JOB of the label with tag and the label length information by the JOB of the label without tag becomes one cycle, for example) A tape for one cycle includes a single RFID circuit element To, and the distance from this RFID circuit element To to the RFID circuit element To arranged next is the tape length of one cycle. Therefore, with the tape for one cycle, at least one label with tag can be produced, and if there is still a surplus portion, a label without tag can be produced with the remaining tape portion.

In Fig. 37, first at Step S2300, it is determined if the JOB to be allocated which was read at the above-mentioned Step S2210 (accepted JOB) includes the above-mentioned forced printing instruction (an instruction to finish allocation of the JOB and start printing immediately whether or not the total length of the JOBs satisfies a predetermined condition, which will be described later. See Step S2116 in Fig. 34.)

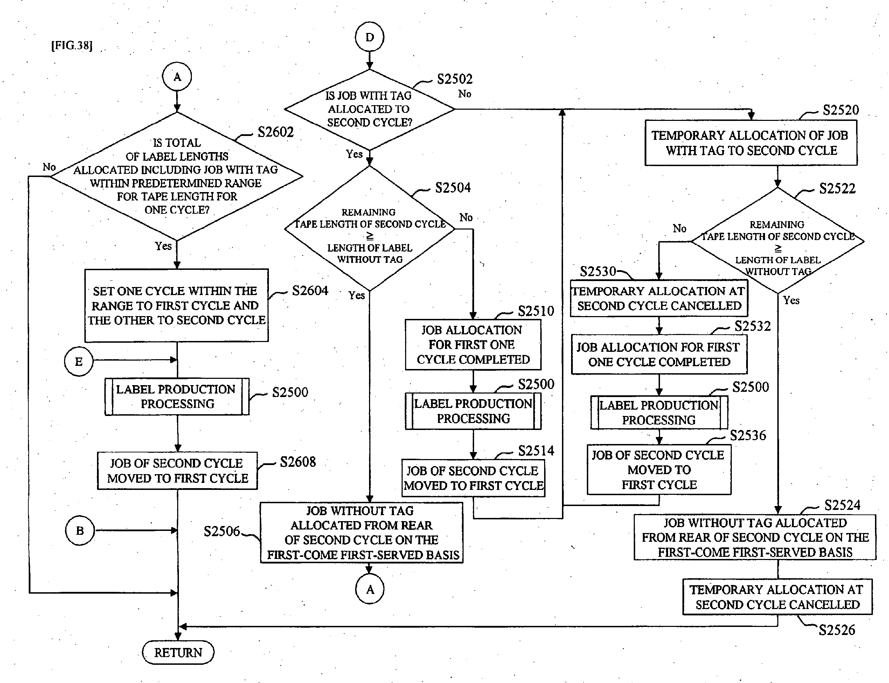

If it is a forced printing instruction, the determination is satisfied, and after the JOB is allocated to the first cycle at Step S2301 (as mentioned above, since two cycles make one unit, a cycle of the tape printed first is referred to as the first cycle and the subsequent cycle as the second cycle. The same applies to the following), the routine goes on to Step S2500 shown in Fig. 38, which will be described later, and the label production processing for the first cycle is executed (the detail will be described later).

On the other hand, at Step S2300, if it is not a forced printing instruction, the determination is not satisfied and the routine goes on to. Step S2302. At Step S2302, it is determined if the JOB to be allocated (accepted JOB) read and obtained at the above-mentioned Step S2210 is a JOB for producing a label with tag (hereinafter referred to as JOB with tag as appropriate). If the JOB to be allocated is a JOB with tag, the determination is satisfied, and the routine goes on to Step S2304. If it is a JOB for producing a label without tag (hereinafter referred to as JOB without tag as appropriate), the determination is not satisfied and the routine goes on to Step S2332, which will be described later.

At Step S2304, it is determined if the JOB with tag has been already allocated to the first cycle. If the JOB with tag is not allocated to the first cycle, the determination is not satisfied but the routine goes on to Step S2306.

At Step 52306, it is determined if the remaining tape length of the first cycle is longer than the label length information of the JOB with tag. If the remaining tape length of the first cycle is longer than the label length of the JOB with tag, the determination is satisfied, the routine goes on to Step S2308, and the JOB with tag is allocated to the first cycle.

In this case (though detailed description is omitted), allocation is made at an allocation position corresponding to the arrangement information of the RFID circuit elements To in the base tape 101 (= particularly where in the tape the IC circuit part 151, the antenna 152 are located in this example). That is, (in this case) it is made sure that the first portion of one cycle is used for production of the label with tag. Therefore, the JOB with tag is surely allocated to the first portion of the tape for one cycle. Allocation of the label with tag at Step S2314, which will be described later, temporary allocation of the label with tag at Step S2342, Step S2410, Step S520, or allocation of the label with tag at Step S2301 are also carried out in the same way.

At Step S2306, the reason why the length of the remaining tape at the first cycle is determined is that the JOB without tag (information to produce a label without tag) has already been allocated to the first cycle in some cases.

As above, when the JOB with tag is allocated to the first cycle at Step S2308, then, the routine goes on to Step S2602 of the flow shown in Fig. 38, which will be described later.

On the other hand, when the JOB with tag has been already allocated to the first cycle and the determination is satisfied at Step S2304 (or when the length of the label with tag exceeds the range of the remaining tape length at the first cycle at Step S2306 and the determination is not satisfied), the routine goes on to Step S2310, and it is determined if the JOB with tag is allocated to the second cycle.

If the JOB with tag has not been allocated to the second cycle, the determination at Step S2310 is not satisfied and the routine goes on to Step 52312. At Step S2312, it is determined if the remaining tape length of the second cycle is longer than the label length information of the JOB with tag. If the remaining tape length of the second cycle is longer than the length of the label with tag, this determination is satisfied, and the routine goes on to Step S2314.

At Step S2314, after the JOB with tag is allocated to the second cycle, the routine goes on to Step S2602 of the flow shown in Fig. 38, which will be described later (the detail will be described later). At Step S2312, the reason why the remaining tape length of the second cycle is checked is the same as the above-mentioned reason why the tape length of the first cycle is checked.

On the other hand, at Step S2310, if the JOB with tag has been already allocated to the second cycle, the determination is satisfied and the routine goes on to Step S2324. At Step S2324, the allocation to the first one cycle is completed (finished) with the JOB having been allocated to the first one cycle so far.

After that, the routine goes on to Step S2500, where the label production processing for the first one cycle is executed (the detail will be described later). After that, the routine goes on to Step S2328, and the JOB at the second cycle is moved to the first cycle. At a result, the second cycle is moved over to the first cycle and allocation is made. When Step S2328 is finished, the routine goes on to the above-mentioned Step S2312. If the length of the label with tag exceeds the remaining tape length of the second cycle at Step S2312, the determination at Step S2312 is not satisfied and the routine returns to Step S2324 and the same procedure is repeated.

On the other hand, if the JOB to be allocated is found to be a JOB without tag at the above-mentioned Step S2302, the determination at Step S2302 is not satisfied and the routine goes on to Step S2332, where it is determined if the JOB with tag has been already allocated to the first cycle. If the JOB with tag has been already allocated to the first cycle, the determination is satisfied, and the routine goes on to Step S2334.

At Step S2334, it is determined if the remaining tape length at the first cycle is longer than the label length of the JOB without tag. If the remaining tape length of the first cycle is not longer than the length of the label without tag, the determination at Step S2334 is satisfied, and the routine goes on to Step S2336.

At Step S2336, the JOB without tag is allocated from the rear of the first cycle (tape portion adjacent to the second cycle) on the first-come first-served basis. In this case (though the detail is omitted), the allocation is made at an allocated position not overlapping the allocation position corresponding to the arrangement information of the RFID circuit elements To in the base tape 101 (= particularly where in the tape the IC circuit position 151, the antenna 152 are located in this case). That is, while the above-mentioned JOB with tag is surely allocated to the first portion (front) of the tape for one cycle, the JOB without tag is allocated from the end portion (rear) of the tape for one cycle in this example, and the JOB without tag accepted earlier is allocated earlier, and the allocated JOBs without tag are not re-sorted. Therefore, in the tape for one cycle, the JOBs are allocated from the front (first portion) and the rear (end portion) toward the center (center portion). The JOBs without tag may be re-sorted or they may be allocated subsequent to the JOB with tag (sequential allocation from the front of the tape for one cycle) . Allocation of the label without tag at Step 52346, Step 52406, Step S2414, Step S2506, Step S2524, which will be described later, or allocation of the label without tag at Step S2301 are also carried out in the same way.

When the Step S2336 is finished, the routine goes on to Step S2602 of the flow shown in Fig. 38, which will be described later.

Also, at Step S2334, if the length of the remaining tape in the first cycle is less than the label length of the JOB without tag, the determination is not satisfied and the routine goes on to Step S2502 of the flow shown in Fig. 38, which will be described later.

On the other hand, if the JOB with tag has not been allocated to the first cycle in Step S2332, the determination is not satisfied and the routine goes on to Step S2342. At Step S2342, temporary allocation (temporary allocation of the JOB with tag) for executing the subsequent procedure on the premise that the label with tag is allocated to the first cycle is carried out. The length of the label with tag to be temporarily allocated at this time is determined to a predetermined length in advance (the minimum length which can produce an RFID label, for example) so that the JOB with tag can be allocated within a range of this predetermined length at the subsequent actual allocation of the JOB with tag.

After that, the routine goes on to Step S2334, where it is determined if the remaining tape length of the first cycle is longer than the label length of the JOB without tag. The remaining tape length of the first cycle at this time is the tape length obtained by subtracting the length of the temporary allocation of the JOB with tag (temporary allocation portion) and if the JOB without tag has been already allocated, the length for that portion from the tape length for one cycle. If the length of the label without tag is not longer than the range of the remaining tape length of the first cycle, the determination is satisfied, and the routine goes on to Step 52346.

At Step S2346, the JOB without tag is allocated from the rear of the first cycle on the first-come first-served basis. After that, at Step S2348, the allocation of the JOB with tag at the temporary allocation portion (the first portion of the first cycle where the label with tag of the minimum length can be produced) executed at Step S2342 is canceled. When Step S2246 is finished, the routine returns to Step S2302 and the same procedure is repeated.

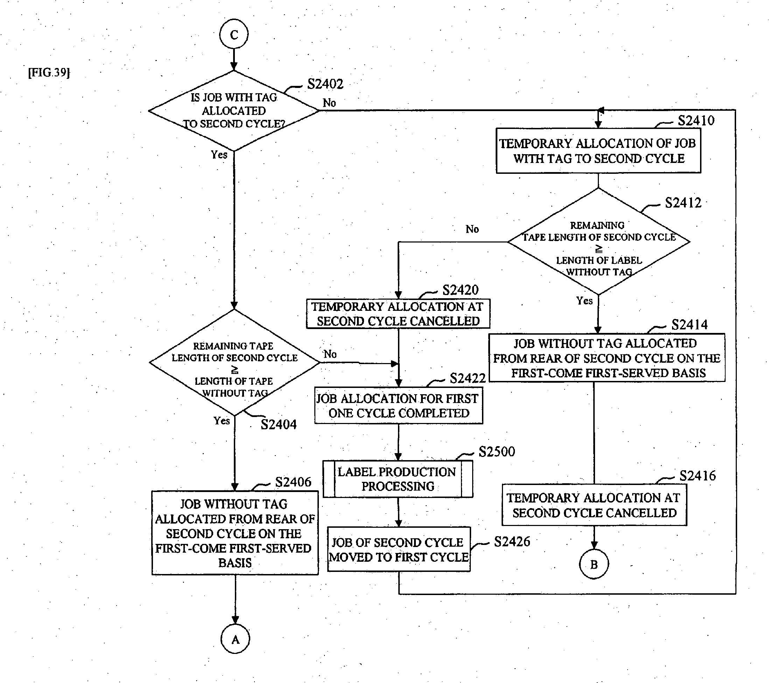

On the other hand, at the above-mentioned Step S2344, if the remaining tape length of the first cycle is less than the length of the label without tag, the determination at Step S2344 is not satisfied, the allocation of the JOB with tag at the temporary allocation portion (the first portion of the first cycle where the label with tag of the minimum length can be produced) executed at Step S2342 is canceled, and the routine goes on to Step S2402 of the flow shown in Fig. 39, which will be described later (the detail will be described later).

Fig. 38 is a flowchart illustrating the control procedure continued from that shown in the above-mentioned Fig. 37.

First, at Step S2602 continued from Step S2308, Step S2314, Step S2336 in Fig. 37, it is determined 1f the total label length of the JOBs for which allocation has been already completed including the JOB with tag has reached substantially one cycle (in detail, within a predetermined range close to one cycle or not). The predetermined range at this time is a length which allows a surplus portion generated when printing for the cycle is started even if the total label length is less than the tape length for one cycle, and it shall be determined in advance. Therefore, when the length is within this predetermined range, it is considered that the JOB allocation for one cycle has been completed (allocation completed). The determination is made for the cycle of a determination unit at Step S2602 (two cycles in this example).

When the total label length of the JOBs having been allocated becomes substantially equal to one cycle and reaches the predetermined range, the determination at Step S2602 is satisfied, and the routine goes on to Step S2604. If the predetermined range is not reached, the determination is not satisfied, the routine returns to Step S2302 in Fig. 37, and the same procedure is repeated.

At Step S2604, it is considered that the JOB allocation for one cycle has been completed and the cycle concerned is set as the first cycle, and the other (subsequent) cycle is set as the second cycle.

After that, the routine goes on to Step S2500 similar to the above, and the label production processing for the one cycle is executed (the detail will be described later). After that, at Step S2608, similarly to Step S2328 in the above-mentioned Fig. 37, the JOB of the second cycle is moved to the first cycle, and this flow is finished.

On the other hand, at Step S2502 to which the routine moves after the determination at Step S2334 in Fig. 37 is not satisfied, it is determined if the JOB with tag is allocated to the second cycle. If the JOB with tag has been already allocated to the second cycle, the determination is satisfied and the routine goes on to Step S2504, where it is determined if the remaining tape length of the second cycle is longer than the label length of the JOB without tag this time. If the remaining tape length of the second cycle remains longer than the label without tag, the determination at Step S2504 is satisfied, and the routine goes on to Step S2506, where the JOB without tag is allocated from the rear of the second cycle on the first-come first-served basis, and the routine goes on to Step S2602.

On the other hand, if the remaining tape length of the second cycle is less than the label without tag at Step S2504, the determination is not satisfied, and the routine goes on to Step S2510.

At Step S2510, it is considered that there is no room for new allocation for two cycles left in the label length, the JOB allocation for the first cycle is completed for the label production for the first cycle, the routine goes on to Step S2500, and the label production processing for the one cycle is executed (the detail will be described later). After that, at Step S2514, similarly to Step S2608 in Fig. 37, the JOB for the second cycle is moved to the first cycle.

After that, the routine goes on to Step S2520, where the temporary allocation (temporary allocation of the JOB with tag) for executing the subsequent procedure on the premise that the label with tag has been allocated to the second cycle is executed. At this time, the length of the label with tag for the temporary allocation is determined as the minimum length which can be produced as an RFID label, for example, similarly to the temporary allocation at Step S2342 in Fig. 37.

At Step S2522, similarly to Step S2504, it is determined if the remaining tape length of the second cycle is longer than the label length of the JOB without tag this time. If it remains longer than the label without tag, the determination is satisfied, the routine goes on to Step S2524, and the JOB without tag is allocated from the rear of the second cycle on the first-come first-served basis similarly to Step S2514, and the routine goes on to Step S2526.

After that, at Step S2526, the allocation of the JOB with tag of the temporary allocation portion (the first portion of the second cycle which can produce a label with tag of the minimum length) executed at Step S2524 is cancelled similarly to Step S2348. When Step S2526 is finished, the routine returns to Step S2302, and the same procedure is repeated.

On the other hand, at Step S2522, if the remaining tape length of the second cycle is less than the label length of the JOB without tag this time, the determination is not satisfied and the routine goes on to Step S2530.

At Step S2530, the allocation of the JOB with tag of the temporary allocation portion (the first portion of the second cycle which can produce a label with tag of the minimum length) is cancelled similarly to Step S2526, and the routine goes on to Step S2532.

At Step S2532, it is considered that there is no room for new allocation for two cycles left in the label length, the JOB allocation for the first cycle is completed for the label production of the first one cycle, the routine goes on to Step S2500, and the label production processing for the one cycle is executed (the detail will be described later). After that, at Step S2536, the JOB for the second cycle is moved to the first cycle similarly to Step S2514 and the like, the routine returns to Step S2520, and the same procedure is repeated.

Fig. 39 is a flowchart executed subsequently to Step S2350 in the above-mentioned Fig. 37. First, at Step S2402, it'is determined if the JOB with tag is allocated to the second cycle similarly to Step S2310. If the JOB with tag has been already allocated to the second cycle, the determination is satisfied and the routine goes on to Step S2404.

At Step S2404, similarly to Step S2522 and the like, it is determined if the remaining tape length of the second cycle is longer than the label length of the JOB without tag this time. If it remains longer than the length of the label without tag, the determination is satisfied, the routine goes on to Step S2406, where the JOB without tag is allocated from the rear of the second cycle on the first-come first-served basis similarly to Step S2524, and the routine returns to Step S2602 and the same procedure is repeated.

On the other hand, at Step S2402, if the JOB with tag has not been allocated to the second cycle, the determination is not satisfied, the routine goes on to Step S2410, and the temporary allocation to the second cycle (temporary allocation of the JOB with tag) is executed similarly to Step S2520. The length of the label with tag to be temporarily allocated is also determined to the minimum length which can be produced as an RFID label, for example, similarly to the above.

After that, at Step S2412, it is determined if the remaining tape length of the second cycle is longer than the length of the label without tag similarly to Step S2522. If it remains longer than the length of the label without tag, the determination is satisfied, the routine goes on to Step S2414, where the JOB without tag is allocated from the rear of the second cycle on the first-come first-served basis similarly to Step S2524 and the like, and the routine goes on to Step S2416.

At Step S2416, similarly to Step S2526, the allocation of the JOB with tag at the temporary allocation portion executed at Step S2524 is canceled and then, the routine returns to Step S2302 and the same procedure is repeated.

On the other hand, if the remaining tape length of the second cycle is less than the label length of the JOB without tag this time at Step S2412, the determination ,is not satisfied and the routine goes on to Step S2420.

At Step S2420, similarly to Step S2530, the allocation of the JOB with tag at the temporary allocation portion is canceled, and the routine goes on to Step S2422. At Step S2422, similarly to Step S2532, the JOB allocation for the first cycle is completed for the label production for the first one cycle similarly to Step S2532 and the like, the routine goes on to Step S2500, and the label production processing for the first cycle is executed (the detail will be described later). After that, similarly to Step S2426, the JOB for the second cycle is moved to the first cycle, the routine returns to Step S2410, and the same procedure is repeated.

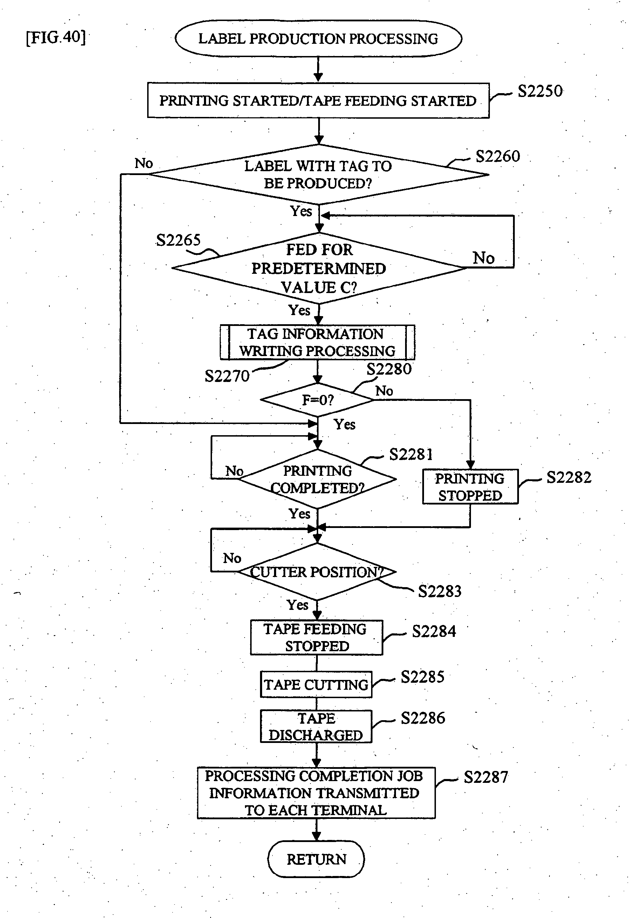

Fig. 40 is a flowchart illustrating a detailed procedure of the tag-label production processing at Step S2500.

In Fig. 40, first at Step S2250, a control signal is output to a cartridge shaft drive circuit 2024 (See Fig. 24) so as to rotate/drive the ribbon take-up roller 106 and the pressure roller 2107 by a driving force of the motor to drive cartridge shaft 2023. At a result, the base tape 101 is fed out of the first roll 102 and supplied to the pressure roller 2107, and the cover film 103 is fed out of the second roll 104. At this time, a control signal is also output to the print-head drive circuit 2025, the print head 2010 is electrified, and the prints R, R' and the like such as characters, symbols and barcodes corresponding to the JOB information read at Step S2210 illustrated in Fig. 36 are printed on a predetermined area in the cover film 103. Moreover, a control signal is output to the tape-feeding-roller motor 2028 through the tape-feeding-roller drive circuit 2029 so as to rotate/drive the feeding roller 2017.

As a result, as mentioned above, the base tape 101 and the cover film 104 on which the printing has been finished are bonded and integrated by the pressure roller 2107 and the sub roller 2109, formed as the tag-label tape with print 2110, and fed out to the direction outside the cartridge 2100.

After that, at Step S2260, it is determined if the applicable JOB includes the RFID tag information (it is to produce a label with tag) or not. If it is not production of a label with tag, the routine goes on to Step S2281, which will be described later. If it is production of a label with tag, the routine goes on to Step S2265.

At Step S2265, it is determined if the tag-label tape with print 2110 has been fed for a predetermined value C (a feeding distance for which the RFID circuit element To to which the cover film 103 with the corresponding print is bonded reaches the feeding guide 2013). This feeding distance determination at this time can be made by detecting an appropriate identifying mark provided on the base tape 101 by a known tape sensor provided separately. If the tape has been fed for the predetermined value, the determination is satisfied, and the routine goes on to the subsequent Step S2270.

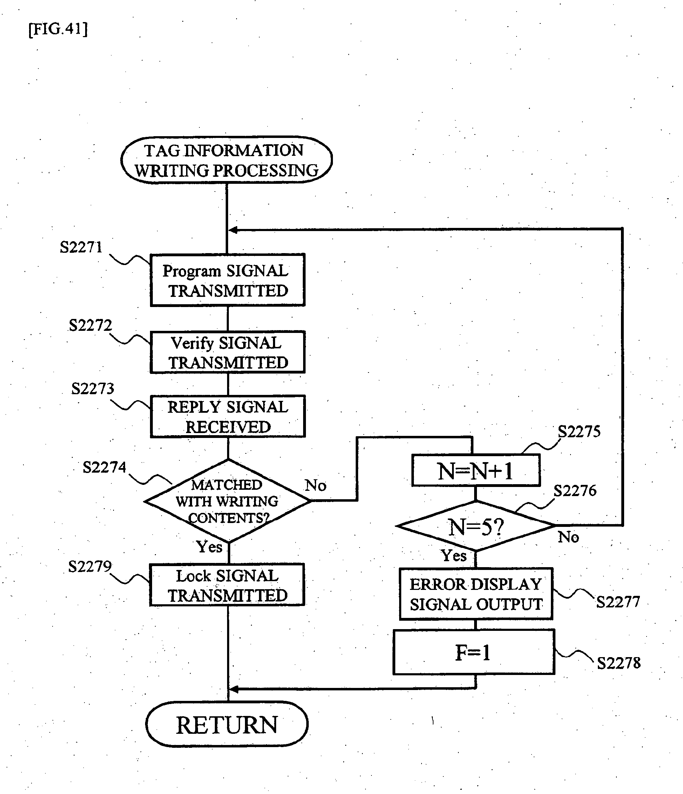

At Step S2270, the writing processing is performed that the RFID tag information is transmitted and written in the RFID circuit element To (For detail, see Fig. 41, which will be described later).

At the subsequent Step S2280, it is determined if the flag F = 0 or not. If the writing processing is normally completed, it is still F = 0 (See Step S2278 in the flow shown in Fig. 41, which will be described later), and the determination is satisfied and the routine goes on to Step S2281. On the other hand, if the writing processing is not been normally completed for some reason, it becomes F = 1 (See Step S2278 in the flow shown in Fig. 41, which will be described later), and the determination is not satisfied and the routine goes on to Step S2282, where a control signal is output to the print-head drive circuit 2025 so as to stop power feeding to the print head 2010 and stop printing. After it is apparently displayed that the RFID circuit element To is not a non-defective product by interruption of printing in this way, the routine goes on to Step S2283, which will be described later.

After that, at Step S2281, it is verified if the print on the predetermined area to be processed at this time in the cover film 103 (the area for the label length corresponding to the JOB allocated respectively in the JOB execution processing) has been all completed or not, and the routine goes on to Step S2283.

At Step S2283, it is determined if the tag-label tape with print 2110 has been fed to a predetermined position to be cut off by the cutter 2015 or not. Specifically, it is only necessary to determine if the label length included in the JOB information has gone beyond the cutter 2015 by a predetermined length (allowance dimension) or not by detecting an appropriate identifying mark (corresponding to each RFID circuit element To, for example) provided on the base tape 101 (the separation sheet 101d, the cover film 103 or the like in detail) by a known tape sensor provided outside the cartridge 2100 (further downstream side in the feeding direction than the cartridge 2015, for example).

Instead of this detection, determination may be made based on the print information whether the length of the printed character length of the prints R, R' to which the length of the predetermined margin area is added exceeds the whole length of the RFID circuit element To or not (if exceeded, the cutting of the RFID circuit element To to be bonded can be avoided by cutting outside the margin area at least at the stage when the print of the cover film 103 is completed).

If the determination at Step S2283 is satisfied, the routine goes on to Step S2284. At Step S2284, a control signal is output to the cartridge shaft drive circuit 2024 and the tape-feeding-roller drive circuit 2029 so as to stop driving of the motor to drive cartridge shaft 2023 and the tape-feeding-roller motor 2028 and stop rotation of the ribbon take-up roller 106, the pressure roller 2107, and the feeding roller 2017. At a result, the feeding-out of the base tape 101 from the first roll 102, the feeding-out of the cover film 103 from the second roll 104 and the feeding of the tag-label tape with print 2110 by the feeding roller 2017 is stopped.

At the subsequent Step S2285, a control signal is output to the solenoid drive circuit 2027 so as to drive the solenoid 2026 and the tag-label tape with print 2110 is cut off by the cutter 2015. As mentioned above, at this time, the tag-label tape with print 2110 sufficiently goes beyond the cutter 2015, and by the cutting by this cutter 2015, the RFID tag information is written in the RFID circuit element To and the label-state RFID label Tt on which a predetermined corresponding print is carried out or the ordinary label Tu on which predetermined print is carried out is produced.

After that, the routine goes on to Step S2286, where a control signal is output to the tape-feeding-roller drive circuit 2029 so as to resume the driving of the tape-feeding-roller motor 2028 and rotate the feeding roller 2017. At a result, the feeding by the feeding roller 2017 is resumed and the RFID label Tt or the ordinary label Tu produced in the label state at Step S2285 is fed toward the carry-out exit 2016 and discharged outside the apparatus 2 from the carry-out exit 2016.

After that, at Step S2287, information indicating that the label production processing corresponding to the JOB has been completed is transmitted to each terminal 2005 through the communication line NW, and this routine is finished.

Fig. 41 is a flowchart illustrating a detailed procedure of Step S2270.

In Fig. 41, the tag-label tape with print 2110 is fed by the predetermined value C at the above-mentioned Step S2265, the identification information (tag ID) of the RFID circuit element To is set by a known appropriate method and then, first, at Step S2271, a "Program" command to write desired data in the memory portion 157 is output to the signal processing circuit 2022. Based on this, the "Program" signal as the RFID tag information including at least the identification information is generated and transmitted to the RFID circuit element To as writing target through the transmitting portion 2032 and the antenna 2014 of the radio frequency circuit 2021 and the information is written in the memory portion 157.

After that, at Step S2272, a "Verify" command for verifying the contents of the memory portions 157 is output to the signal processing circuit 2022. Based on this, the "Verify" signal as the RFID tag information is generated at signal processing circuit 2022 and transmitted to the RFID circuit element To as writing target through the transmitting portion 2032 and the antenna 2014 of the radio frequency circuit 2021 and a reply is promoted.

And the routine goes on to Step S2273, where a reply (response) signal transmitted (replied) from the RFID circuit element To in correspondence with the "Verify" signal is received through the antenna 2014 and taken in through the receiving portion 2033 and the signal processing circuit 2022 of the radio frequency circuit 2021.

Next, at Step S2274, based on the received result at Step S2273, the information stored in the memory portion 157 of the RFID circuit element To is verified, and it is determined if the above transmitted predetermined information is normally stored in the memory portion 157 or not.

When the determination is not satisfied, the routine goes on to Step S2275, one is added to the variable N of the above-mentioned number of communication retry times and the routine further goes on to Step S2276, where it is determined if N = 5 or not. In the case of N ≤ 4, the determination is not satisfied, the routine returns to Step S2271, and the same procedure is repeated. In the case of N = 5, the routine goes on to Step S2277. At Step S2277, an error display signal is output to the terminal 2005 and the like through the input/output interface 2031 and the communication line NW, the corresponding writing failure (error) display is made, and then, the flag F = 1 is set at Step S2278 and this routine is finished. In this way, even if information writing is not successful, retry is made up to five times in order to ensure writing reliability.

On the other hand, if the determination at Step S2274 is satisfied, the routine goes on to Step S2279, and a "Lock" command for prohibiting subsequent information writing is output to the signal processing circuit 2022. Based on this, the "Lock" signal is generated at the signal processing circuit 2022, transmitted to the RFID circuit element To as writing target through the radio frequency circuit 2021, and new information writing in the RFID circuit element To is prohibited. At a result, writing of the RFID tag information in the RFID circuit element To as writing target is completed, and the RFID circuit element To is discharged as above. When Step S2279 is finished, this flow is finished.

As described above, in the tag-label producing apparatus 2002 of this second embodiment, the JOB for producing the RFID label Tt or the ordinary label Tu corresponding to the operation input by an operator in each of the operation terminals 2005 is input to the control circuit 2030 side of the tag-label producing apparatus 2002, and the label length information corresponding to the JOB is sequentially stored at Step S2220 together with the JOB identification information and RFID tag information identification signal. Then, the label length information of each JOB sequentially stored is sequentially allocated in a predetermined order with the JOB identification information and the RFID tag information identification signal at Step S2301, Step S2308, Step S2314, Step S2336, Step S2346, Step S2506, Step S2524, Step S2406, Step S2414 and the like, and according to this allocated state, an instruction signal for instructing label production is generated at Step S2500 and the labels Tt, Tu are produced.

In this way, in the second embodiment, the label production is not immediately carried out for each operation input by the operator, but after the label length information and the like of the JOB is allocated in a predetermined state for each predetermined length unit of the base tape 101 (two cycles in this example), the label is produced according to the allocated state (after it is determined if a predetermined condition is satisfied or not at Step S2306, for example). At a result, if a surplus portion is generated in the base tape 101 after the label length information of the RFID label Tt production is allocated for producing the RFID label T, at least one piece of the label length information of the ordinary label Tu for the surplus length portion can be allocated (See Step S2336 and the like). As a result, the surplus portion other than the portion to be used for production of the RFID label Tt in the base tape 101 is not wasted but can be effectively utilized for production of the ordinary label Tu.

Also, particularly in the second embodiment, when the JOB with tag is to be allocated at Step S2308 and the like, allocation is made at an allocation position corresponding to the arrangement information of the RFID circuit element To in the base tape 101 (= where in the tape the IC circuit part 151, the antenna 152 are located or the like). At a result, at the allocation position corresponding to the arrangement position of the RFID circuit element To in the tag-label tape with print 2110, not the JOB for producing the ordinary label Tu but the JOB for producing the RFID label Tt can be surely allocated. Similarly, when the JOB without tag is to be allocated at Step S2336 and the like, allocation is made at an allocation position not overlapping the allocation position corresponding to the arrangement information of the RFID circuit element To in the base tape 101 (= where in the tape the IC circuit part 151, the antenna 152 are located or the like). As a result, the JOB for producing the ordinary label Tu can be allocated at the allocation position corresponding to the arrangement position of the RFID circuit element To in the tag-label tape with print 2110, not overlapping even partially.

Also, particularly in the second embodiment, regardless of the determination result at Step S2306 and the like, the labels Tt, Tu are produced forcedly when the routine moves from Step S2301 to Step S2500. As a result, particularly when there is a need to produce a label immediately even if a surplus portion is generated in the base tape 101, the label can be produced rapidly in response to the need.

Also, particularly in the second embodiment, what type of tape allocation is being made at the time of operation by the operator is displayed by the displaying portion or the like by outputting the allocation information to the terminal 2005 at Step S2235 so that the operator can be surely notified of that. Also, at this time, by outputting the length information of the RFID label Tt or the ordinary label Tu which can be produced, what length of the label can be produced immediately at the time of operation by the operator can be displayed so that the operator can be surely notified of that. As a result, the operator can choose between the immediate label production in the form reduced to the length and taking time to wait till the label of that length can be produced when the operator wants to produce a label longer than the relevant length, which widens the width of selection and improves convenience.

Also, particularly in the second embodiment, when the label production is finished, it is displayed that the label production is finished without a waste after JOB allocation by outputting a corresponding production end notice at Step S2287 so that the operator can be notified.

Also, in the second embodiment, when the JOB is stored in the non-volatile memory in the control circuit 2030, each label length information corresponding to the accepted JOB can be surely maintained even after the apparatus power is lost.

Also, particularly in the second embodiment, each tag-label producing apparatus 2002 is capable of accepting the JOB from a plurality of terminals 2005 through the communication line NW. At a result, the JOB allocation can be carried out according to the operation input not only from a single operator but also from a plurality of operators. As a result, the effect to prevent wasting of a tape at the label production can be shared by the plurality of operators. Also, in this case, since production requests for more various label lengths can be made than the case of operation input by a single operator, the label production can be expedited as a result.

In the above, a case was described that the RFID tag information is transmitted to the RFID circuit element To and writing is made in the IC circuit part 151 so as to produce the RFID label Tt at the production of the RFID label Tt, but not limited to this. That is, while the RFID tag information is read out from the RFID circuit element To for read only in which predetermined RFID tag information is stored/held unrewritably in advance, the RFID label Tt may be produced by carrying out the print corresponding to that. In this case, at Step S2210, it is only necessary to read only the print information from the information input from the terminal 2005 at Step S2205 and to perform the reading processing of the RFID tag information at Step S2270.

In the second embodiment, various variations are possible. The variations will be sequentially described below.

### (2-1) When a display portion and an operating portion are provided on the tag-label producing apparatus side:

That is, the function as the display portion of the display 2005a of the terminal 2005 and the function of the operating portion 2005b described in the above may be exerted by the display portion 2053 or the operation portion 2052 of the tag-label producing apparatus 2002, respectively. In this case, various display control signals output from the CPU 2005c to the display 2005a in the flow of Fig. 34 or the like are input by the input/output interface 2031 and the control circuit 2030 of the tag-label producing apparatus 2002 through the communication line NW to the display portion 2053, and the corresponding display is made. Also, various operation signals input from the operating portion 2005b to the CPU 2005c in the above are input from the operation portion 2052 of the tag-label producing apparatus 2002 to the CPU 2005c of the terminal 2005 through the control circuit 2030 and the input/output interface 2031 of the tag-label producing apparatus 2002 through the communication line NW, and corresponding processing and controls are performed.

In this variation, too, the same effect as that of the second embodiment can be obtained.

### (2-2) When the single tag-label producing apparatus is provided with all the functions:

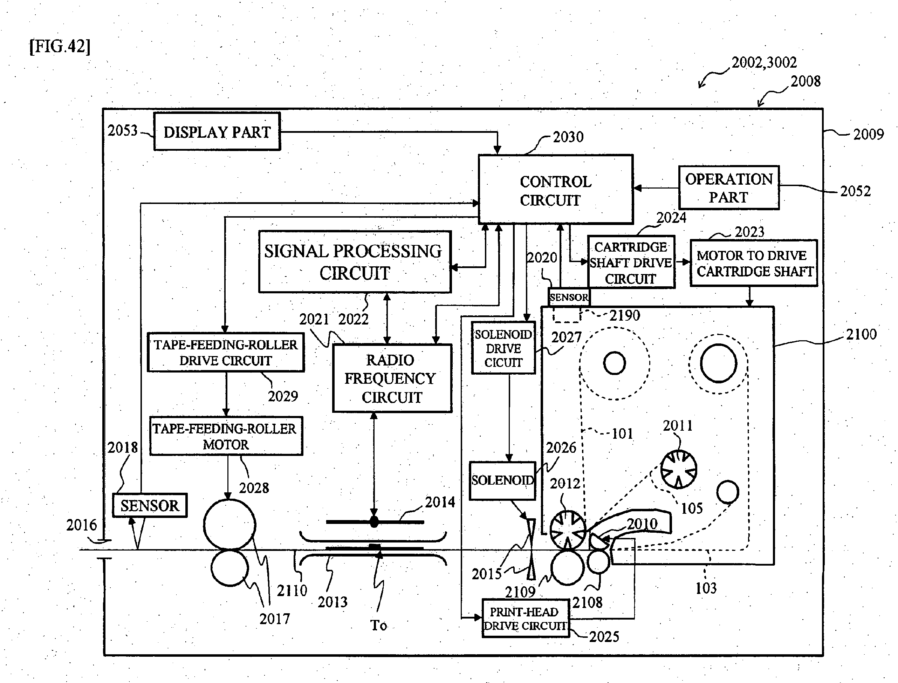

That is, not only the functions of the operating portion or display portion (including the notifying portion) as in the variation of the (2-1), but all the functions of the terminal 2005 of the second embodiment are provided at the tag-label producing apparatus 2002 side (configured as so-called standalone type). Fig. 42 is a conceptual configuration diagram illustrating a detailed structure of the tag-label producing apparatus 2002, from which the input/output I/F is omitted from the structure shown in Fig. 24. In this case, it is only necessary that the same control procedure as that shown in Figs. 34 and 35 executed by the CPU 2005c of the terminal 2005 should be executed by the control circuit 2030 of the tag-label producing apparatus 2002.

In this variation, too, particularly in an apparatus for tag-label production by the apparatus alone not connected to the other terminals or communication equipment through the network or the like, the same effect as that of the second embodiment to prevent wasting of a tape at the label production can be obtained.

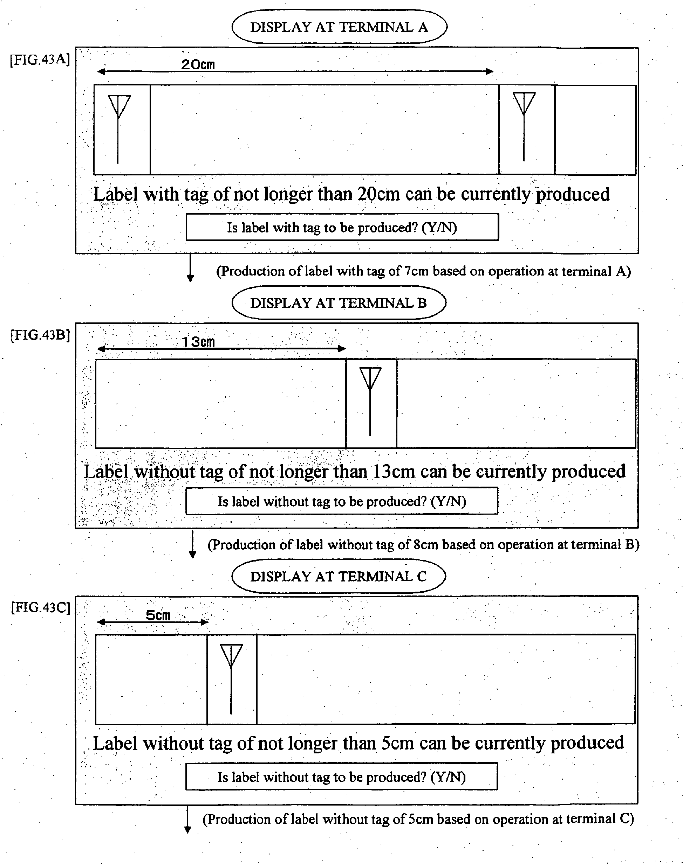

A third embodiment of the present invention will be described below referring to Figs. 43 to 46. In this embodiment, too, by enabling production of an ordinary label using a margin after the RFID label is produced, effective utilization of the margin is promoted similarly to the second embodiment. The equivalent portions to those in the first and the second embodiments are given the same reference numerals, and the description will be omitted or simplified as appropriate.

A tag-label producing apparatus 3002 of this embodiment is provided at an RFID tag manufacturing system 3001 (tag-label producing system) shown in the above-mentioned Fig. 23 similarly to the second embodiment and constitutes a network. Since the detailed structure is similar to that of the tag-label producing apparatus 2002 illustrated using Figs. 24, 25, 26 and the like in the second embodiment, the description will be omitted.

The tag-label producing apparatus 3002 of the third embodiment can also accept a label production operation signal ("JOB") from the plurality of terminals 2005 similarly to the tag-label producing apparatus 2002 in the second embodiment and is provided with a function to produce the RFID label Tt or the ordinary label Tu according to the label production operation signal. That is, similarly to the above, after a predetermined length of the base tape 101 has been consumed (or consumption is scheduled) for producing the RFID label Tt by the label production operation signal from one of the plurality of terminals 2005, if a surplus portion is generated in the base tape 101, the label production operation signal corresponding to the surplus length can be newly accepted from any of the plurality of terminals 2005 (including the terminal 2005 concerned) so that the surplus portion can be effectively utilized for production of the ordinary label Tu.

Since the appearance and the sectional structure of the RFID label Tt and the ordinary label Tu formed by completing information writing of the RFID circuit element To and cutting of the tag-label tape with print 110 in the tag-label producing apparatus 3002 in this embodiment are the same as those shown in the above-mentioned Figs. 27 and 28, the description will be omitted.

Also, when the operation for producing the RFID label Tt and the ordinary label Tu by the tag-label producing apparatus 3002 is accepted from the plurality of terminals 2005, the information of the label which can be currently produced displayed on the display 2005a of the terminal 2005 is also the same as that shown in Fig. 30 in the second embodiment, for example. That is, when the JOB is accepted in the order of the terminal A, the terminal B and the terminal C, the respective label lengths which can be currently produced at each stage are displayed on the display 2005a of the respective terminals using a substantially band-state image (such as icons, marks, symbols and the like) corresponding to the label length (See Fig. 30).

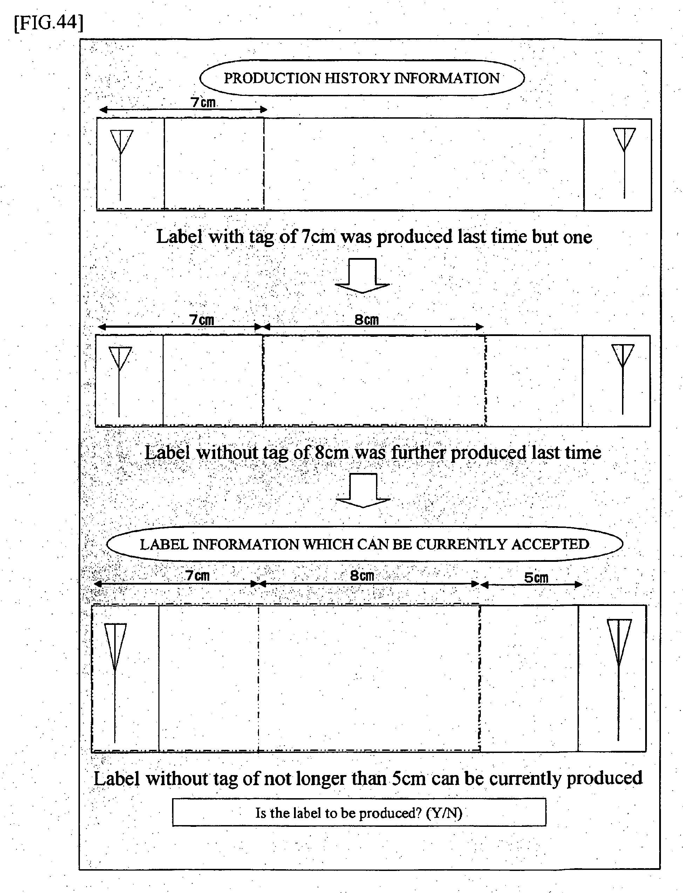

Similarly to the second embodiment, not limited to the case where the label information which can be currently produced is displayed as in Fig. 30, the history information (JOB which has been already accepted) may be displayed (See Fig. 31). That is, as shown above in Fig. 31, by displaying the JOB which has been already accepted as "accepted state/history information" as history information in the order from the top in the substantially band-state image (the band length is changed in correspondence with the progress of the history), the operator can easily sense and recognize the progress of the allocation history (production history in Fig. 44, which will be described later) by change of the length of the substantially band-state image. Also, by displaying the history information in this way, similarly to the second embodiment, the production history information can be also recognized with the label information which can be newly accepted, which is changing (decreasing) according to the label production. Therefore, the information amount which can be referred to in effective utilization of the base tape 101 is increased, and convenience can be improved.

Based on the above display, as the result that the JOB is accepted for the tape length for one cycle sequentially from the appropriate terminal 2005, the margin portion is used without a waste, and each label production is executed. The display on the display 2005a indicating that the label production is completed is the same as that shown above in Fig. 32.

On the other hand, as described using Fig. 33 in the second embodiment, the function to start producing a label before the accepted JOB satisfies the tape length for one cycle (= forced printing, the detail will be described later) can be also provided in this embodiment. In this case, an inquiry if the forced printing function is to be executed or not can be displayed on the display 2005a similarly to Fig. 33 of the second embodiment.

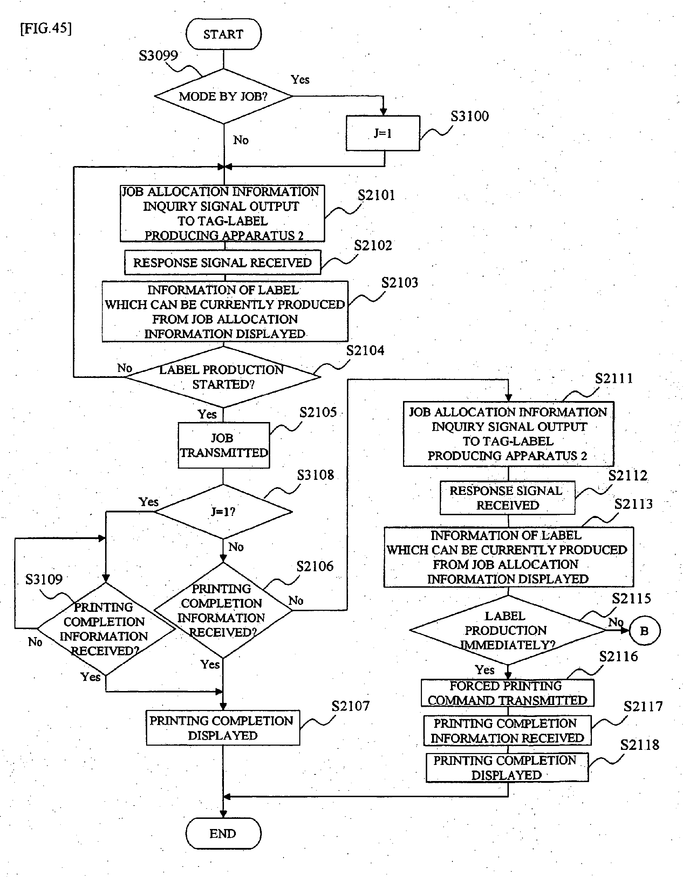

In this embodiment, the concept of the "forced printing" is extended/applied, and rather than waiting for the label production till the predetermined condition is met after each JOB has been accepted as in the above-mentioned Fig. 30A to 30C and Fig. 31A, but such a variation is possible that the label production is executed for each JOB every time the JOB is accepted. That is, in the tag-label producing apparatus 3002 in the variation, separately from the mode that the label is produced in a lump sum when the predetermined condition is met after acceptance of the JOB, a mode (mode by JOB) that the label is produced for each JOB is provided so that any of the modes can be selected/input by the operation of the operating portion at each terminal 2005 (See Step S3100 of the flow in Fig. 45, which will be described later).

Figs. 43A, 43B, and 43C show views illustrating examples of the label length display which can be newly accepted displayed on the display 2005a of the terminals A, B, and C in this variation and correspond to Figs. 30A, 30B, and 30C, respectively.

First, Fig. 43A is an example of display on the display 2005a of the terminal A, indicating that the RFID label (hereinafter referred to as label with tag as appropriate) Tt of not longer than 20 cm (= substantially corresponding to the fixed length L corresponding to the arrangement pitch of the RFID circuit element To) can be produced, and a label with tag of the length up to 20 cm can be produced from the terminal A.

Fig. 43B is a view illustrating a display example displayed on the display 2005a of any of the terminals (the terminal B in this example) after the JOB of the label with tag of 7 cm is transmitted from the terminal A in the state of Fig. 43A (the label production operation signal is output) and the label is produced. By this display, the operator of the terminal B can recognize the state that as the result that the JOB of the label with tag of 7 cm is executed by the preceding operation from the terminal A, an ordinary label Tu of not longer than 13 cm obtained from 20 cm - 7 cm (hereinafter referred to as label without tag as appropriate) can be currently produced. Therefore, it is possible to produce a label without tag of the length up to 13 cm from the terminal B at this time.

Fig. 43C is a view showing a display example displayed on the display 2005a of any of the terminals (terminal C in this example) after the JOB of a label without tag of 8 cm is transmitted from the terminal B in the state of Fig. 43B and the label is produced. By this display, the operator of the terminal C can recognize the state that as the result that the JOB of the label without tag of 8 cm is executed by the preceding operation from the terminal B, an ordinary label of not longer than 5 cm obtained from 13 cm - 8 cm can be currently produced. Therefore, it is possible to produce a label without tag of the length up to 5 cm from the terminal C at this time.

In the mode by JOB for executing label production every time the JOB is accepted as above, the past production history (= acceptance history) may be also displayed. Fig. 44 shows such a variation. In this example, the already produced JOB is displayed as history information in the order from the top as "production history information", illustrating the state that the JOB of a label with tag of 7 cm has been already produced and then, the JOB of a label without tag of 8 cm is produced and now the JOB of a label without tag of 5 cm can be accepted.

As mentioned above, the history information may be displayed on the image display of a single label (depending on a method such as superimposing) instead of displaying the label images in plural stages in a time series.

The processing at the terminal 2005 and the tag-label producing apparatus 3002 executed when the operator performs the label production operation by the operating portion 2005b of the terminal 2005 will be described below. In the above description, a case was described that a plurality of JOBs is accepted in the length of one cycle (the length substantially equal to the arrangement pitch of the RFID circuit elements To) as the predetermined length unit of the base tape 101, the predetermined determination is made for the tape length for one cycle, and the printing is carried out by the one cycle unit. In the following flow, a case will be described that the plurality of JOBs is accepted for the length of two cycles as the predetermined length unit (the length substantially equal to twice of the arrangement pitch of the RFID circuit element To), the predetermined determination is made and the printing is carried out for one cycle in them (however, excluding the case of the above-mentioned mode by JOB).

Fig. 45 is a flowchart illustrating a control procedure executed by the CPU 2005c of the terminal 2005 and equivalent to Fig. 34 in the second embodiment. The same reference numerals are given to the equivalent procedures in Fig. 34 and the description will be omitted or simplified.

In Fig. 45, when the operator performs the production operation of a tag-label through the operating portion 2005b of the appropriate terminal 2005, similarly to Fig. 34 of the second embodiment, this flow is started. At this time, a flag indicating whether it is in the lump-sum mode or the mode by JOB is initialized to J = 0.

First, at Step S3099, a mode selection signal input from the operating portion 2005b of the terminal 2005 through the communication line NW is determined if it is the mode by JOB or not. If it is the mode by JOB, the determination is satisfied, the flag J = 1 is set at Step S3100 and then, the routine goes on to Step S2101 similar to the second embodiment. If it is not the mode by JOB (if it is the ordinary mode), the determination is not satisfied, and the routine goes directly to Step S2101.

Steps S2101 to Step S2105 are the same as those in the second embodiment. That is, an inquiry signal on the JOB allocation information is output to the tag-label producing apparatus 3002, a response signal is received, and the label information is displayed on the display 2005a. After that, when the label production start instruction signal is input, the JOB (label production operation signal) is generated and output to the tag-label producing apparatus 3002.

After that, at Step S3108, it is determined if the above flag J = 1 or not. In the case of the ordinary mode, it is J = 0 and the determination is not satisfied, and the routine goes on to Step S2106 similarly to the second embodiment, and the receiving of the printing completion information is determined. If the printing completion information has been received, the determination is satisfied, and the routine goes on to Step S2107 similarly to the second embodiment.

On the other hand, at Step S3108, if the mode by JOB was selected and J= 1 (See Step S3100), the determination is satisfied, and the routine goes on to Step S3109. At Step S3109, similarly to Step S2106, it is determined if the printing completion information corresponding to the JOB transmitted at Step S2105 was received from the corresponding tag-label producing apparatus 3002 or not. If the printing completion information is received, the determination is satisfied and the routine goes on to Step S2107.

At Step S2107, it is displayed on the display 2005a that the printing of the tag-label has been completed similarly to the second embodiment, and this flow is finished.

On the other hand, if there is no receiving of the printing completion information at Step S2106, the determination is not satisfied, and the routine goes on to Step S2111. Since steps S2111 to Step S2118 are the same as those in the second embodiment, the description will be omitted. If the forced printing is not instructed at Step S2115 and the determination is not satisfied, the routine goes on to Step S2121 described in the second embodiment using Fig. 35, and since steps Step S2121 to Step S2153 are also the same as those in the second embodiment, the description will be omitted.

The control procedure executed by a control circuit 3030 of the tag-label producing apparatus 3002 in response to the control on the terminal 2005 side shown in Figs. 45 and 35 is the same as that described in the second embodiment using Fig. 36.

That is, after the procedure described at Step S2205 to Step S2232 in Fig. 36 is executed, the JOB allocation information is output to the operating portion 2005b at Step S2235. The state of the allocation information at this time includes a label-length display signal (including the above-mentioned recommended information. Label-length display signal) for displaying the label-length information which can be currently produced (can be newly accepted) as mentioned above using Fig. 31B and the like, or an allocation history display signal (See Fig. 31A and the like) for displaying the JOB information which has been already accepted or its history information may be output.

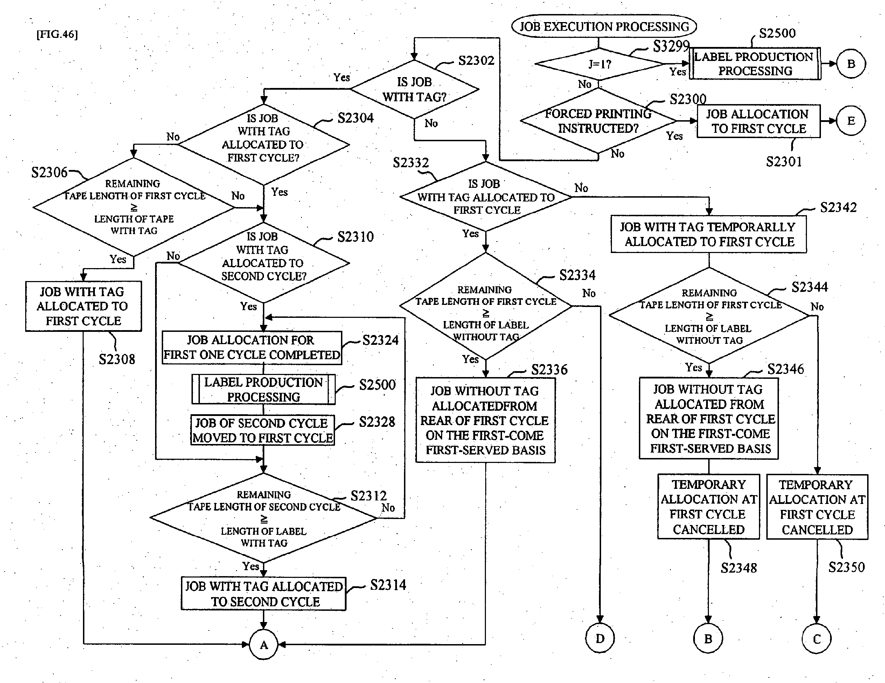

Fig. 46 is a flowchart illustrating the detail of the JOB execution processing executed at Step S2230 in the above-mentioned Fig. 36 executed by the control circuit 3030 of the tag-label producing apparatus 3003 of this third embodiment and corresponds to Fig. 37 of the second embodiment. In this JOB execution processing, similarly to the above, the JOB accepted at the tag-label producing apparatus 3002 (in detail, including the above-mentioned JOB identification information, label length information, RFID tag information identification signal and the like. Hereinafter referred to simply as the "JOB" as appropriate) is accepted up to two cycles in total of the label length information required for each JOB (total length of the allocated plurality of JOBs) and allocated. As the JOB for two cycles at the maximum is allocated and every time a predetermined condition is satisfied (if the total of the label length information by the JOB of a label with tag and the label length information by the JOB without tag becomes one cycle, for example), printing for one cycle is started. A tape for one cycle includes a single RFID circuit element To, and the length from this RFID circuit element To to the RFID circuit element To arranged next (arrangement pitch) becomes the tape length for one cycle. Therefore, the tape for one cycle can produce at least a single label with tag, and if there is a surplus portion, it is possible to produce a label without tag in the remaining tape portion.

Fig. 46 is a control procedure of the flow shown in Fig. 37 to which Step S3299 and Step S2500 are newly added. That is, first at Step S3299, it is determined if it is the above-mentioned flag indicating the mode J = 1 or not. If the mode by JOB has been selected, it is J = 1, and the determination is satisfied. And the routine goes on to Step S2500 (See the above-mentioned Fig. 40), the label production processing relating to the JOB is executed and then, the routine returns to the flow in Fig. 36. If the ordinary mode has been selected, it is J = 0, and the determination at Step S3299 is not satisfied and the routine returns to Step S2300 similarly to Fig. 37.

Since Step S3200 to Step S2350 are the same as in Fig. 37 (including transfer to Figs. 38 and 39), the description will be omitted.

As mentioned above, in the tag-label producing apparatus 3002 of this third embodiment, the JOB for producing the RFID label Tt or the ordinary label Tu in response to the operation input by the operator in each of the operation terminals 2005 is input and accepted by the control circuit 3030 side of the tag-label producing apparatus 3002 (See Step S2210). Then, (either in the ordinary mode or the mode by JOB, in the end) at Step S2500, an instruction signal for instructing label production is generated, the base tape 101 provided with the RFID circuit element To is fed, predetermined print is carried out by the print head 2010 on the cover film 103 (in the case of the RFID label Tt, information transmission/reception is further performed by the antenna 2014), and the labels Tt, Tu are produced.

At this time, by generating a label-length display signal at Step S2235 in the third embodiment, the label length information which can be newly accepted is displayed on the display 2005a of the terminal 2005, which is the display portion outside the apparatus (See Step S2103 and the like). Therefore, if a surplus portion of the base tape 101 is generated after the predetermined label length in the base tape 101 has been consumed (or consumption is scheduled) for producing the RFID label Tt, the surplus length portion is displayed as newly acceptable to have the operator recognize it (See Figs. 30, 31, 43, and 44). Then, the operator can effectively utilize the surplus portion for ordinary label production without wasting it.

Also, particularly in the third embodiment, the label length information corresponding to the JOB accepted at Step S2210 is sequentially allocated together with the JOB identification information and the RFID tag information identification signal in a predetermined order at Step S2220, and according to the allocation state, the label length is displayed at Step S2103 and the like. As a result, the operator can recognize the label length information which can be newly accepted and is changing according to the allocation, and can perform allocation for the label production by further operation input by the operating portion 2005b according to this. Then, according to the allocation state, the label production is executed at Step S2500.

When a surplus portion is generated in the base tape 101 after allocation of the label length information of the RFID label in this way, if the operator can recognize this as the label length information which can be accepted, at least one piece of the label length information of the ordinary label Tu can be allocated to the surplus length portion, and the surplus portion can be effectively utilized without a waste.

Also, particularly in the third embodiment, in the mode by JOB, the label production is executed for each JOB at Step S2500 moved from the Step S3299 in correspondence to the JOB accepted at Step S2210. At this time, the operator can recognize the label length information which can be newly accepted and is changing (decreasing) according to the label production (See Figs. 43 and 44) and can perform the label production operation by further operation input through the operating portion 2005b as appropriate according to this.

As a result, similarly to the ordinary mode, when a surplus portion is generated in the base tape 101 after production of the RFID label Tt, if the operator can recognize this as the acceptable label length information, the surplus length portion can be used for production of at least the ordinary label Tu, by which the surplus portion can be effectively utilized without waste.

Also, particularly in the third embodiment, when the label production is finished, by outputting a corresponding production end notice at Step S2287, completion of the label production without waste after the JOB allocation can be displayed and notified to the operator.

Also, particularly in the third embodiment, each tag-label producing apparatus 3002 can accept the JOB from the plurality of terminals 2005 through the communication line NW. At a result, JOB allocation can be performed not only from a single operator but from a plurality of operators. As a result, the effect to prevent wasting of a tape at the label production can be shared by the plurality of operators. Also, in this case, since there can be diversified requests for production with more various label lengths as compared with the case of the operation input by a single operator, label production can be expedited as a result.

In the above, a case was described that the RFID tag information is transmitted to the RFID circuit element To,at production of the RFID label Tt for performing writing in the IC circuit part 151 so as to produce the RFID label Tt, but not limited to this. That is, while the RFID tag information is read out from the RFID circuit element To for read only in which predetermined RFID tag information is stored/held unrewritably in advance, the RFID label Tt may be produced by carrying out the print corresponding to that. In this case, at Step S2210, it is only necessary to read only the print information from the information input from the terminal 2005 at Step S2205 and to perform the reading processing of the RFID tag information at Step S2270.

It is to be noted that in the third embodiment, various variations are possible. The variations will be sequentially described below.

### (3-1) When a display portion and an operating portion are provided on the tag-label producing apparatus side:

That is, the function as the display portion of the display 2005a of the terminal 2005 and the function of the operating portion 2005b described in the above may be exerted by the display portion 2053 or the operation portion 2052 of the tag-label producing apparatus 3002, respectively. In this case, various display control signals output from the CPU 2005c to the display 2005a in the flow of Fig. 45 or the like are input by the input/output interface 2031 and the control circuit 3030 of the tag-label producing apparatus 3002 through the communication line NW to the display portion 2053, and the corresponding display is made. Also, various operation signals input from the operating portion 2005b to the CPU 2005c in the above are input from the operation portion 2052 of the tag-label producing apparatus 3002 to the CPU 2005c of the terminal 2005 through the control circuit 3030 and the input/output interface 2031 of the tag-label producing apparatus 3002 through the communication line NW, and corresponding processing and controls are performed.

In this variation, too, the same effect as that of the above embodiment can be obtained.

### (3-2) When the single tag-label producing apparatus is provided with all the functions:

That is, not only the functions of the operating portion or display portion (including the notifying portion) as in the variation of the (3-1), but all the functions of the terminal 2005 of the above embodiment are provided at the tag-label producing apparatus 3002 side (configured as so-called standalone type). The detailed structure of the tag-label producing apparatus 3002 is the same as that shown in Fig. 42 in the above second embodiment. In this case, it is only necessary that the same control procedure as the control procedure shown in Figs. 45 and 35 executed by the CPU 2005c of the terminal 2005 should be executed by the control circuit 3030 of the tag-label producing apparatus 3002.

In this variation, too, particularly in an apparatus for tag production by the apparatus alone not connected to the other terminals or communication equipment through the network or the like, the same effect as that of the third embodiment to prevent wasting of a tape at the label production can be obtained.

### (4) Others

### (4-A) When the tape is not to be bonded:

That is, instead of carrying out the print on the cover film 103 different from the base tape 101 provided with the RFID circuit element To and bonding them together as in the second and the third embodiments, the present invention is applied to a tag-label producing apparatus for carrying out print on the cover film provided at the tag tape. In this case, a thermal tape can be used as the tape (The RFID circuit element To is installed on the thermal tape to be used as a tape corresponding to the base tape). In this case, the thermal tape constitutes the tag tape described in each claim, and the thermal layer constitutes a print-receiving medium layer.

In this variation, too, the same effect as that of the second and third embodiments and their variations can be obtained.

### (4-B) Other tape forms:

In the above, a case was described that the base tape or the thermal tape is wound around the reel member to constitute a roll, and the roll is arranged within the cartridge 7, 7', 7'', and 2100, from which the tape is fed out, but not limited to this. A lengthy flat sheet or strip state tape or sheet (including those formed by cutting it to an appropriate length after the tape wound around a roll is fed out. Also, the RFID circuit element To is arranged on that corresponding to the base tape 101) is stacked in a predetermined storage portion to be made into a cartridge, and the cartridge may be mounted to a cartridge holder portion of tag-label producing apparatus 1, 2002, 3002 side to be transferred/fed from the storage portion for print and writing so as to form the labels T, Tt, Tu.

Moreover, not even limited to the cartridge type, it may be so configured that the roll is directly mounted to the tag-label producing apparatus 1, 2002, 3002, or the lengthy flat sheet or strip state tape or sheet is transferred from outside the tag-label producing apparatus 1, 2002, 3002 one by one and supplied to the tag-label producing apparatus 1, 2002, 3002. In these cases, by obtaining the tape attribute parameter information of the tape (including a sheet) on the apparatus side by means of some known way such as a contact type, optical type, wireless communication type or the like, the same effect as that in the first, the second and the third embodiments and their variations can be obtained.

In the above, a case was described that the RFID tag information is transmitted to the RFID circuit element To and writing is made in the IC circuit part 151 so as to form the RFID label T, Tt, but not limited to this. That is, the present invention can be applied to a case that while the RFID tag information is read out from the RFID circuit element To for read only in which predetermined RFID tag information is stored/held unrewritably in advance, the RFID label T, Tt is produced by carrying out the print corresponding to that. In this case, too, the same effect as that in the first, the second and the third embodiments can be obtained.

Other than those mentioned above, methods of the first to the third embodiments and their variations may be combined as appropriate for use.

The "Scroll All ID" signal, the "Verify" signal, the "Program" signal and the like used in the above shall comply with the specification formulated by EPC global. The EPC global is a non-profit corporation jointly established by International EAN Association, which is an international organization of distribution codes, and UCC (Uniformed Code Council), which is an U.S. distribution code organization. Signals complying with other standards will do as long as they serve the same functions.

Though not specifically exemplified, the present invention can be put into practice with various changes.

## Claims

1. A tag-label producing apparatus (1; 2002; 3002) comprising:
label producing means capable of producing an RFID label (T; Tt), including at least a feeding portion (108; 2012) that is adapted to feed a tag-label tape (109; 101) having a print-receiving medium layer (103; 101a'; 101a") and an RFID circuit element (To) provided with an IC circuit part (151) that stores information and an antenna (152) for transmitting/receiving information, a communicating portion (LC; 2014) that is adapted to perform transmitting/receiving the information contactlessly with said RFID circuit element (To), and a printing portion (23; 2010) that is adapted to carry out desired print on said print-receiving medium layer (103; 101a'; 101a"); and
margin utilization processing means (S6, S10, S11, 512, S15, S20, S25, S105; S2301, S2308, S2314, S2336, S2346, S2506, S2524, S2406, S2414; S2235) that performs predetermined processing for utilizing a margin area where the print by said printing portion (23; 2010) is not carried out in said print-receiving medium layer (103; 102a'; 101a") at the time of producing said RFID label (T; Tt), **characterized in that**:
said feeding portion (108) is adapted to feed the tag-label tape (109) provided with said print-receiving medium layer (103; 101a'; 101a"), an affixing adhesive layer (101c; 101b'; 101b") for affixing said print-receiving medium layer (103; 101'; 101a") to an affixing target, a separation material layer (101d; 101c'; 101c") covering said affixing adhesive layer (101c; 101b'; 101b"), and said RFID circuit element (To);
said margin utilization processing means includes control means (S6, S10, S11, S12, S15, S20, S25, S105) that controls said printing portion (23) and said feeding portion (108) in coordination so that tag print corresponding to the transmission/reception contents by said communicating portion (LC) is carried out on a first print area (PE1) provided at a position corresponding to said RFID circuit element (To) in said print-receiving medium layer (103; 101a'; 101a"), and predetermined pattern print is carried out on a second print area (PE2) located at a tape tip end side other than said first print area (PE1) in said print-receiving medium layer (103; 101a'; 101a"); and
said tag-label producing apparatus (1) further comprises first half-cut means (35) that is adapted to cut the layers other than said separation material layer (101d; 101c';101c") of said tag-label tape (109) between said firstprint area (PE1) and said second print area (PE2) of said tag-label tape (109).

2. The tag-label producing apparatus (1) according to claim 1, wherein
said control means (S6, S10, S11, S12, S15, S20, S25, S105) controls said printing portion (23) and said feeding portion (108) in coordination so that predetermined pattern print is carried out on a third print area (PE3) located on a side opposite to said second print area (PE2) other than said first print area (PE1) in said print-receiving medium layer (103; 101a' ; 102a").

3. The tag-label producing apparatus (1) according to claim 2, wherein
said control means (S6, S10, S11, S12, S15, S20, S25, S105) controls said printing portion (23) and said feeding portion (108) in coordination so that said print patterns different from each other are printed on said second print area (PE2) and said third print area (PE3).

4. The tag-label producing apparatus (1) according to claim 2 or 3, wherein
said tag-label producing apparatus (1) further comprises second half-cut means (35) that cuts the layers other than said separation material layer (101d; 101c'; 101c") of said tag-label tape (109) between said first print area (PE1) and said third print area (PE3) of said tag-label tape (109).

5. The tag-label producing apparatus (1) according to any one of claims 1 to 4, wherein
said control means (S6, S10, S11, S12, S15, S20, S25, S105) controls said printing portion (23) and said feeding portion (108) in coordination so that label-related information relating to production of said RFID label (T) is printed on said second print area (PE2) or said third print area (PE3) as said pattern print.

6. The tag-label producing apparatus (1) according to claim 5, wherein
said control means (S6, S10, S11, S12, S15, S20, S25, S105) controls said printing portion (23) and said feeding portion (108) in coordination so that information on production date and time when the RFID label (T) is produced is printed as said label-related information.

7. . The tag-label producing apparatus (1) according to claim 5, wherein
said control means (S6, S10, S11, S12, S15, S20, S25, S105) controls said printing portion (23) and said feeding portion (108) in coordination so that information on time of use to be notified to a user at use of the RFID label (T) is printed as said label-related information.

8. The tag-label producing apparatus (1) according to claim 7, wherein
said control means (S6, S10, S11, S12, S15, S20, S25, S105) controls said printing portion (23) and said feeding portion (108) in coordination so that information on cautions for users of the RFID label (T) is printed as said information on time of use.

9. The tag-label producing apparatus (1) according to any one of claims 5 to 8, wherein
said tag-label producing apparatus (1) further comprises operation signal input means (S105) that inputs an operation signal of an operator,
said control means (S6, S10, S11, S12, S15, S20, S25, S105) includes pattern setting means (S105) that variably sets the contents of said pattern print according to said operation signal input with said operation signal input means (S105).

10. The tag-label producing apparatus (1) according to claim 9, wherein
said operation signal input means (S105) inputs a selection signal from a plurality of said label-related information set in advance as said operation signal; and
said pattern setting means (S105) sets the contents of said pattern print according to said selection signal input with said operation signal input means (S105).

11. The tag-label producing apparatus (1) according to claim 9 or 10, wherein
said pattern setting means (S105) makes setting by limiting the contents of said pattern print so that it is contained in a range of said second print area (PE2).

12. The tag-label producing apparatus (1) according to any one of claims 1 to 11, wherein
said control means (S6, S10, S11, S12, S15, S20, S25, S105) controls said printing portion (23) and said feeding portion (108) in coordination so that said print pattern is printed repeatedly for a plurality of times on said second print area (PE2) or said third print area (PE3).

13. The tag-label producing apparatus (1) according to any one of claims 1 to 12, wherein
said control means (S6, S10, S11, S12, S15, S20, S25, S105) controls said printing portion (23) and said feeding portion (108) in coordination so that a decoration including at least one addition or change of predetermined line, colors, designs, icons, marks, and symbols in said print pattern or its peripheral area is carried out on said second print area (PE2) or said third print area (PE3).

14. The tag-label producing apparatus (1) according to any one of claims 1 to 13, wherein
said tag-label producing apparatus (1) further comprises detecting means (127) that detects an identifier (PM) for detection at a position corresponding to said first print area (PE1) in the tag-label tape (109).

15. The tag-label producing apparatus (1) according to any one of claims 1 to 14, wherein
said tag-label producing apparatus (1) further comprises bonding means (27) that bonds a base layer (101b) for mounting said RFID circuit element (To) to said print-receiving medium layer (103) through a bonding adhesive layer (101a).

16. A tag-label producing apparatus (1; 2002; 3002) comprising:
label producing means capable of producing an RFID label (T; Tt), including at least a feeding portion (108; 2012) that is adapted to feed a tag-label tape (109; 101) having a print-receiving medium layer (103; 101a'; 101a") and an RFID circuit element (To) provided with an IC circuit part (151) that stores information and an antenna (152) for transmitting/receiving information, a communicating portion (LC; 2014) that is adapted to perform transmitting/receiving the information contactlessly with said RFID circuit element (To), and a printing portion (23; 2010) that is adapted to carry out desired print on said print-receiving medium layer (103; 101a'; 101a"); and
margin utilization processing means (S6, S10, S11, S12, S15, S20, S25, S105; S2301, S2308, S2314, S2336, S2346, S2506, S2524, S2406, S2414; S2235) that performs predetermined processing for utilizing a margin area where the print by said printing portion (23; 2010) is not carried out in said print-receiving medium layer (103; 101a'; 101a") at the time of producing said RFID label (T; Tt),
**characterized in that**:
said feeding portion (2012) is adapted to feed a tag tape (101) included in said tag-label tape that has said RFID circuit element (To) ;
said printing portion (2010) is adapted to carry out desired print on said print-receiving medium layer provided at said tag tape (101) or a print-receiving tape (103) as said print-receiving medium layer to be bonded to said tag tape (101);
said label producing means can produce both an RFID label (Tt) including said RFID circuit element (To) and an ordinary label (Tu) not provided with said RFID circuit element (To); and
said tag-label producing apparatus (2002) further comprises JOB accepting means (S2210) that accepts a producing operation signal for producing said RFID label (Tt) or said ordinary label (Tu); and JOB memory means (S2220) that sequentially stores JOB identification information, label length information and an RFID tag information identification signal corresponding to said producing operation signal accepted by said JOB accepting means (S2210);
said margin utilization processing means includes first JOB allocating means (S2301, S2308, S2314, S2336, S2346, S2506, S2524, S2406, S2414) that sequentially allocates said JOB identification information, said label length information and said RFID tag information identification signal stored by said JOB memory means (S2220) in a predetermined order; and
said tag-label producing apparatus (2002) further comprises first instruction signal output means (S2500) that generates and outputs a first instruction signal for instructing label production to said label producing means according to the allocated state by said first JOB allocating means (S2301, S2308, S2314, S2336, S2346, S2506, S2524, S2406, S2414).

17. The tag-label producing apparatus (2002) according to claim 16, wherein
said first JOB allocating means (S2301, S2308, S2314, S2336, S2346, S2506, S2524, S2406, S2414) allocates said JOB identification information, said label length information and said RFID tag information identification signal relating to said producing operation signal having said RFID tag information at allocated positions corresponding to arrangement information of said RFID circuit element (To) in said tag tape (101).

18. The tag-label producing apparatus (2002) according to claim 17, wherein
said first JOB allocating means (S2301, S2308, S2314, S2336, S2346, S2506, S2524, S2406, S2414) allocates said JOB identification information, said label length information and said RFID tag information identification signal relating to said producing operation signal not having said RFID tag information at allocated positions not overlapping the allocated positions corresponding to arrangement information of said RFID circuit element (To) in said tag tape (101).

19. The tag-label producing apparatus (2002) according to any one of claims 16 to 18, wherein
said tag-label producing apparatus (2002) further comprises determining means (S2306, S2312, S2334, S2344, S2504, S2522, S2404, S2412) that determines if the allocated state by said first JOB allocating means (S2301, S2308, S2314, S2336, S2346, S2506, S2524, S2406, S2414) satisfies a predetermined condition or not based on the arrangement information of said RFID circuit element (To) in said tag tape (101),
said first instruction signal output means (S2500) outputs said first instruction signal according to a determination result by said determining means (S2306, S2312, S2334, S2344, S2504, S2522, S2404, S2412).

20. The tag-label producing apparatus (2002) according to claim 19, wherein
said first JOB allocating means (S2301, S2308, S2314, S2336, S2346, S2506, S2524, S2406, S2414) carries out said allocation by the unit of a predetermined length based on the arrangement information of said RFID circuit element (To) in said tag tape (101).

21. The tag-label producing apparatus (2002) according to claim 19 or 20, wherein
said tag-label producing apparatus (2002) further comprises forced instruction signal output means (S2500) that generates and outputs an instruction signal for instructing label production to said label producing means regardless of the determination result in said determining means (S2306, S2312, S2334, S2344, S2504, S2522, S2404, S2412).

22. The tag-label producing apparatus (2002) according to any one of claims 16 to 21, wherein
said tag-label producing apparatus (2002) further comprises allocation information output means (S2235) that outputs allocation information by said first JOB allocating means (S2301, S2308, S2314, S2336, S2346, S2506, S2524, S2406, S2414).

23. The tag-label producing apparatus (2002) according to any one of claims 16 to 22, wherein
said tag-label producing apparatus (2002) further comprises label-length information output means (S2235) that outputs length information of said RFID label (Tt) or said ordinary label (Tu) which can be produced by said label producing means according to the allocation information by said first JOB allocating means (S2301, S2308, S2314, S2336, S2346, S2506, S2524, S2406, S2414).

24. The tag-label producing apparatus (2002) according to any one of claims 16 to 23, wherein
said tag-label producing apparatus (2002) further comprises end notice output means (S2287) that outputs a production end notice correspondingly when the label production by said label producing means is finished based on the instruction signal from said first instruction signal output means (S2500) or said forced instruction signal output means (S2500).

25. The tag-label producing apparatus (2002) according to any one of claims 16 to 24, wherein
said JOB memory means (S2220) is non-volatile memory means.

26. The tag-label producing apparatus (2002) according to any one of claims 16 to 25, wherein
said JOB accepting means (S2210) is configured capable of accepting said producing operation signal from a plurality of operation terminals (2005) provided outside said tag-label producing apparatus (2002).

27. The tag-label producing apparatus (2002) according to any one of claims 16 to 25, wherein
said tag-label producing apparatus (2002) further comprises operating means (2052) which can be operated by an operator,
said JOB accepting means (S2210) accepts said producing operation signal from said operating means (2052).

28. A tag-label producing apparatus (1; 2002; 3002) comprising :
label producing means capable of producing an RFID label (T; Tt), including at least a feeding portion (108; 2012) that is adapted to feed a tag-label tape (109; 101) having a print-receiving medium layer (103; 101a'; 101a") and an RFID circuit element (To) provided with an IC circuit art (151) that stores information and an antenna (152) for transmitting/receiving information, a communicating portion (LC; 2014) that is adapted to perform transmitting/receiving the information contactlessl with said RFID circuit element (To), and a printing portion (23; 2010) that is adapted to carry out desired print on said print-receiving medium layer (103; 101a'; 101a"); and
margin utilization processing means (S6, S10, S11, S12, S15, S20, S25, S105; S2301, S2308, S2314, S2336, S2346, S2506, S2524, S2406, S2414; S2235) that performs predetermined processing for utilizing a margin area where the print by said printing portion (23; 2010) is not carried out in said print-receiving medium layer (103; 101a'; 101a") at the time of producing said RFID label (T; Tt),
**characterized in that**:
said feeding portion (2012) is adapted to feed a tag tape (101) included in said tag-label tape that has said RFID circuit element (To);
said printing portion (2010) is adapted to carry out desired print on said print-receiving medium layer provided at said tag tape (101) or a print-receiving tape (103) as said print-receiving medium layer to be bonded to said tag tape (101);
said label producing means can produce both an RFID label (Tt) including said RFID circuit element (To) and an ordinary label (Tu) not provided with said RFID circuit element (To);
the tag-label producing apparatus (3002) further comprises JOB accepting means (S2210) that accepts a producing operation signal of said RFID label (Tt) or said ordinary label (Tu); and
said margin utilization processing means includes label-length display signal generating means (S2235) that generates a label-length display signal for displaying label length information of the producing operation signal which can be newly accepted by said JOB accepting means (S2210).

29. The tag-label producing apparatus (3002) according to claim 28, wherein
said tag-label producing apparatus (3002) further comprises second JOB allocating means (S2301, S2308, S2314, S2336, S2346, S2506, S2524, S2406, S2414) that allocates sequentially said label length information, JOB identification information and RFID tag information identification signal corresponding to said producing operation signal accepted by said JOB accepting means (S2210) in a predetermined order; and second instruction signal output means (S2500) that generates and outputs a second instruction signal for instructing the label production to said label producing means according to the allocated state by the second JOB allocating means (S2301, S2308, S2314, S2336, S2346, S2506, S2524, S2406, S2414),
said label-length display signal generating means (S2235) generates said label-length display signal according to the allocated state of said second JOB allocating means (S2301, S2308, S2314, S2336, S2346, S2506, S2524, S2406, S2414).

30. The tag-label producing apparatus (3002) according to claim 29, wherein
said tag-label producing apparatus (3002) further comprises allocation history display signal generating means (S2235) that generates an allocation history display signal for displaying allocation history information by said second JOB allocating means (S2301, S2308, S2314, S2336, S2346, S2506, S2524, S2406, S2414).

31. The tag-label producing apparatus (3002) according to claim 29 or 30, wherein
said tag-label producing apparatus (3002) further comprises end notice output means (S2287) that outputs a production end notice correspondingly when the label production by said label producing means is finished based on said second instruction signal from said second instruction signal output means (S2500).

32. The tag-label producing apparatus (3002) according to claim 28, wherein
said tag-label producing apparatus (3002) further comprises third instruction signal output means (S2500) that generates and outputs a third instruction signal for instructing label production to said label producing means correspondingly when said producing operation signal is accepted by said JOB accepting means (S2210),
said label-length display signal generating means (S2235) generates said label-length display signal according to said producing operation signal accepted by said JOB accepting means (S2210) and said third instruction signal.

33. The tag-label producing apparatus (3002) according to claim 32, wherein
said tag-label producing apparatus (3002) further comprises production history display signal generating means (S2235) that generates a production history display signal for displaying production history information by said label producing means.

34. The tag-label producing apparatus (3002) according to claim 30 or 33, wherein
said allocation history display signal generating means (S2235) or said production history display signal generating means (S2235) generates said allocation history display signal or said production history display signal for displaying substantially band-state icons, marks, and symbols whose length change according to progress of said allocation history or said production history.

35. The tag-label producing apparatus (3002) according to claim 30 or 33, wherein
said allocation history display signal generating means (S2235) or said production history display signal generating means (S2235) generates said allocation history display signal or said production history display signal for displaying a plurality of substantially band-state icons, marks, and symbols respectively corresponding to said allocation history or said production history.

36. The tag-label producing apparatus (3002) according to any one of claims 28 to 35, wherein
said JOB accepting means (S2210) is configured capable of accepting said producing operation signal from a plurality of operation terminals (2005) provided outside said tag-label producing apparatus (3002); and
said label-length display signal generating means (S2235) generates said label-length display signal for displaying the label length information of the producing operation signal which can be newly accepted by said JOB accepting means (S2210) on terminal-side display means (2005a) provided at said plurality of operation terminals (2005).

37. The tag-label producing apparatus (3002) according to any one of claims 28 to 35, wherein
said tag-label producing apparatus (3002) further comprises operating means (2052) capable of operating by an operator, and apparatus-side display means (2053) that executes predetermined display to the operator,
said JOB accepting means (S2210) accepts said producing operation signal from said operating means (2052); and
said label-length display signal generating means (S2235) generates said label-length display signal for displaying the label length information of the producing operation signal which can be newly accepted by said JOB accepting means (S2210) on said apparatus-side display means (2053).

## Patentansprüche

1. Etikettenerzeugungsgerät (1; 2002; 3002) mit:
einer Etikettenerzeugungseinrichtung, die ein RFID-Etikett (T; Tt) erzeugen kann, zumindest einschließlich eines Vorschubabschnitts (108; 2012), der daran angepasst ist, ein Etikettenband (109; 101) mit einer Druckaufnahmemediumlage (103; 101a'; 101a") und einem RFID-Schaltungselement (To) vorzuschieben, das mit einem IC-Schaltungsteil (151), der Informationen speichert, und einer Antenne (152) zum Senden/Aufnehmen von Informationen versehen ist, eines Kommunikationsabschnitts (LC; 2014), der daran angepasst ist, die Informationen kontaktlos mit dem RFID-Schaltungselement (To) zu senden/aufzunehmen, und eines Druckabschnitts (23; 2010), der daran angepasst ist, einen gewünschten Druck auf der Druckaufnahmemediumlage (103; 101a'; 101a") zu bewirken; und
einer Grenzennutzverarbeitungseinrichtung (S6, S10, S11, S12, S15, S20, S25, S105; S2301, S2308, S2314, S2336, S2346, S2506, S2524, S2406, S2414; S2235), die eine vorbestimmte Verarbeitung zum Nutzen eines Grenzbereichs durchführt, in dem das Drucken durch den Druckabschnitt (23; 2010) in der Druckaufnahmemediumlage (103; 101a'; 101a") während der Erzeugung des RFID-Etiketts (T; Tt) nicht durchgeführt wird,
**dadurch gekennzeichnet, dass**:
der Vorschubabschnitt (108) daran angepasst ist, das Etikettenband (101) vorzuschieben, das mit der Druckaufnahmemediumlage (103; 101a'; 101a"), einer Fixierklebelage (101c; 101b'; 101b") zum Fixieren der Druckaufnahmemediumlage (103; 101a'; 101a") an einem Fixierziel, einer Trennmateriallage (101d; 101c'; 101c"), die die Fixierklebeelage (101c; 101b'; 101b") abdeckt, und dem RFID-Schaltungselement (To) versehen ist;
wobei die Grenzennutzverarbeitungseinrichtung eine Steuereinrichtung (S6, S10, S11, S12, S15, S20, S25, S105) aufweist, die den Druckabschnitt (23) und den Vorschubabschnitt (108) koordiniert so steuert, dass ein Etikettendruck entsprechend den Sende/Aufnahmeinhalten durch den Kommunikationsabschnitt (LC) auf einem ersten Druckbereich (PE1) bewirkt wird, der an einer Position entsprechend dem RFID-Schaltungselement (To) in der Druckaufnahmemediumlage (103; 101a'; 101a") versehen ist, und ein vorbestimmter Musterdruck auf einem zweiten Druckbereich (PE2) bewirkt wird, der sich an einer Seite eines Bandspitzenendes außerhalb des ersten Druckbereiches (PE1) in der Druckaufnahmemediumlage (103; 101a'; 101a") befindet; und
das Etikettenerzeugungsgerät (1) des Weiteren eine erste Halbschnitteinrichtung (35) aufweist, die daran angepasst ist, die Lagen außer der Trennmateriallage (10ld; 101c'; 101c") des Etikettenbandes (109) zwischen dem ersten Druckbereich (PE1) und dem zweiten Druckbereich (PE2) des Etikettenbandes (109) zu schneiden.

2. Etikettenerzeugungsgerät (1) gemäß Anspruch 1, wobei
die Steuereinrichtung (S6, S10, S11, S12, S15, S20, S25, S105) den Druckabschnitt (23) und den Vorschubabschnitt (108) koordiniert so steuert, dass der vorbestimmte Musterdruck auf einem dritten Druckbereich (PE3) durchgeführt wird, der sich an einer Seite gegenüber dem zweiten Druckbereich (PE2) außerhalb des ersten Druckbereiches (PE1) in der Druckaufnahmemediumlage (103; 101a'; 101a") befindet.

3. Etikettenerzeugungsgerät (1) gemäß Anspruch 2, wobei
die Steuereinrichtung (S6, S10, S11, S12, S15, S20, S25, S105) den Druckabschnitt (23) und den Vorschubabschnitt (108) koordiniert so steuert, dass Druckmuster, die sich voneinander unterscheiden, auf dem zweiten Druckbereich (PE2) und dem dritten Druckbereich (PE3) gedruckt werden.

4. Etikettenerzeugungsgerät (1) gemäß Anspruch 2 oder 3, wobei
das Etikettenerzeugungsgerät (1) des Weiteren eine zweite Halbschnitteinrichtung (35) aufweist, die die Lagen außer der Trennmateriallage (101d; 101c'; 101c") des Etikettenbandes (109) zwischen dem ersten Druckbereich (PE1) und dem dritten Druckbereich (PE3) des Etikettenbands (109) schneidet.

5. Etikettenerzeugungsgerät (1) gemäß einem der Ansprüche 1 bis 4, wobei
die Steuereinrichtung (S6, S10, S11, S12, S15, S20, S25, S105) den Druckabschnitt (23) und den Vorschubabschnitt (108) koordiniert so steuert, dass etikettenrelevante Informationen, die sich auf die Erzeugung des RFID-Etiketts (T) beziehen, auf dem zweiten Druckbereich (PE2) oder dem dritten Druckbereich (PE3) als der Musterdruck gedruckt werden.

6. Etikettenerzeugungsgerät (1) gemäß Anspruch 5, wobei
die Steuereinrichtung (S6, S10, S11, S12, S15, S20, S25, S105) den Druckabschnitt (23) und den Vorschubabschnitt (108) koordiniert so steuert, dass Informationen über das Erzeugungsdatum und die Erzeugungszeit, bei denen das RFID-Etikett (T) erzeugt wird, als die etikettenrelevanten Informationen gedruckt werden.

7. Etikettenerzeugungsgerät (1) gemäß Anspruch 5, wobei
die Steuereinrichtung (S6, S10, S11, S12, S15, S20, S25, S105) den Druckabschnitt (23) und den Vorschubabschnitt (108) koordiniert so steuert, dass Informationen über die Benutzungszeit, die einem Benutzer bei der Verwendung des RFID-Etiketts (T) mitzuteilen sind, als die etikettenrelevanten Informationen gedruckt werden.

8. Etikettenerzeugungsgerät (1) gemäß Anspruch 7, wobei
die Steuereinrichtung (S6, S10, S11, S12, S15, S20, S25, S105) den Druckabschnitt (23) und den Vorschubabschnitt (108) koordiniert so steuert, dass Informationen über Vorsichtsmaßnahmen für den Benutzer des RFID-Etiketts (T) als die Informationen über die Benutzungszeit gedruckt werden.

9. Etikettenerzeugungsgerät (1) gemäß einem der Ansprüche 5 bis 8, wobei
das Etikettenerzeugungsgerät (1) des Weiteren eine Betriebssignaleingabeeinrichtung (S105) aufweist, die ein Betriebssignal einer Bedienperson eingibt,
wobei die Steuereinrichtung (S6, S10, S11, S12, S15, S20, S25, S105) eine Mustereinstelleinrichtung (S105) aufweist, die die Inhalte des Musterdrucks gemäß dem Betriebssignal variabel einstellt, das mit der Betriebssignaleingabeeinrichtung (S105) eingegeben wird.

10. Etikettenerzeugungsgerät (1) gemäß Anspruch 9, wobei
die Betriebssignaleingabeeinrichtung (S105) ein Auswahlsignal aus einer Vielzahl der etikettenrelevanten Informationen eingibt, die im Voraus als das Betriebssignal eingestellt sind; und
die Mustereinstelleinrichtung (S105) die Inhalte des Musterdrucks gemäß dem Auswahlsignal einstellt, das mit der Betriebssignaleingabeeinrichtung (S105) eingegeben wird.

11. Etikettenerzeugungsgerät (1) gemäß Anspruch 9 oder 10, wobei
die Mustereinstelleinrichtung (S105) eine Einstellung durch Begrenzen der Inhalte des Druckmusters so einstellt, dass diese in einem Bereich des zweiten Druckbereiches (PE2) enthalten sind.

12. Etikettenerzeugungsgerät (1) gemäß einem der Ansprüche 1 bis 11, wobei
die Steuereinrichtung (S6, S10, S11, S12, S15, S20, S25, S105) den Druckabschnitt (23) und den Vorschubabschnitt (108) koordiniert so steuert, dass das Druckmuster mehrmals auf dem zweiten Druckbereich (PE2) oder dem dritten Druckbereich (PE3) wiederholt gedruckt wird.

13. Etikettenerzeugungsgerät (1) gemäß einem der Ansprüche 1 bis 12, wobei
die Steuereinrichtung (S6, S10, S11, S12, S15, S20, S25, S105) den Druckabschnitt (23) und den Vorschubabschnitt (108) koordiniert so steuert, dass eine Dekoration zumindest einschließlich einer Zugabe oder Änderung von einer vorbestimmten Linie, Farben, Designs, Icons, Markierungen und Symbolen in dem Druckmuster oder dessen Umfangsbereich auf dem zweiten Druckbereich (PE2) oder dem dritten Druckbereich (PE3) bewirkt wird.

14. Etikettenerzeugungsgerät (1) gemäß einem der Ansprüche 1 bis 13, wobei
das Etikettenerzeugungsgerät (1) des Weiteren eine Erfassungseinrichtung (127) aufweist, die einen Identifizierer (PM) für eine Erfassung an einer Position entsprechend dem ersten Druckbereich (PE1) in dem Etikettenband (109) erfasst.

15. Etikettenerzeugungsgerät (1) gemäß einem der Ansprüche 1 bis 14, wobei
das Etikettenerzeugungsgerät (1) des Weiteren eine Fügeeinrichtung (27) aufweist, die eine Basislage (101b) zum Anbringen des RFID-Schaltungselements (To) an der Druckaufnahmemediumlage (103) durch eine Fügeklebelage (101a) fügt.

16. Etikettenerzeugungsgerät (1; 2002; 3002) mit:
einer Etikettenerzeugungseinrichtung, die ein RFID-Etikett (T; Tt) erzeugen kann, zumindest einschließlich eines Vorschubabschnitts (108; 2012), der daran angepasst ist, ein Etikettenband (101; 101) vorzuschieben, das eine Druckaufnahmemediumlage (103; 101a'; 101a") und ein RFID-Schaltungselement (To) hat, das mit einem IC-Schaltungsteil (151), der Informationen speichert, und einer Antenne (152) zum Senden/Aufnahmen von Informationen versehen ist, eines Kommunikationsabschnitts (LC; 2014), der daran angepasst ist, Informationen mit dem RFID-Schaltungselement (To) kontaktlos zu senden/aufzunehmen, und eines Druckabschnitts (23; 2010), der daran angepasst ist, einen gewünschten Druck auf der Druckaufnahmemediumlage (103; 101a'; 101a") zu bewirken; und
einer Grenzennutzverarbeitungseinrichtung (S6, S10, S11, S12, S15, S20, S25, S105; S2301, S2308, S2314, S2336, S2346, S2506, S2524, S2406, S2414; S2235), die eine vorbestimmte Verarbeitung zum Nutzen eines Grenzbereichs durchführt, in dem das Drucken durch den Druckabschnitt (23; 2010) in der Druckaufnahmemediumlage (103; 101a'; 101a") während der Erzeugung des RFID-Etiketts (T; Tt) nicht durchgeführt wird,
**dadurch gekennzeichnet, dass**:
der Vorschubabschnitt (2012) daran angepasst ist, ein Tagband (101) vorzuschieben, das in dem Etikettenband enthalten ist, der das RFID-Schaltungselement (To) hat;
wobei der Druckabschnitt (2010) daran angepasst ist, einen gewünschten Druck auf der Druckaufnahmemediumlage zu bewirken, die an dem Tagband (101) oder einem Druckaufnahmeband (103) als die Druckaufnahmemmediumlage vorgesehen ist, die an dem Tagband (101) zu fügen ist;
wobei die Etikettenerzeugungseinrichtung sowohl ein RFID-Etikett (Tt) einschließlich des RFID-Schaltungselements (To) als auch ein herkömmliches Etikett (Tu) erzeugen kann, das mit keinem RFID-Schaltungselement (To) versehen ist;
wobei das Etikettenerzeugungsgerät (2002) des Weiteren eine JOB-Annahmeeinrichtung (S2210), die ein Erzeugungsbetriebssignal zum Erzeugen des RFID-Etiketts (Tt) oder des herkömmlichen Etiketts (Tu) annimmt; und eine JOB-Speichereinrichtung (S2220) aufweist, die nacheinander JOB-Identifikationsinformationen, Etikettenlängeninformationen und ein RFID-Etiketteninformationsidentifikationssignal entsprechend dem Erzeugungsbetriebssignal speichert, das durch die JOB-Annahmeeinrichtung (S2210) angenommen wird;
wobei die Grenzennutzverarbeitungseinrichtung eine erste JOB-Zuweisungseinrichtung (S2301, S2308, S2314, S2336, S2346, S2506, S2524, S2406, S2414) aufweist, die nacheinander die JOB-Identifikationsinformationen, die Etikettenlängeninformationen und das RFID-Etiketteninformationsidentifikationssignal, die in der JOB-Speichereinrichtung (S2220) gespeichert sind, in einer vorbestimmten Reihenfolge zuweist; und
wobei das Etikettenerzeugungsgerät (2002) des Weiteren eine erste Befehlssignalabgabeeinrichtung (S2500) aufweist, die ein erstes Befehlssignal zum Befehlen der Etikettenerzeugung zu der Etikettenerzeugungseinrichtung gemäß dem zugewiesenen Zustand durch die erste JOB-Zuweisungseinrichtung (S2301, S2308, S2314, S2336, S2346, S2506, S2524, S2406, S2414) erzeugt und abgibt.

17. Etikettenerzeugungsgerät (2002) gemäß Anspruch 16, wobei
die erste JOB-Zuweisungseinrichtung (S2301, S2308, S2314, S2336, S2346, S2506, S2524, S2406, S2414) die JOB-Identifikationsinformationen, die Etikettenlängeninformationen und das RFID-Etiketteninformationsidentifikationssignal bezüglich des Erzeugungsbetriebssignals, das die RFID-Etiketteninformationen hat, an zugewiesenen Positionen entsprechend Anordnungsinformationen des RFID-Schaltungselements (To) in dem Tagband (101) zuweist.

18. Etikettenerzeugungsgerät (2002) gemäß Anspruch 17, wobei
die erste JOB-Zuweisungseinrichtung (S2301, S2308, S2314, S2336, S2346, S2506, S2524, S2406, S2414) die JOB-Identifikationsinformationen, die Etikettenlängeninformationen und das RFID-Etiketteninformationsidentifikationssignal bezüglich des Erzeugungsbetriebssignals, das keine RFID-Etiketteninformationen hat, an zugewiesenen Positionen zuweist, die sich nicht mit den zugewiesenen Positionen entsprechend den Anordnungsinformationen des RFID-Schaltungselements (To) in dem Tagband (101) überlappen.

19. Etikettenerzeugungsgerät (2002) gemäß einem der Ansprüche 16 bis 18, wobei
das Etikettenerzeugungsgerät (2002) des Weiteren eine Bestimmungseinrichtung (S2306, S2312, S2334, S2344, S2504, S2522, S2404, S2412) aufweist, die bestimmt, ob der zugewiesene Zustand durch die erste JOB-Zuweisungseinrichtung (S2301, S2308, S2314, S2336, S2346, S2506, S2524, S2406, S2414) eine vorbestimmte Bedingung auf der Grundlage der Anordnungsinformationen des RFID-Schaltungselements (To) in dem Tagband (101) erfüllt oder nicht,
wobei die erste Befehlssignalabgabeeinrichtung (S2500) das erste Befehlssignal gemäß einem Bestimmungsergebnis durch die Bestimmungseinrichtung (S2306, S2312, S2334, S2344, S2504, S2522, S2404, S2412) abgibt.

20. Etikettenerzeugungsgerät (2002) gemäß Anspruch 19, wobei
die erste JOB-Zuweisungseinrichtung (S2301, S2308, S2314, S2336, S2346, S2506, S2524, S2406, S2414) die Zuweisung durch eine vorbestimmte Längeneinheit auf der Grundlage der Anordnungsinformationen des RFID-Schaltungselements (To) in dem Tagband (101) durchführt.

21. Etikettenerzeugungsgerät (2002) gemäß Anspruch 19 oder 20, wobei
das Etikettenerzeugungsgerät (2002) des Weiteren eine Einrichtung (2500) zum Abgeben eines erzwungenen Befehlssignals aufweist, die ein Befehlssignal zum Befehlen der Etikettenerzeugung zu der Etikettenerzeugungseinrichtung ungeachtet des Bestimmungsergebnisses in der Bestimmungseinrichtung (S2306, S2312, S2334, S2344, S2504, S2522, S2404, S2412) erzeugt und abgibt.

22. Etikettenerzeugungsgerät (2002) gemäß einem der Ansprüche 16 bis 21, wobei
das Etikettenerzeugungsgerät (2002) des Weiteren eine Zuweisungsinformationsabgabeeinrichtung (S2235) aufweist, die Zuweisungsinformationen durch die erste JOB-Zuweisungseinrichtung (S2301, S2308, S2314, S2336, S2346, S2506, S2524, S2406, S2414) abgibt.

23. Etikettenerzeugungsgerät (2002) gemäß einem der Ansprüche 16 bis 22, wobei
das Etikettenerzeugungsgerät (2002) des Weiteren eine Etikettenlängeninformationsabgabeeinrichtung (S2235) aufweist, die Längeninformationen des RFID-Etiketts (Tt) oder des herkömmlichen Etiketts (Tu) abgibt, die durch die Etikettenerzeugungseinrichtung erzeugt werden können, und zwar gemäß den Zuweisungsinformationen durch die erste JOB-Zuweisungseinrichtung (S2301, S2308, S2314, S2336, S2346, S2506, S2524, S2406, S2414).

24. Etikettenerzeugungsgerät (2002) gemäß einem der Ansprüche 16 bis 23, wobei
das Etikettenerzeugungsgerät (2002) des Weiteren eine Mitteilungsabgabeeinrichtung (S2287) aufweist, die eine Erzeugungsbeendigungsmitteilung entsprechend abgibt, wenn die Etikettenerzeugung durch die Etikettenerzeugungseinrichtung beendet ist, und zwar auf der Grundlage des Befehlssignals von der ersten Befehlssignalabgabeeinrichtung (S2500) oder der Einrichtung (S2500) zum Abgeben eines erzwungenen Befehlssignals.

25. Etikettenerzeugungsgerät (2002) gemäß einem der Ansprüche 16 bis 24, wobei
die JOB-Speichereinrichtung (S2220) eine nicht-flüchtige Speichereinrichtung ist.

26. Etikettenerzeugungsgerät (2002) gemäß einem der Ansprüche 16 bis 25, wobei
die JOB-Annahmeeinrichtung (S2210) dazu konfiguriert ist, dass sie das Erzeugungsbetriebssignal von vielen Betriebsterminals (S2005) annehmen kann, die außerhalb des Etikettenerzeugungsgerätes (2002) vorgesehen sind.

27. Etikettenerzeugungsgerät (2002) gemäß einem der Ansprüche 16 bis 25, wobei
das Etikettenerzeugungsgerät (2002) des Weiteren eine Betriebseinrichtung (2052) aufweist, die durch eine Bedienperson betrieben werden kann,
wobei die JOB-Annahmeeinrichtung (S2210) das Erzeugungsbetriebssignal von der Betriebseinrichtung (2052) annimmt.

28. Etikettenerzeugungsgerät (1; 2002; 3002) mit:
einer Etikettenerzeugungseinrichtung, die ein RFID-Etikett (T; Tt) erzeugen kann, zumindest einschließlich eines Vorschubabschnitts (108; 2012), der daran angepasst ist, ein Etikettenband (109; 101) vorzuschieben, das eine Druckaufnahmemediumlage (103; 101a'; 101a") und ein RFID-Schaltungselement (To) hat, das mit einem IC-Schaltungsteil (151), der Informationen speichert, und einer Antenne (152) zum Senden/Aufnehmen von Informationen versehen ist, eines Kommunikationsabschnitts (LC; 2014), der daran angepasst ist, Informationen mit dem RFID-Schaltungselement (To) kontaktlos zu senden/aufzunehmen, und eines Druckabschnitts (23; 2010), der daran angepasst ist, einen gewünschten Druck auf der Druckaufnahmemediumlage (103; 101a' i 101a") zu bewirken; und
einer Grenzennutzverarbeitungseinrichtung (S6, S10, S11, S12, S15, S20, S25, S105; S2301, S2308, S2314, S2336, S2346, S2506, S2524, S2406, S2414; S2235), die eine vorbestimmte Verarbeitung zum Nutzen eines Grenzbereichs durchführt, in dem das Drucken durch den Druckabschnitt (23; 2010) in der Druckaufnahmemediumlage (103; 101a'; 101a") während der Erzeugung des RFID-Etiketts (T; Tt) nicht durchgeführt wird,
**dadurch gekennzeichnet, dass**:
der Vorschubabschnitt (2012) daran angepasst ist, ein Tagband (101) vorzuschieben, das in dem Etikettenband enthalten ist, das das RFID-Schaltungselement (To) hat;
der Druckabschnitt (2010) daran angepasst ist, den gewünschten Druck auf der Druckaufnahmemediumlage zu bewirken, die an dem Tagband (101) oder einem Druckaufnahmeband (103) als die Druckaufnahmemediumlage vorgesehen ist, die an dem Tagband (101) zu fügen ist;
wobei die Etikettenerzeugungseinrichtung sowohl ein RFID-Etikett (Tt) einschließlich des RFID-Schaltungselements (To) als auch ein herkömmliches Etikett (Tu) erzeugen kann, das mit keinem RFID-Schaltungselement (To) versehen ist;
wobei das Etikettenerzeugungsgerät (3002) des Weiteren eine JOB-Annahmeeinrichtung (S2210) aufweist, die ein Erzeugungsbetriebssignal des RFID-Etiketts (Tt) oder des herkömmlichen Etiketts (Tu) annimmt; und
die Grenzennutzverarbeitungseinrichtung eine Etikettenlängenanzeigesignalerzeugungseinrichtung (S2235) aufweist, die ein Etikettenlängenanzeigensignal zum Anzeigen von Etikettenlängeninformationen des Erzeugungsbetriebssignals erzeugt, das durch die JOB-Annahmeeinrichtung (S2210) neu angenommen werden kann.

29. Etikettenerzeugungsgerät (3002) gemäß Anspruch 28, wobei
das Etikettenerzeugungsgerät (3002) des Weiteren eine zweite JOB-Zuweisungseinrichtung (S2301, S2308, S2314, S2336, S2346, S2506, S2524, S2406, S2414), die nacheinander Etikettenlängeninformationen, JOB-Identifikationsinformationen und ein RFID-Etiketteninformationsidentifikationssignal entsprechend dem Erzeugungsbetriebssignal, das durch die JOB-Annahmeeinrichtung (S2210) angenommen wird, in einer vorbestimmten Reihenfolge zuweist; und eine zweite Befehlssignalabgabeeinrichtung (S2500) aufweist, die ein zweites Befehlssignal zum Befehlen der Etikettenerzeugung zu der Etikettenerzeugungseinrichtung gemäß dem zugewiesenen Zustand durch die zweite JOB-Zuweisungseinrichtung (S2301, S2308, S2314, S2336, S2346, S2506, S2524, S2406, S2414) erzeugt und abgibt,
wobei die Etikettenlängenanzeigesignalerzeugungseinrichtung (S2235) das Etikettenlängenanzeigesignal gemäß dem zugewiesenen Zustand der zweiten JOB-Zuweisungseinrichtung (S2301, S2308, S2314, S2336, S2346, S2506, S2524, S2406, S2414) erzeugt.

30. Etikettenerzeugungsgerät (3002) gemäß Anspruch 29, wobei
das Etikettenerzeugungsgerät (3002) des Weiteren eine Zuweisungshistorienanzeigesignalerzeugungseinrichtung (S2235) aufweist, die ein Zuweisungshistorienanzeigesignal zum Anzeigen von Zuweisungshistorieninformationen durch die zweite JOB-Zuweisungseinrichtung (S2301, S2308, S2314, S2336, S2346, S2506, S2524, S2406, S2414) erzeugt.

31. Etikettenerzeugungsgerät (3002) gemäß Anspruch 29 oder 30, wobei
das Etikettenerzeugungsgerät (3002) des Weiteren eine Beendigungsmitteilungsabgabeeinrichtung (S2287) aufweist, die eine Erzeugungsbeendigungsmitteilung entsprechend abgibt, wenn die Etikettenerzeugung durch die Etikettenerzeugungseinrichtung beendet ist, und zwar auf der Grundlage des zweiten Befehlssignals von der zweiten Befehlssignalabgabeeinrichtung (S2500).

32. Etikettenerzeugungsgerät (3002) gemäß Anspruch 28, wobei
das Etikettenerzeugungsgerät (3002) des Weiteren eine dritte Befehlssignalsabgabeeinrichtung (S2500) aufweist, die ein drittes Befehlssignal zum Befehlen der Etikettenerzeugung zu der Etikettenerzeugungseinrichtung entsprechend erzeugt und abgibt, wenn das Erzeugungsbetriebssignal durch die JOB-Annahmeeinrichtung (S2210) angenommen wird,
wobei die Etikettenlängenanzeigesignalerzeugungseinrichtung (S2235) das Etikettenlängenanzeigesignal gemäß dem Erzeugungsbetriebssignal, das durch die JOB-Annahmeeinrichtung (S2210) angenommen wird, und dem dritten Befehlssignal erzeugt.

33. Etikettenerzeugungsgerät (3002) gemäß Anspruch 32, wobei
das Etikettenerzeugungsgerät (3002) des Weiteren eine Erzeugungshistorienanzeigesignalerzeugungseinrichtung (S2235) aufweist, die ein Erzeugungshistorienanzeigesignal zum Anzeigen von Erzeugungshistorieninformationen durch die Etikettenerzeugungseinrichtung erzeugt.

34. Etikettenerzeugungsgerät (3002) gemäß Anspruch 30 oder 33, wobei
die Zuweisungshistorienanzeigesignalerzeugungseinrichtung (S2235) oder die Erzeugungshistorienanzeigesignalerzeugungseinrichtung (S2235) das Zuweisungshistorienanzeigesignal oder das Erzeugungshistorienanzeigesignal zum Anzeigen von im Wesentlichen bandförmigen Icons, Markierungen und Symbolen erzeugt, deren Längen sich gemäß einem Fortschritt der Zuweisungshistorie oder der Erzeugungshistorie ändern.

35. Etikettenerzeugungsgerät (3002) gemäß Anspruch 30 oder 33, wobei
die Zuweisungshistorienanzeigesignalerzeugungseinrichtung (S2235) oder die Erzeugungshistorienanzeigesignalerzeugungseinrichtung (S2235) das Zuweisungshistorienanzeigesignal oder das Erzeugungshistorienanzeigesignal zum Anzeigen von vielen im Wesentlichen bandförmigen Icons, Markierungen und Symbolen entsprechend der Zuweisungshistorie oder der Erzeugungshistorie erzeugt.

36. Etikettenerzeugungsgerät (3002) gemäß einem der Ansprüche 28 bis 35, wobei
die JOB-Annahmeeinrichtung (S2210) dazu konfiguriert ist, das Erzeugungsbetriebssignal von vielen Betriebsterminals (2005) annehmen zu können, die außerhalb des Etikettenerzeugungsgerätes (3002) vorgesehen sind; und
die Etikettenlängenanzeigesignalerzeugungseinrichtung (S2235) das Etikettenlängenanzeigesignal zum Anzeigen der Etikettenlängeninformationen des Erzeugungsbetriebssignals erzeugt, das durch die JOB-Annahmeeinrichtung (S2210) neu angenommen werden kann, und zwar an einer terminalseitigen Anzeigeeinrichtung (2005a), die bei den vielen Betriebsterminals (2005) vorgesehen ist.

37. Etikettenerzeugungsgerät (3002) gemäß einem der Ansprüche 28 bis 35, wobei
das Etikettenerzeugungsgerät (3002) des Weiteren eine Betriebseinrichtung (2052), die durch eine Bedienperson bedient werden kann, und eine geräteseitige Anzeigeeinrichtung (2053) aufweist, die eine vorbestimmte Anzeige für die Bedienperson ausführt,
wobei die JOB-Annahmeeinrichtung (S2210) das Erzeugungsbetriebssignal von der Betriebseinrichtung (2052) annimmt; und
die Etikettenlängenanzeigesignalerzeugungseinrichtung (S2235) das Etikettenlängensignal zum Anzeigen der Etikettenlängeninformationen des Erzeugungsbetriebssignals erzeugt, das durch die JOB-Annahmeeinrichtung (S2210) neu angenommen werden kann, und zwar an der geräteseitigen Anzeigeeinrichtung (2053).

## Revendications

1. Dispositif de production d'étiquettes à identificateur (1 ; 2002 ; 3002) comprenant :
un moyen de production d'étiquettes pouvant produire une étiquette RFID (T ; Tt), comportant au moins une partie d'alimentation (108 ; 2012) qui est adaptée de manière à délivrer une bande d'étiquettes à identificateur (109 ; 101) comportant une couche de support de réception d'impression (103 ; 101a' ; 101 a") et un élément de circuit RFID (To) comportant une partie de circuit IC (151) qui mémorise des informations et une antenne (152) destinée à assurer l'émission/réception d'informations, une partie de communication (LC ; 2014) qui est adaptée de manière à assurer l'émission/réception d'informations sans contact avec ledit élément de circuit RFID (To), et une partie d'impression (23 ; 2010) qui est adaptée de manière à mettre en oeuvre une impression désirée sur ladite couche de support de réception d'impression (103 ; 101a' ; 101a") ; et
un moyen de traitement d'utilisation de marge (S6, S10, S11, S12, S15, S20, S25, S105 ; S2301, S2308, S2314, S2336, S2346, S2506, S2524, S2406, S2414 ; S2235) qui exécute un traitement prédéterminé afin d'utiliser une zone de marge dans laquelle l'impression par ladite partie d'impression (23 ; 2010) n'est pas mise en oeuvre sur ladite couche de support de réception d'impression (103 ; 101a'; 101a") au moment de la production de ladite étiquette RFID (T ; Tt), **caractérisé en ce que** :
ladite partie d'alimentation (108) est adaptée de manière à délivrer une bande d'étiquettes à identificateur (109) comportant ladite couche de support de réception d'impression (103 ; 101a' ; 101a"), une couche adhésive de fixation (101c; 101b'; 101b") destinée à fixer ladite couche de support de réception d'impression (103 ; 101a' ; 101a") sur une cible de fixation, une couche de matériau de séparation (101d ; 101c' ; 101c") recouvrant ladite couche adhésive de fixation (101c ; 101b' ; 101b") et ledit élément de circuit RFID (To) ;
ledit moyen de traitement d'utilisation de marge comporte un moyen de commande (S6, S10, S11, S12, S15, S20, S25, S105) qui commande ladite partie d'impression (23) et ladite partie d'alimentation (108) de manière coordonnée de telle sorte que l'impression d'identificateur correspondant au contenu d'émission/réception par ladite partie de communication (LC) est mise en oeuvre sur une première zone d'impression (PE1) agencée à une position correspondant audit élément de circuit RFID (To) dans ladite couche de support de réception d'impression (103 ; 101a' ; 101a"), et une impression de motif prédéterminée est mise en oeuvre sur une deuxième zone d'impression (PE2) située sur un côté d'extrémité finale de bande autre que ladite première zone d'impression (PE1) sur ladite couche de support de réception d'impression (103 ; 101a' ; 101a") ; et
ledit dispositif de production d'étiquettes à identificateur (1) comprend en outre un premier moyen de coupe partielle (35) qui est adapté de manière à couper les couches autres que ladite couche de matériau de séparation (101d ; 101c' ; 101c") de ladite bande d'étiquettes à identificateur (109) entre ladite première zone d'impression (PE1) et ladite deuxième zone d'impression (PE2) de ladite bande d'étiquettes à identificateur (109).

2. Dispositif de production d'étiquettes à identificateur (1) selon la revendication 1, dans lequel
ledit moyen de commande (S6, S10, S11, S12, S15, S20, S25, S105) commande ladite partie d'impression (23) et ladite partie d'alimentation (108) de manière coordonnée de telle sorte que l'impression de motif prédéterminé est mise en oeuvre sur une troisième zone d'impression (PE3) située sur un côté opposé à ladite deuxième zone d'impression (PE2) autre que ladite première zone d'impression (PE1) sur ladite couche de support de réception d'impression (103 ; 101a' ; 101a").

3. Dispositif de production d'étiquettes à identificateur (1) selon la revendication 2, dans lequel
ledit moyen de commande (S6, S10, S11, S12, S15, S20, S25, S105) commande ladite partie d'impression (23) et ladite partie d'alimentation (108) de manière coordonnée de telle sorte que lesdits motifs d'impression différents l'un de l'autre sont imprimés sur ladite deuxième zone d'impression (PE2) et ladite troisième zone d'impression (PE3).

4. Dispositif de production d'étiquettes à identificateur (1) selon la revendication 2 ou 3, dans lequel
ledit dispositif de production d'étiquettes à identificateur (1) comprend en outre un second moyen de coupe partielle (35) qui coupe les couches autres que ladite couche de matériau de séparation (101d ; 101c'; 101c") de ladite bande d'étiquettes à identificateur (109) entre ladite première zone d'impression (PE1) et ladite troisième zone d'impression (PE3) de ladite bande d'étiquettes à identificateur (109).

5. Dispositif de production d'étiquettes à identificateur (1) selon l'une quelconque des revendications 1 à 4, dans lequel
ledit moyen de commande (S6, S10, S11, S12, S15, S20, S25, S105) commande ladite partie d'impression (23) et ladite partie d'alimentation (108) de manière coordonnée de telle sorte que les informations associées à l'étiquette se rapportant à la production de ladite étiquette RFID (T) sont imprimées sur ladite deuxième zone d'impression (PE2) ou ladite troisième zone d'impression (PE3) en tant que ladite impression de motif.

6. Dispositif de production d'étiquettes à identificateur (1) selon la revendication 5, dans lequel
ledit moyen de commande (S6, S10, S11, S12, S15, S20, S25, S105) commande ladite partie d'impression (23) et ladite partie d'alimentation (108) de manière coordonnée de telle sorte que des informations sur la date et l'heure de production lorsque l'étiquette RFID (T) est produite sont imprimées en tant que lesdites informations associées à l'étiquette.

7. Dispositif de production d'étiquettes à identificateur (1) selon la revendication 5, dans lequel
ledit moyen de commande (S6, S10, S11, S12, S15, S20, S25, S105) commande ladite partie d'impression (23) et ladite partie d'alimentation (108) de manière coordonnée de telle sorte que les informations sur la durée d'utilisation à notifier à un utilisateur lors de l'utilisation de l'étiquette RFID (T) sont imprimées en tant que lesdites informations associées à l'étiquette.

8. Dispositif de production d'étiquettes à identificateur (1) selon la revendication 7, dans lequel
ledit moyen de commande (S6, S10, S11, S12, S15, S20, S25, S105) commande ladite partie d'impression (23) et ladite partie d'alimentation (108) de manière coordonnée de telle sorte que des informations sur les précautions destinées aux utilisateurs de l'étiquette RFID (T) sont imprimées en tant que lesdites informations sur la durée d'utilisation.

9. Dispositif de production d'étiquettes à identificateur (1) selon l'une quelconque des revendications 5 à 8, dans lequel
ledit dispositif de production d'étiquettes à identificateur (1) comprend en outre un moyen d'entrée de signal d'activation (S105) qui introduit un signal d'activation d'un opérateur,
ledit moyen de commande (S6, S10, S11, S12, S 15, S20, S25, S105) comporte un moyen de sélection de motif (S105) qui définit de manière variable le contenu de ladite impression de motif en fonction de ladite entrée de signal d'activation avec ledit moyen d'entrée de signal d'activation (S105).

10. Dispositif de production d'étiquettes à identificateur (1) selon la revendication 9, dans lequel
ledit moyen d'entrée de signal d'activation (S105) introduit un signal de sélection à partir d'une pluralité desdites informations associées à l'étiquette défini au préalable en tant que ledit signal d'activation ; et
ledit moyen de sélection de motif (S105) définit le contenu de ladite impression de motif en fonction de ladite entrée de signal de sélection avec ledit moyen d'entrée de signal d'activation (S105).

11. Dispositif de production d'étiquettes à identificateur (1) selon la revendication 9 ou 10, dans lequel
ledit moyen de sélection de motif (S105) réalise la sélection en limitant le contenu de ladite impression de motif de telle sorte qu'elle est contenue dans une plage de ladite deuxième zone d'impression (PE2).

12. Dispositif de production d'étiquettes à identificateur (1) selon l'une quelconque des revendications 1 à 11, dans lequel
ledit moyen de commande (S6, S10, S11, S12, S15, S20, S25, S105) commande ladite partie d'impression (23) et ladite partie d'alimentation (108) de manière coordonnée de telle sorte que ledit motif d'impression est imprimé de manière répétitive, une pluralité de fois sur ladite deuxième zone d'impression (PE2) ou ladite troisième zone d'impression (PE3).

13. Dispositif de production d'étiquettes à identificateur (1) selon l'une quelconque des revendications 1 à 12, dans lequel
ledit moyen de commande (S6, S10, S11, S 12, S 15, S20, S25, S105) commande ladite partie d'impression (23) et ladite partie d'alimentation (108) de manière coordonnée de telle sorte qu'une décoration comportant au moins un ajout ou changement de ligne, de couleur, de forme, d'icône, de repère, et de symbole prédéterminé sur ledit motif d'impression ou sa zone périphérique est mise en oeuvre sur ladite deuxième zone d'impression (PE2) ou ladite troisième zone d'impression (PE3).

14. Dispositif de production d'étiquettes à identificateur (1) selon l'une quelconque des revendications 1 à 13, dans lequel
ledit dispositif de production d'étiquettes à identificateur (1) comprend en outre un moyen de détection (127) qui détecte un élément d'identification (PM) destiné à assurer une détection à une position correspondant à ladite première zone d'impression (PE1) sur ladite bande d'étiquettes à identificateur (109).

15. Dispositif de production d'étiquettes à identificateur (1) selon l'une quelconque des revendications 1 à 14, dans lequel
ledit dispositif de production d'étiquettes à identificateur (1) comprend en outre un moyen de liaison (27) qui assure la liaison d'une couche de base (101b) permettant d'assurer le montage dudit élément de circuit RFID (To) sur ladite couche de support de réception d'impression (103) par l'intermédiaire d'une couche adhésive de liaison (101a).

16. Dispositif de production d'étiquettes à identificateur (1 ; 2002 ; 3002) comprenant :
un moyen de production d'étiquettes permettant de produire une étiquette RFID (T ; Tt), comportant au moins une partie d'alimentation (108 ; 2012) qui est adaptée de manière à délivrer une bande d'étiquette à identificateur (109 ; 101) comprenant une couche de support de réception d'impression (103 ; 101a' ; 101a") et un élément de circuit RFID (To) comportant une partie de circuit IC (151) qui mémorise des informations et une antienne (152) destinée à assurer l'émission/réception d'informations, une partie de communication (LC ; 2014) qui est adaptée de manière à mettre en oeuvre l'émission/réception des informations sans contact avec ledit élément de circuit RFID (To), et une partie d'impression (23 ; 2010) qui est adaptée de manière à mettre en oeuvre une impression désirée sur ladite couche de support de réception d'impression (103 ; 101a' ; 101a") ; et
un moyen de traitement d'utilisation de marge (S6, S10, S11, S 12, S 15, S20, S25, S105 ; S2301, S2308, S2314, S2336, S2346, S2506, S2524, S2406, S2414 ; S2235) qui exécute un traitement prédéterminé afin d'utiliser une zone de marge dans laquelle l'impression par ladite partie d'impression (23 ; 2010) n'est pas mise en oeuvre sur ladite couche de support de réception d'impression (103 ; 101a'; 101a") au moment de la production de ladite étiquette RFID (T ; Tt), **caractérisé en ce que** :
ladite partie d'alimentation (2012) est adaptée de manière à délivrer une bande d'identificateur (101) contenue sur ladite bande d'étiquettes à identificateur qui comporte ledit élément de circuit RFID (To) ;
ladite partie d'impression (2010) est adaptée de manière à mettre en oeuvre une impression désirée sur ladite couche de support de réception d'impression agencée au niveau de ladite bande d'identificateur (101) ou sur une bande de réception d'impression (103) en tant que ladite couche de support de réception d'impression à lier à ladite bande d'identificateur (101) ;
ledit moyen de production d'étiquettes peut produire à la fois une étiquette RFID (Tt) comportant ledit élément de circuit RFID (To) et une étiquette normale (Tu) ne comportant pas ledit élément de circuit RFID (To) ; et
ledit dispositif de production d'étiquettes à identificateur (2002) comprend en outre un moyen d'acceptation de tâche (S2210) qui accepte un signal d'activation de production afin de produire ladite étiquette RFID (Tt) ou ladite étiquette normale (Tu) ; et un moyen de mémorisation de tâche (S2220) qui mémorise séquentiellement des informations d'identification de tâche, des informations de longueur d'étiquette et un signal d'identification d'informations d'étiquette RFID correspondant audit signal d'activation de production reçu par ledit moyen d'acceptation de tâche (S2210) ;
ledit moyen de traitement d'utilisation de marge comporte un premier moyen d'affectation de tâche (S2301, S2308, S2314, S2336, S2346, S2506, S2524, S2406, S2414) qui affecte de manière séquentielle lesdites informations d'identification de tâche, lesdites informations de longueur d'étiquette et le signal d'identification d'informations d'identificateur RFID mémorisé par ledit moyen de mémorisation de tâche (S2220) suivant un ordre prédéterminé ; et
ledit dispositif de production d'étiquettes à identificateur (2002) comprend en outre un premier moyen de sortie de signal d'instruction (S2500) qui produit et délivre un premier signal d'instruction destiné à donner l'instruction de production d'étiquette audit moyen de production d'étiquettes en fonction de l'état affecté par ledit premier moyen d'affectation de tâche (S2301, S2308, S2314, S2336, S2346, S2506, S2524, S2406, S2414).

17. Dispositif de production d'étiquettes à identificateur (2002) selon la revendication 16, dans lequel
ledit premier moyen d'affectation de tâche (S2301, S2308, S2314, S2336, S2346, S2506, S2524, S2406, S2414) affecte lesdites informations d'identification de tâche, lesdites informations de longueur d'étiquette et le signal d'identification d'informations d'identificateur RFID se rapportant audit signal d'activation de production comprenant lesdites informations d'identificateur RFID au niveau des positions affectées correspondant aux informations d'agencement dudit élément de circuit RFID (To) sur ladite bande d'identificateur (101).

18. Dispositif de production d'étiquettes à identificateur (2002) selon la revendication 17, dans lequel
ledit premier moyen d'affectation de tâche (S2301, S2308, S2314, S2336, S2346, S2506, S2524, S2406, S2414) affecte lesdites informations d'identification de tâche, lesdites informations de longueur d'étiquette et le signal d'identification d'informations d'identificateur RFID se rapportant audit signal d'activation de production ne comprenant pas lesdites informations d'identificateur RFID aux positions affectées ne recouvrant pas les positions affectées correspondant aux informations d'agencement dudit élément de circuit RFID (To) sur ladite bande d'identificateur (101).

19. Dispositif de production d'étiquettes à identificateur (2002) selon l'une quelconque des revendications 16 à 18, dans lequel
ledit dispositif de production d'étiquettes à identificateur (2002) comprend en outre un moyen de détermination (S2306, S2312, S2334, S2344, S2504, S2522, S2404, S2412) qui détermine si l'état affecté par ledit premier moyen d'affectation de tâche (S2301, S2308, S2314, S2336, S2346, S2506, S2524, S2406, S2414) satisfait une condition prédéterminée ou non sur la base des informations d'agencement dudit élément de circuit RFID (To) sur ladite bande d'identificateur (101),
ledit premier moyen de sortie de signal d'instruction (S2500) délivre ledit premier signal d'instruction en fonction d'un résultat de détermination par ledit moyen de détermination (S2306, S2312, S2334, S2344, S2504, S2522, S2404, S2412).

20. Dispositif de production d'étiquettes à identificateur (2002) selon la revendication 19, dans lequel
ledit premier moyen d'affectation de tâche (S2301, S2308, S2314, S2336, S2346, S2506, S2524, S2406, S2414) met en oeuvre ladite affectation par l'unité d'une longueur prédéterminée sur la base des informations d'agencement dudit élément de circuit RFID (To) sur ladite bande d'identificateur (101).

21. Dispositif de production d'étiquettes à identificateur (2002) selon la revendication 19 ou 20, dans lequel
ledit dispositif de production d'étiquettes à identificateur (2002) comprend en outre un moyen de sortie de signal d'instruction forcée (S2500) qui produit et délivre un signal d'instruction destiné à donner l'instruction de production d'étiquette audit moyen de production d'étiquettes indépendamment du résultat de détermination sur ledit moyen de détermination (S2306, S2312, S2334, S2344, S2504, S2522, S2404, S2412).

22. Dispositif de production d'étiquettes à identificateur (2002) selon l'une quelconque des revendications 16 à 21, dans lequel
ledit dispositif de production d'étiquettes à identificateur (2002) comprend en outre un moyen de sortie d'informations d'affectation (S2235) qui délivre des informations d'affectation par ledit premier moyen d'affectation de tâche (S2301, S2308, S2314, S2336, S2346, S2506, S2524, S2406, S2414).

23. Dispositif de production d'étiquettes à identificateur (2002) selon l'une quelconque des revendications 16 à 22, dans lequel
ledit dispositif de production d'étiquettes à identificateur (2002) comprend en outre un moyen de sortie d'informations de longueur d'étiquette (S2235) qui délivre des informations de longueur de ladite étiquette RFID (Tt) ou ladite étiquette normale (Tu) qui peut être produite par ledit moyen de production d'étiquettes en fonction des informations d'affectation par ledit premier moyen d'affectation de tâche (S2301, S2308, S2314, S2336, S2346, S2506, S2524, S2406, S2414).

24. Dispositif de production d'étiquettes à identificateur (2002) selon l'une quelconque des revendications 16 à 23, dans lequel
ledit dispositif de production d'étiquettes à identificateur (2002) comprend en outre un moyen de sortie de notification de fin (S2287) qui délivre des informations de notification de fin de production de manière correspondante lorsque la production d'étiquette par ledit moyen de production d'étiquettes est achevée sur la base du signal d'instruction à partir dudit premier moyen de sortie de signal d'instruction (S2500) ou dudit moyen de sortie de signal d'instruction forcée (S2500).

25. Dispositif de production d'étiquettes à identificateur (2002) selon l'une quelconque des revendications 16 à 24, dans lequel
ledit moyen de mémorisation de tâche (S2220) est un moyen formant mémoire non volatile.

26. Dispositif de production d'étiquettes à identificateur (2002) selon l'une quelconque des revendications 16 à 25, dans lequel
ledit moyen d'acceptation de tâche (S2210) est configuré de manière à pouvoir accepter ledit signal d'activation de production à partir d'une pluralité de bornes d'activation (2005) agencées à l'extérieur dudit dispositif de production d'étiquettes à identificateur (2002).

27. Dispositif de production d'étiquettes à identificateur (2002) selon l'une quelconque des revendications 16 à 25, dans lequel
ledit dispositif de production d'étiquettes à identificateur (2002) comprend en outre un moyen d'activation (2052) qui peut être commandé par un opérateur,
ledit moyen d'acceptation de tâche (S2210) accepte ledit signal d'activation de production à partir dudit moyen d'activation (2052).

28. Dispositif de production d'étiquettes à identificateur (1 ; 2002 ; 3002) comprenant :
un moyen de production d'étiquettes permettant de produire une étiquette RFID (T ; Tt), comportant au moins une partie d'alimentation (108 ; 2012) qui est adaptée de manière à délivrer une bande d'étiquettes à identificateur (109 ; 101) comprenant une couche de support de réception d'impression (103 ; 101a' ; 101a") et un élément de circuit RFID (To) comportant une partie de circuit IC (151) qui mémorise des informations et une antenne (152) destinée à assurer l'émission/réception d'informations, une partie de communication (LC ; 2014) qui est adaptée de manière à mettre en oeuvre l'émission/réception des informations sans contact avec ledit élément de circuit RFID (To), et une partie d'impression (23 ; 2010) qui est adaptée de manière à mettre en oeuvre une impression désirée sur ladite couche de support de réception d'impression (103 ; 101a' ; 101a") ; et
un moyen de traitement d'utilisation de marge (S6, S10, S11, S 12, S 15, S20, S25, S105 ; S2301, S2308, S2314, S2336, S2346, S2506, S2524, S2406, S2414 ; S2235) qui exécute un traitement prédéterminé afin d'utiliser une zone de marge dans laquelle l'impression par ladite partie d'impression (23 ; 2010) n'est pas mise en oeuvre sur ladite couche de support de réception d'impression (103 ; 101a'; 101a") au moment de la production de ladite étiquette RFID (T ; Tt), **caractérisé en ce que** :
ladite partie d'alimentation (2012) est adaptée de manière à délivrer une bande d'identificateur (101) contenue dans ladite bande d'étiquettes à identificateur qui comporte ledit élément de circuit RFID (To) ;
ladite partie d'impression (2010) est adaptée de manière à mettre en oeuvre une impression désirée sur ladite couche de support de réception d'impression formée au niveau de ladite bande d'identificateur (101) ou une bande de réception d'impression (103) en tant que ladite couche de support de réception d'impression destinée à être liée à ladite bande d'identificateur (101) ;
ledit moyen de production d'étiquettes peut produire à la fois une étiquette RFID (Tt) comportant ledit élément de circuit RFID (To) et une étiquette normale (Tu) ne comportant pas ledit élément de circuit RFID (To) ;
le dispositif de production d'étiquettes à identificateur (3002) comprend en outre un moyen d'acceptation de tâche (S2210) qui accepte un signal d'activation de production de ladite étiquette RFID (Tt) ou de ladite étiquette normale (Tu) ; et
ledit moyen de traitement d'utilisation de marge comporte un moyen de production de signal d'affichage de longueur d'étiquette (S2235) qui produit un signal d'affichage de longueur d'étiquette destiné à afficher des informations de longueur d'étiquette du signal d'activation de production qui peut être de nouveau accepté par ledit moyen d'acceptation de tâche (S2210).

29. Dispositif de production d'étiquettes à identificateur (3002) selon la revendication 28, dans lequel
ledit dispositif de production d'étiquettes à identificateur (3002) comprend en outre un second moyen d'affectation de tâche (S2301, S2308, S2314, S2336, S2346, S2506, S2524, S2406, S2414) qui affecte, de manière séquentielle, lesdits informations de longueur d'étiquette, informations d'identification de tâche et signal d'identification d'informations d'identificateur RFID correspondant audit signal d'activation de production accepté par ledit moyen d'acceptation de tâche (S2210) suivant un ordre prédéterminé ; et un deuxième moyen de sortie de signal d'instruction (S2500) qui produit et délivre un second signal destiné à donner l'instruction de production d'étiquette audit moyen de production d'étiquettes en fonction de l'état affecté par le second moyen d'affectation de tâche (S2301, S2308, S2314, S2336, S2346, S2506, S2524, S2406, S2414),
ledit moyen de production de signal d'affichage de longueur d'étiquette (S2235) produit ledit signal d'affichage de longueur d'étiquette en fonction de l'état affecté dudit second moyen d'affectation de tâche (S2301, S2308, S2314, S2336, S2346, S2506, S2524, S2406, S2414).

30. Dispositif de production d'étiquettes à identificateur (3002) selon la revendication 29, dans lequel
ledit dispositif de production d'étiquettes à identificateur (3002) comprend en outre un moyen de production de signal d'affichage d'historique d'affectation (S2235) qui produit un signal d'affichage d'historique d'affectation afin d'afficher des informations d'historique d'affectation par ledit second moyen d'affectation de tâche (S2301, S2308, S2314, S2336, S2346, S2506, S2524, S2406, S2414).

31. Dispositif de production d'étiquettes à identificateur (3002) selon la revendication 29 ou 30, dans lequel
ledit dispositif de production d'étiquettes à identificateur (3002) comprend en outre un moyen de sortie de notification de fin (S2287) qui délivre une notification de fin de production de manière correspondante lorsque la production d'étiquette par ledit moyen de production d'étiquettes est achevée sur la base dudit second signal d'instruction à partir dudit deuxième moyen de sortie de signal d'instruction (S2500).

32. Dispositif de production d'étiquettes à identificateur (3002) selon la revendication 28, dans lequel
ledit dispositif de production d'étiquettes à identificateur (3002) comprend en outre un troisième moyen de sortie de signal d'instruction (S2500) qui produit et délivre un troisième signal d'instruction afin de donner l'instruction de production d'étiquette audit moyen de production d'étiquettes de manière correspondante lorsque ledit signal d'activation de production est accepté par ledit moyen d'acceptation de tâche (S2210),
ledit moyen de production de signal d'affichage de longueur d'étiquette (S2235) produit ledit signal d'affichage de longueur d'étiquette en fonction dudit signal d'activation de production accepté par ledit moyen d'acceptation de tâche (S2210) et ledit troisième signal d'instruction.

33. Dispositif de production d'étiquettes à identificateur (3002) selon la revendication 32, dans lequel
ledit dispositif de production d'étiquettes à identificateur (3002) comprend en outre un moyen de production de signal d'affichage d'historique de production (S2235) qui produit un signal d'affichage d'historique de production destiné à afficher des informations d'historique de production par ledit moyen de production d'étiquettes.

34. Dispositif de production d'étiquettes à identificateur (3002) selon la revendication 30 ou 33, dans lequel
ledit moyen de production de signal d'affichage d'historique d'affectation (S2235) ou ledit moyen de production de signal d'affichage d'historique de production (S2235) produit ledit signal d'affichage d'historique d'affectation ou ledit signal d'affichage d'historique de production afin d'afficher des icônes, repères, et symboles sensiblement à l'état de bande dont la longueur varie en fonction de la progression dudit historique d'affectation ou dudit historique de production.

35. Dispositif de production d'étiquettes à identificateur (3002) selon la revendication 30 ou 33, dans lequel
ledit moyen de production de signal d'affichage d'historique d'affectation (S2235) ou ledit moyen de production de signal d'affichage d'historique de production (S2235) produit ledit signal d'affichage d'historique d'affectation ou ledit signal d'affichage d'historique de production afin d'afficher une pluralité d'icônes, repères, et symboles sensiblement à l'état de bande correspondant respectivement audit historique d'affectation ou audit historique de production.

36. Dispositif de production d'étiquettes à identificateur (3002) selon l'une quelconque des revendications 28 à 35, dans lequel
ledit moyen d'acceptation de tâche (S2210) est configuré de manière à pouvoir accepter ledit signal d'activation de production à partir d'une pluralité de bornes d'activation (2005) agencées à l'extérieur dudit dispositif de production d'étiquettes à identificateur (3002) ; et
ledit moyen de production de signal d'affichage de longueur d'étiquette (S2235) produit ledit signal d'affichage de longueur d'étiquette afin d'afficher les informations de longueur d'étiquette du signal d'activation de production qui peut être de nouveau accepté par ledit moyen d'acceptation de tâche (S2210) sur un moyen d'affichage du côté borne (2005a) agencé au niveau de ladite pluralité de bornes d'activation (2005).

37. Dispositif de production d'étiquettes à identificateur (3002) selon l'une quelconque des revendications 28 à 35, dans lequel
ledit dispositif de production d'étiquettes à identificateur (3002) comprend en outre un moyen d'activation (2052) pouvant être activé par un opérateur, et un moyen d'affichage du côté dispositif (2053) qui exécute un affichage prédéterminé à l'opérateur,
ledit moyen d'acceptation de tâche (S2210) accepte ledit signal d'activation de production à partir dudit moyen d'activation (2052) ; et
ledit moyen de production de signal d'affichage de longueur d'étiquette (S2235) produit ledit signal d'affichage de longueur d'étiquette afin d'afficher les informations de longueur d'étiquette du signal d'activation de production qui peut être de nouveau accepté par ledit moyen d'acceptation de tâche (S2210) sur ledit moyen d'affichage du côté dispositif (2053).
